# EUROPEAN PATENT SPECIFICATION

(11) **EP 4 482 074 B1**
(45) Date of publication and mention of the grant of the patent: **28.10.2026**
(21) Application number: 24197873.3
(22) Date of filing: 14.02.2020
(51) Int. Cl.: H04L 5/00

(54) **UPLINK TRANSMISSION WITH UPLINK GRANT PROCESSING PRIORITIZATION**
UPLINK-ÜBERTRAGUNG MIT PRIORISIERUNG DER UPLINK-BERECHTIGUNGSVERARBEITUNG
TRANSMISSION EN LIAISON MONTANTE AVEC PRIORISATION DE TRAITEMENT D'AUTORISATION DE LIAISON MONTANTE

(30) Priority: 14.02.2019 US 201962805894 P
(43) Date of publication of application: 25.12.2024
(62) Document number(s) of the earlier application(s) in accordance with Art. 76 EPC: 20712122.9 / 3 925 154
(73) Proprietor: TOYOTA JIDOSHA KABUSHIKI KAISHA, Toyota-shi, Aichi-ken 471-8571 (JP)
(72) Inventor: ZHOU, Hua, Reston, 20190 (US); DINAN, Esmael Hejazi, Reston, 20190 (US); BABAEI, Alireza, Reston, 20190 (US); CIRIK, Ali Cagatay, Reston, 20190 (US); JEON, Hyoungsuk, Reston, 20190 (US); PARK, Kyungmin, Reston, 20190 (US); XU, Kai, Reston, 20190 (US)
(74) Representative: Simmons & Simmons

(56) References cited:
- VIVO: "Summary#3 of UL inter UE Tx prioritization/multiplexing", vol. RAN WG1, no. Taipei; 20190121 - 20190125, 25 January 2019 (2019-01-25), XP051601370, Retrieved from the Internet <URL:http://www.3gpp.org/ftp/tsg%5Fran/WG1%5FRL1/TSGR1%5FAH/NR%5FAH%5F1901/Docs/R1%2D1901457%2Ezip> [retrieved on 20190125]
- NTT DOCOMO ET AL: "Handling UL multiplexing of transmissions with different reliability requirements", vol. RAN WG1, no. Athens, Greece; 20180226 - 20180302, 17 February 2018 (2018-02-17), XP051398003, Retrieved from the Internet <URL:http://www.3gpp.org/ftp/tsg%5Fran/WG1%5FRL1/TSGR1%5F92/Docs/> [retrieved on 20180217]
- VIVO: "Summary of UL inter UE Tx prioritization/multiplexing", vol. RAN WG1, no. Chengdu, China; 20181008 - 20181012, 10 October 2018 (2018-10-10), XP051519228, Retrieved from the Internet <URL:http://www.3gpp.org/ftp/tsg%5Fran/WG1%5FRL1/TSGR1%5F94b/Docs/R1%2D1811905%2Ezip> [retrieved on 20181010]

## Description

### TECHNICAL FIELD

This application relates to the field of wireless communication systems such as 4G communication systems (e.g., LTE, LTE-Advanced), 5G communication systems, other communication systems compatible with 4G and/or 5G communication systems, and related methods, systems and apparatuses.

### BACKGROUND

With regard to the relevant prior art, reference is made to the 3GPP publication Vivo, "Summary#3 of UL inter UE Tx prioritization/multiplexing", in: 3GPP draft R1-1901457, 3GPP TSG RAN WG1 Meeting Ad-Hoc Meeting 1901, Taipei, 21st - 25th January, 2019*.* Further reference is made to NTT Docomo Inc., "Handling UL multiplexing of transmissions with different reliability requirements", in: 3GPP draft R1-1802496, 3GPP TSG RAN WG1 Meeting #92, Athens, Greece, February 26th - March 2nd, 2018*;* and Vivo, "Summary of UL inter UE Tx prioritization/multiplexing", in 3GPP draft R1-1811905, 3GPP TSG RAN WG1 Meeting #94bis, Chengdu, China, Oct. 8-12, 2018.

### SUMMARY

The object of the invention is achieved by the subject-matter of the independent claims. The dependent claims describe advantageous embodiments. The scope of protection of the invention is limited by the appended claims.

### BRIEF DESCRIPTION OF THE SEVERAL VIEWS OF THE DRAWINGS

Examples of several of the various embodiments of the present disclosure are described herein with reference to the drawings.
FIG. 1 is a diagram of an example RAN architecture as per an aspect of an embodiment of the present disclosure.
FIG. 2A is a diagram of an example user plane protocol stack as per an aspect of an embodiment of the present disclosure.
FIG.2B is a diagram of an example control plane protocol stack as per an aspect of an embodiment of the present disclosure.
FIG. 3 is a diagram of an example wireless device and two base stations as per an aspect of an embodiment of the present disclosure.
FIG. 4A, FIG. 4B, FIG. 4C and FIG. 4D are example diagrams for uplink and downlink signal transmission as per an aspect of an embodiment of the present disclosure.
FIG. 5A is a diagram of an example uplink channel mapping and example uplink physical signals as per an aspect of an embodiment of the present disclosure.
FIG. 5B is a diagram of an example downlink channel mapping and example downlink physical signals as per an aspect of an embodiment of the present disclosure.
FIG. 6 is a diagram depicting an example transmission time or reception time for a carrier as per an aspect of an embodiment of the present disclosure.
FIG. 7A and FIG. 7B are diagrams depicting example sets of OFDM subcarriers as per an aspect of an embodiment of the present disclosure.
FIG. 8 is a diagram depicting example OFDM radio resources as per an aspect of an embodiment of the present disclosure.
FIG. 9A is a diagram depicting an example CSI-RS and/or SS block transmission in a multi-beam system.
FIG. 9B is a diagram depicting an example downlink beam management procedure as per an aspect of an embodiment of the present disclosure.
FIG. 10 is an example diagram of configured BWPs as per an aspect of an embodiment of the present disclosure.
FIG. 11A, and FIG. 11B are diagrams of an example multi connectivity as per an aspect of an embodiment of the present disclosure.
FIG. 12 is a diagram of an example random access procedure as per an aspect of an embodiment of the present disclosure.
FIG. 13 is a structure of example MAC entities as per an aspect of an embodiment of the present disclosure.
FIG. 14 is a diagram of an example RAN architecture as per an aspect of an embodiment of the present disclosure.
FIG. 15 is a diagram of example RRC states as per an aspect of an embodiment of the present disclosure.
FIG. 16A, FIG. 16B and FIG. 16C are examples of MAC subheaders as per an aspect of an embodiment of the present disclosure.
FIG. 17A and FIG. 17B are examples of MAC PDUs as per an aspect of an embodiment of the present disclosure.
FIG. 18 is an example of LCIDs for DL-SCH as per an aspect of an embodiment of the present disclosure.
FIG. 19 is an example of LCIDs for UL-SCH as per an aspect of an embodiment of the present disclosure.
FIG. 20A is an example of an SCell Activation/Deactivation MAC CE of one octet as per an aspect of an embodiment of the present disclosure.
FIG. 20B is an example of an SCell Activation/Deactivation MAC CE of four octets as per an aspect of an embodiment of the present disclosure.
FIG. 21A is an example of an SCell hibernation MAC CE of one octet as per an aspect of an embodiment of the present disclosure.
FIG. 21B is an example of an SCell hibernation MAC CE of four octets as per an aspect of an embodiment of the present disclosure.
FIG. 21C is an example of MAC control elements for an SCell state transitions as per an aspect of an embodiment of the present disclosure.
FIG. 22 is an example of DCI formats as per an aspect of an embodiment of the present disclosure.
FIG. 23 is an example of BWP management on an SCell as per an aspect of an embodiment of the present disclosure.
FIG. 24 is an example DRX operation as per an aspect of an embodiment of the present disclosure.
FIG. 25 is an example DRX operation as per an aspect of an embodiment of the present disclosure.
FIG. 26 is an example HARQ operation as per an aspect of an embodiment of the present disclosure.
FIG. 27 is an example HARQ operation as per an aspect of an embodiment of the present disclosure.
FIG. 28 is an example uplink pre-emption mechanism as per an aspect of an embodiment of the present disclosure.
FIG. 29 is an example uplink pre-emption mechanism as per an aspect of an embodiment of the present disclosure.
FIG. 30 is an example uplink pre-emption mechanism as per an aspect of an embodiment of the present disclosure.
FIG. 31 is an example improved HARQ operation when uplink pre-emption is supported as per an aspect of an embodiment of the present disclosure.
FIG. 32 is an example improved HARQ operation when uplink pre-emption is supported as per an aspect of an embodiment of the present disclosure.
FIG. 33 is an example improved HARQ operation when uplink pre-emption is supported as per an aspect of an embodiment of the present disclosure.
FIG. 34 is an example improved HARQ operation when uplink pre-emption is supported as per an aspect of an embodiment of the present disclosure.
FIG. 35 is an example improved BWP operation when uplink pre-emption is supported as per an aspect of an embodiment of the present disclosure.
FIG. 36 is an example improved BWP operation when uplink pre-emption is supported as per an aspect of an embodiment of the present disclosure.
FIG. 37 is an example improved DRX operation when uplink pre-emption is supported as per an aspect of an embodiment of the present disclosure.
FIG. 38 is an example improved HARQ processing when out-of-order HARQ is supported as per an aspect of an embodiment of the present disclosure.
FIG. 39 is an example improved HARQ processing when out-of-order HARQ is supported as per an aspect of an embodiment of the present disclosure.
FIG. 40 is an example of out-of-order uplink grant processing as per an aspect of an embodiment of the present disclosure.
FIG. 41 is an example flowchart of out-of-order uplink grant processing as per an aspect of an embodiment of the present disclosure.

### DETAILED DESCRIPTION OF EMBODIMENTS

Example embodiments of the present disclosure enable uplink grant processing prioritization of a wireless device and/or a base station. Embodiments of the technology disclosed herein may be employed in the technical field of multicarrier communication systems. More particularly, the embodiments of the technology disclosed herein may relate to a wireless device and/or a base station in a multicarrier communication system.

The following Acronyms are used throughout the present disclosure:
- 3GPP: 3rd Generation Partnership Project
- 5GC: 5G Core Network
- ACK: Acknowledgement
- AMF: Access and Mobility Management Function
- ARQ: Automatic Repeat Request
- AS: Access Stratum
- ASIC: Application-Specific Integrated Circuit
- BA: Bandwidth Adaptation
- BCCH: Broadcast Control Channel
- BCH: Broadcast Channel
- BPSK: Binary Phase Shift Keying
- BWP: Bandwidth Part
- CA: Carrier Aggregation
- CC: Component Carrier
- CCCH: Common Control CHannel
- CDMA: Code Division Multiple Access
- CN: Core Network
- CP: Cyclic Prefix
- CP-OFDM: Cyclic Prefix- Orthogonal Frequency Division Multiplex
- C-RNTI: Cell-Radio Network Temporary Identifier
- CS: Configured Scheduling
- CSI: Channel State Information
- CSI-RS: Channel State Information-Reference Signal
- CQI: Channel Quality Indicator
- CRC: Cyclic Redundancy Check
- CSS: Common Search Space
- CU: Central Unit
- DAI: Downlink Assignment Index
- DC: Dual Connectivity
- DCCH: Dedicated Control Channel
- DCI: Downlink Control Information
- DL: Downlink
- DL-SCH: Downlink Shared CHannel
- DM-RS: DeModulation Reference Signal
- DRB: Data Radio Bearer
- DRX: Discontinuous Reception
- DTCH: Dedicated Traffic Channel
- DU: Distributed Unit
- EPC: Evolved Packet Core
- E-UTRA: Evolved UMTS Terrestrial Radio Access
- E-UTRAN: Evolved-Universal Terrestrial Radio Access Network
- FDD: Frequency Division Duplex
- FPGA: Field Programmable Gate Arrays
- F1-C: F1-Control plane
- F1-U: F1-User plane
- gNB: next generation Node B
- HARQ: Hybrid Automatic Repeat reQuest
- HDL: Hardware Description Languages
- IE: Information Element
- IP: Internet Protocol
- LCID: Logical Channel Identifier
- LTE: Long Term Evolution
- MAC: Media Access Control
- MCG: Master Cell Group
- MCS: Modulation and Coding Scheme
- MeNB: Master evolved Node B
- MIB: Master Information Block
- MME: Mobility Management Entity
- MN: Master Node
- NACK: Negative Acknowledgement
- NAS: Non-Access Stratum
- NG CP: Next Generation Control Plane
- NGC: Next Generation Core
- NG-C: NG-Control plane
- ng-eNB: next generation evolved Node B
- NG-U: NG-User plane
- NR: New Radio
- NR MAC: New Radio MAC
- NR PDCP: New Radio PDCP
- NR PHY: New Radio PHYsical
- NR RLC: New Radio RLC
- NR RRC: New Radio RRC
- NSSAI: Network Slice Selection Assistance Information
- O&M: Operation and Maintenance
- OFDM: orthogonal Frequency Division Multiplexing
- PBCH: Physical Broadcast CHannel
- PCC: Primary Component Carrier
- PCCH: Paging Control CHannel
- PCell: Primary Cell
- PCH: Paging CHannel
- PDCCH: Physical Downlink Control CHannel
- PDCP: Packet Data Convergence Protocol
- PDSCH: Physical Downlink Shared CHannel
- PDU: Protocol Data Unit
- PHICH: Physical HARQ Indicator CHannel
- PHY: PHYsical
- PLMN: Public Land Mobile Network
- PMI: Precoding Matrix Indicator
- PRACH: Physical Random Access CHannel
- PRB: Physical Resource Block
- PSCell: Primary Secondary Cell
- PSS: Primary Synchronization Signal
- pTAG: primary Timing Advance Group
- PT-RS: Phase Tracking Reference Signal
- PUCCH: Physical Uplink Control CHannel
- PUSCH: Physical Uplink Shared CHannel
- QAM: Quadrature Amplitude Modulation
- QFI: Quality of Service Indicator
- QoS: Quality of Service
- QPSK: Quadrature Phase Shift Keying
- RA: Random Access
- RACH: Random Access CHannel
- RAN: Radio Access Network
- RAT: Radio Access Technology
- RA-RNTI: Random Access-Radio Network Temporary Identifier
- RB: Resource Blocks
- RBG: Resource Block Groups
- RI: Rank indicator
- RLC: Radio Link Control
- RLM: Radio Link Monitoring
- RNTI: Radio Network Temporary Identifier
- RRC: Radio Resource Control
- RRM: Radio Resource Management
- RS: Reference Signal
- RSRP: Reference Signal Received Power
- SCC: Secondary Component Carrier
- SCell: Secondary Cell
- SCG: Secondary Cell Group
- SC-FDMA: Single Carrier-Frequency Division Multiple Access
- SDAP: Service Data Adaptation Protocol
- SDU: Service Data Unit
- SeNB: Secondary evolved Node B
- SFN: System Frame Number
- S-GW: Serving GateWay
- SI: System Information
- SIB: System Information Block
- SMF: Session Management Function
- SN: Secondary Node
- SpCell: Special Cell
- SRB: Signaling Radio Bearer
- SRS: Sounding Reference Signal
- SS: Synchronization Signal
- SSS: Secondary Synchronization Signal
- sTAG: secondary Timing Advance Group
- TA: Timing Advance
- TAG: Timing Advance Group
- TAI: Tracking Area Identifier
- TAT: Time Alignment Timer
- TB: Transport Block
- TCI: Transmission Configuration Indication
- TC-RNTI: Temporary Cell-Radio Network Temporary Identifier
- TDD: Time Division Duplex
- TDMA: Time Division Multiple Access
- TRP: Transmission Reception Point
- TTI: Transmission Time Interval
- UCI: Uplink Control Information
- UE: User Equipment
- UL: Uplink
- UL-SCH: Uplink Shared CHannel
- UPF: User Plane Function
- UPGW: User Plane Gateway
- VHDL: VHSIC Hardware Description Language
- Xn-C: Xn-Control plane
- Xn-U: Xn-User plane

Example embodiments of the disclosure may be implemented using various physical layer modulation and transmission mechanisms. Example transmission mechanisms may include, but not limited to: Code Division Multiple Access (CDMA), Orthogonal Frequency Division Multiple Access (OFDMA), Time Division Multiple Access (TDMA), Wavelet technologies, and/or the like. Hybrid transmission mechanisms such as TDMA/CDMA, and OFDM/CDMA may also be employed. Various modulation schemes may be applied for signal transmission in the physical layer. Examples of modulation schemes include, but are not limited to: phase, amplitude, code, a combination of these, and/or the like. An example radio transmission method may implement Quadrature Amplitude Modulation (QAM) using Binary Phase Shift Keying (BPSK), Quadrature Phase Shift Keying (QPSK), 16-QAM, 64-QAM, 256-QAM, 1024-QAM, and/or the like. Physical radio transmission may be enhanced by dynamically or semi-dynamically changing the modulation and coding scheme depending on transmission requirements and radio conditions.

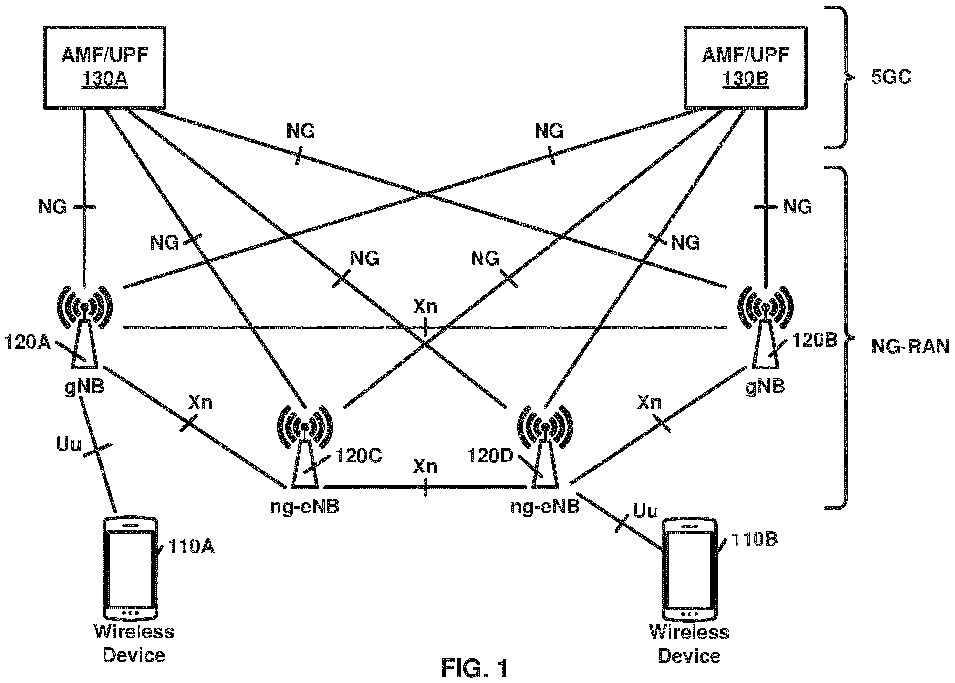

FIG. 1 is an example Radio Access Network (RAN) architecture as per an aspect of an embodiment of the present disclosure. As illustrated in this example, a RAN node may be a next generation Node B (gNB) (*e.g.* 120A, 120B) providing New Radio (NR) user plane and control plane protocol terminations towards a first wireless device (*e.g.* 110A). In an example, a RAN node may be a next generation evolved Node B (ng-eNB) (*e.g.* 120C, 120D), providing Evolved UMTS Terrestrial Radio Access (E-UTRA) user plane and control plane protocol terminations towards a second wireless device (*e.g.* 110B). The first wireless device may communicate with a gNB over a Uu interface. The second wireless device may communicate with a ng-eNB over a Uu interface.

A gNB or an ng-eNB may host functions such as radio resource management and scheduling, IP header compression, encryption and integrity protection of data, selection of Access and Mobility Management Function (AMF) at User Equipment (UE) attachment, routing of user plane and control plane data, connection setup and release, scheduling and transmission of paging messages (originated from the AMF), scheduling and transmission of system broadcast information (originated from the AMF or Operation and Maintenance (O&M)), measurement and measurement reporting configuration, transport level packet marking in the uplink, session management, support of network slicing, Quality of Service (QoS) flow management and mapping to data radio bearers, support of UEs in RRC_INACTIVE state, distribution function for Non-Access Stratum (NAS) messages, RAN sharing, dual connectivity or tight interworking between NR and E-UTRA.

In an example, one or more gNBs and/or one or more ng-eNBs may be interconnected with each other by means of Xn interface. A gNB or an ng-eNB may be connected by means of NG interfaces to 5G Core Network (5GC). In an example, 5GC may comprise one or more AMF/User Plan Function (UPF) functions (*e.g*. 130A or 130B). A gNB or an ng-eNB may be connected to a UPF by means of an NG-User plane (NG-U) interface. The NG-U interface may provide delivery (*e.g*. non-guaranteed delivery) of user plane Protocol Data Units (PDUs) between a RAN node and the UPF. A gNB or an ng-eNB may be connected to an AMF by means of an NG-Control plane (NG-C) interface. The NG-C interface may provide functions such as NG interface management, UE context management, UE mobility management, transport of NAS messages, paging, PDU session management, configuration transfer or warning message transmission.

In an example, a UPF may host functions such as anchor point for intra-/inter-Radio Access Technology (RAT) mobility (when applicable), external PDU session point of interconnect to data network, packet routing and forwarding, packet inspection and user plane part of policy rule enforcement, traffic usage reporting, uplink classifier to support routing traffic flows to a data network, branching point to support multi-homed PDU session, QoS handling for user plane, *e.g.* packet filtering, gating, Uplink (UL)/Downlink (DL) rate enforcement, uplink traffic verification (*e.g*. Service Data Flow (SDF) to QoS flow mapping), downlink packet buffering and/or downlink data notification triggering.

In an example, an AMF may host functions such as NAS signaling termination, NAS signaling security, Access Stratum (AS) security control, inter Core Network (CN) node signaling for mobility between 3^{rd} Generation Partnership Project (3GPP) access networks, idle mode UE reachability (*e.g*., control and execution of paging retransmission), registration area management, support of intra-system and inter-system mobility, access authentication, access authorization including check of roaming rights, mobility management control (subscription and policies), support of network slicing and/or Session Management Function (SMF) selection.

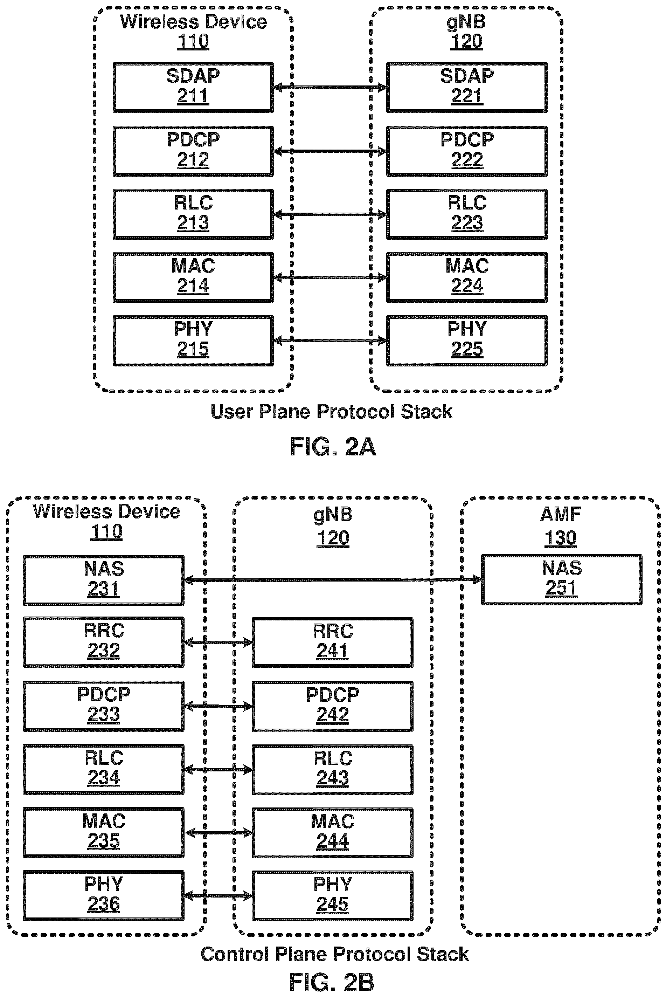

FIG. 2A is an example user plane protocol stack, where Service Data Adaptation Protocol (SDAP) (*e.g.* 211 and 221), Packet Data Convergence Protocol (PDCP) (*e.g.* 212 and 222), Radio Link Control (RLC) (*e.g.* 213 and 223) and Media Access Control (MAC) (*e.g*. 214 and 224) sublayers and Physical (PHY) *(e.g.* 215 and 225) layer may be terminated in wireless device (*e.g.* 110) and gNB (*e.g.* 120) on the network side. In an example, a PHY layer provides transport services to higher layers (e.g. MAC, RRC, etc). In an example, services and functions of a MAC sublayer may comprise mapping between logical channels and transport channels, multiplexing/demultiplexing of MAC Service Data Units (SDUs) belonging to one or different logical channels into/from Transport Blocks (TBs) delivered to/from the PHY layer, scheduling information reporting, error correction through Hybrid Automatic Repeat request (HARQ) (*e.g.* one HARQ entity per carrier in case of Carrier Aggregation (CA)), priority handling between UEs by means of dynamic scheduling, priority handling between logical channels of one UE by means of logical channel prioritization, and/or padding. A MAC entity may support one or multiple numerologies and/or transmission timings. In an example, mapping restrictions in a logical channel prioritization may control which numerology and/or transmission timing a logical channel may use. In an example, an RLC sublayer may supports transparent mode (TM), unacknowledged mode (UM) and acknowledged mode (AM) transmission modes. The RLC configuration may be per logical channel with no dependency on numerologies and/or Transmission Time Interval (TTI) durations. In an example, Automatic Repeat Request (ARQ) may operate on any of the numerologies and/or TTI durations the logical channel is configured with. In an example, services and functions of the PDCP layer for the user plane may comprise sequence numbering, header compression and decompression, transfer of user data, reordering and duplicate detection, PDCP PDU routing (*e.g.* in case of split bearers), retransmission of PDCP SDUs, ciphering, deciphering and integrity protection, PDCP SDU discard, PDCP re-establishment and data recovery for RLC AM, and/or duplication of PDCP PDUs. In an example, services and functions of SDAP may comprise mapping between a QoS flow and a data radio bearer. In an example, services and functions of SDAP may comprise mapping Quality of Service Indicator (QFI) in DL and UL packets. In an example, a protocol entity of SDAP may be configured for an individual PDU session.

FIG. 2B is an example control plane protocol stack where PDCP (*e.g.* 233 and 242), RLC (*e.g.* 234 and 243) and MAC (*e.g.* 235 and 244) sublayers and PHY (*e.g.* 236 and 245) layer may be terminated in wireless device (*e.g.* 110) and gNB (*e.g.* 120) on a network side and perform service and functions described above. In an example, RRC (*e.g.* 232 and 241) may be terminated in a wireless device and a gNB on a network side. In an example, services and functions of RRC may comprise broadcast of system information related to AS and NAS, paging initiated by 5GC or RAN, establishment, maintenance and release of an RRC connection between the UE and RAN, security functions including key management, establishment, configuration, maintenance and release of Signaling Radio Bearers (SRBs) and Data Radio Bearers (DRBs), mobility functions, QoS management functions, UE measurement reporting and control of the reporting, detection of and recovery from radio link failure, and/or NAS message transfer to/from NAS from/to a UE. In an example, NAS control protocol (*e.g.* 231 and 251) may be terminated in the wireless device and AMF (*e.g.* 130) on a network side and may perform functions such as authentication, mobility management between a UE and a AMF for 3GPP access and non-3GPP access, and session management between a UE and a SMF for 3GPP access and non-3GPP access.

In an example, a base station may configure a plurality of logical channels for a wireless device. A logical channel in the plurality of logical channels may correspond to a radio bearer and the radio bearer may be associated with a QoS requirement. In an example, a base station may configure a logical channel to be mapped to one or more TTIs/numerologies in a plurality of TTIs/numerologies. The wireless device may receive a Downlink Control Information (DCI) via Physical Downlink Control CHannel (PDCCH) indicating an uplink grant. In an example, the uplink grant may be for a first TTI/numerology and may indicate uplink resources for transmission of a transport block. The base station may configure each logical channel in the plurality of logical channels with one or more parameters to be used by a logical channel prioritization procedure at the MAC layer of the wireless device. The one or more parameters may comprise priority, prioritized bit rate, etc. A logical channel in the plurality of logical channels may correspond to one or more buffers comprising data associated with the logical channel. The logical channel prioritization procedure may allocate the uplink resources to one or more first logical channels in the plurality of logical channels and/or one or more MAC Control Elements (CEs). The one or more first logical channels may be mapped to the first TTI/numerology. The MAC layer at the wireless device may multiplex one or more MAC CEs and/or one or more MAC SDUs (*e.g.,* logical channel) in a MAC PDU (*e.g.,* transport block). In an example, the MAC PDU may comprise a MAC header comprising a plurality of MAC sub-headers. A MAC sub-header in the plurality of MAC sub-headers may correspond to a MAC CE or a MAC SUD (logical channel) in the one or more MAC CEs and/or one or more MAC SDUs. In an example, a MAC CE or a logical channel may be configured with a Logical Channel IDentifier (LCID). In an example, LCID for a logical channel or a MAC CE may be fixed/pre-configured. In an example, LCID for a logical channel or MAC CE may be configured for the wireless device by the base station. The MAC sub-header corresponding to a MAC CE or a MAC SDU may comprise LCID associated with the MAC CE or the MAC SDU.

In an example, a base station may activate and/or deactivate and/or impact one or more processes (*e.g*., set values of one or more parameters of the one or more processes or start and/or stop one or more timers of the one or more processes) at the wireless device by employing one or more MAC commands. The one or more MAC commands may comprise one or more MAC control elements. In an example, the one or more processes may comprise activation and/or deactivation of PDCP packet duplication for one or more radio bearers. The base station may transmit a MAC CE comprising one or more fields, the values of the fields indicating activation and/or deactivation of PDCP duplication for the one or more radio bearers. In an example, the one or more processes may comprise Channel State Information (CSI) transmission of on one or more cells. The base station may transmit one or more MAC CEs indicating activation and/or deactivation of the CSI transmission on the one or more cells. In an example, the one or more processes may comprise activation or deactivation of one or more secondary cells. In an example, the base station may transmit a MA CE indicating activation or deactivation of one or more secondary cells. In an example, the base station may transmit one or more MAC CEs indicating starting and/or stopping one or more Discontinuous Reception (DRX) timers at the wireless device. In an example, the base station may transmit one or more MAC CEs indicating one or more timing advance values for one or more Timing Advance Groups (TAGs).

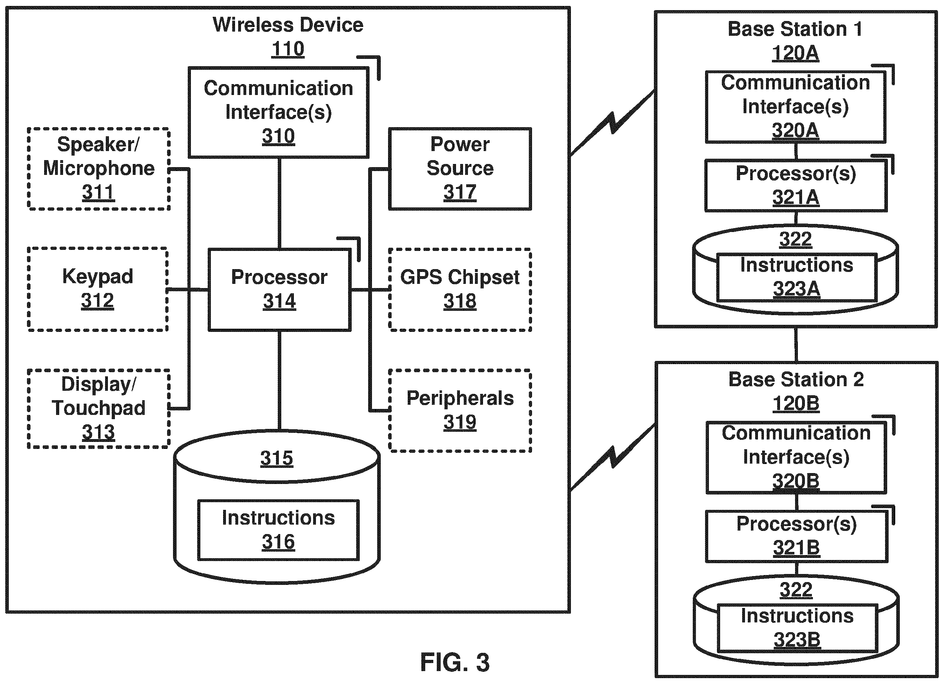

FIG. 3 is a block diagram of base stations (base station 1, 120A, and base station 2, 120B) and a wireless device 110. A wireless device may be called an UE. A base station may be called a NB, eNB, gNB, and/or ng-eNB. In an example, a wireless device and/or a base station may act as a relay node. The base station 1, 120A, may comprise at least one communication interface 320A (*e.g.* a wireless modem, an antenna, a wired modem, and/or the like), at least one processor 321A, and at least one set of program code instructions 323A stored in non-transitory memory 322A and executable by the at least one processor 321A. The base station 2, 120B, may comprise at least one communication interface 320B, at least one processor 321B, and at least one set of program code instructions 323B stored in non-transitory memory 322B and executable by the at least one processor 321B.

A base station may comprise many sectors for example: 1, 2, 3, 4, or 6 sectors. A base station may comprise many cells, for example, ranging from 1 to 50 cells or more. A cell may be categorized, for example, as a primary cell or secondary cell. At Radio Resource Control (RRC) connection establishment/re-establishment/handover, one serving cell may provide the NAS (non-access stratum) mobility information (*e.g*. Tracking Area Identifier (TAI)). At RRC connection re-establishment/handover, one serving cell may provide the security input. This cell may be referred to as the Primary Cell (PCell). In the downlink, a carrier corresponding to the PCell may be a DL Primary Component Carrier (PCC), while in the uplink, a carrier may be an UL PCC. Depending on wireless device capabilities, Secondary Cells (SCells) may be configured to form together with a PCell a set of serving cells. In a downlink, a carrier corresponding to an SCell may be a downlink secondary component carrier (DL SCC), while in an uplink, a carrier may be an uplink secondary component carrier (UL SCC). An SCell may or may not have an uplink carrier.

A cell, comprising a downlink carrier and optionally an uplink carrier, may be assigned a physical cell ID and a cell index. A carrier (downlink or uplink) may belong to one cell. The cell ID or cell index may also identify the downlink carrier or uplink carrier of the cell (depending on the context it is used). In the disclosure, a cell ID may be equally referred to a carrier ID, and a cell index may be referred to a carrier index. In an implementation, a physical cell ID or a cell index may be assigned to a cell. A cell ID may be determined using a synchronization signal transmitted on a downlink carrier. A cell index may be determined using RRC messages. For example, when the disclosure refers to a first physical cell ID for a first downlink carrier, the disclosure may mean the first physical cell ID is for a cell comprising the first downlink carrier. The same concept may apply to, for example, carrier activation. When the disclosure indicates that a first carrier is activated, the specification may equally mean that a cell comprising the first carrier is activated.

A base station may transmit to a wireless device one or more messages (*e.g*. RRC messages) comprising a plurality of configuration parameters for one or more cells. One or more cells may comprise at least one primary cell and at least one secondary cell. In an example, an RRC message may be broadcasted or unicasted to the wireless device. In an example, configuration parameters may comprise common parameters and dedicated parameters.

Services and/or functions of an RRC sublayer may comprise at least one of: broadcast of system information related to AS and NAS; paging initiated by 5GC and/or NG-RAN; establishment, maintenance, and/or release of an RRC connection between a wireless device and NG-RAN, which may comprise at least one of addition, modification and release of carrier aggregation; or addition, modification, and/or release of dual connectivity in NR or between E-UTRA and NR. Services and/or functions of an RRC sublayer may further comprise at least one of security functions comprising key management; establishment, configuration, maintenance, and/or release of Signaling Radio Bearers (SRBs) and/or Data Radio Bearers (DRBs); mobility functions which may comprise at least one of a handover (*e.g*. intra NR mobility or inter-RAT mobility) and a context transfer; or a wireless device cell selection and reselection and control of cell selection and reselection. Services and/or functions of an RRC sublayer may further comprise at least one of QoS management functions; a wireless device measurement configuration/reporting; detection of and/or recovery from radio link failure; or NAS message transfer to/from a core network entity (*e.g.* AMF, Mobility Management Entity (MME)) from/to the wireless device.

An RRC sublayer may support an RRC_Idle state, an RRC_Inactive state and/or an RRC_Connected state for a wireless device. In an RRC_Idle state, a wireless device may perform at least one of: Public Land Mobile Network (PLMN) selection; receiving broadcasted system information; cell selection/re-selection; monitoring/receiving a paging for mobile terminated data initiated by 5GC; paging for mobile terminated data area managed by 5GC; or DRX for CN paging configured via NAS. In an RRC_Inactive state, a wireless device may perform at least one of: receiving broadcasted system information; cell selection/re-selection; monitoring/receiving a RAN/CN paging initiated by NG-RAN/5GC; RAN-based notification area (RNA) managed by NG- RAN; or DRX for RAN/CN paging configured by NG-RAN/NAS. In an RRC_Idle state of a wireless device, a base station (*e.g*. NG-RAN) may keep a 5GC-NG-RAN connection (both C/U-planes) for the wireless device; and/or store a UE AS context for the wireless device. In an RRC_Connected state of a wireless device, a base station (*e.g*. NG-RAN) may perform at least one of: establishment of 5GC-NG-RAN connection (both C/U-planes) for the wireless device; storing a UE AS context for the wireless device; transmit/receive of unicast data to/from the wireless device; or network-controlled mobility based on measurement results received from the wireless device. In an RRC_Connected state of a wireless device, an NG-RAN may know a cell that the wireless device belongs to.

System information (SI) may be divided into minimum SI and other SIs. The minimum SI may be periodically broadcast. The minimum SI may comprise basic information required for initial access and information for acquiring any other SI broadcast periodically or provisioned on-demand, i.e. scheduling information. The other SI may either be broadcast, or be provisioned in a dedicated manner, either triggered by a network or upon request from a wireless device. A minimum SI may be transmitted via two different downlink channels using different messages (*e.g. MasterInformationBlock* and *SystemInformationBlockType1*). Another SI may be transmitted via *SystemInformationBlockType2.* For a wireless device in an RRC_Connected state, dedicated RRC signalling may be employed for the request and delivery of the other SI. For the wireless device in the RRC_Idle state and/or the RRC_Inactive state, the request may trigger a random-access procedure.

A wireless device may report its radio access capability information which may be static. A base station may request what capabilities for a wireless device to report based on band information. When allowed by a network, a temporary capability restriction request may be sent by the wireless device to signal the limited availability of some capabilities (*e.g*. due to hardware sharing, interference or overheating) to the base station. The base station may confirm or reject the request. The temporary capability restriction may be transparent to 5GC (*e.g.,* static capabilities may be stored in 5GC).

When CA is configured, a wireless device may have an RRC connection with a network. At RRC connection establishment/re-establishment/handover procedure, one serving cell may provide NAS mobility information, and at RRC connection re-establishment/handover, one serving cell may provide a security input. This cell may be referred to as the PCell. Depending on the capabilities of the wireless device, SCells may be configured to form together with the PCell a set of serving cells. The configured set of serving cells for the wireless device may comprise one PCell and one or more SCells.

The reconfiguration, addition and removal of SCells may be performed by RRC. At intra-NR handover, RRC may also add, remove, or reconfigure SCells for usage with the target PCell. When adding a new SCell, dedicated RRC signalling may be employed to send all required system information of the SCell i.e. while in connected mode, wireless devices may not need to acquire broadcasted system information directly from the SCells.

The purpose of an RRC connection reconfiguration procedure may be to modify an RRC connection, (*e.g*. to establish, modify and/or release RBs, to perform handover, to setup, modify, and/or release measurements, to add, modify, and/or release SCells and cell groups). As part of the RRC connection reconfiguration procedure, NAS dedicated information may be transferred from the network to the wireless device. The *RRCConnectionReconfiguration* message may be a command to modify an RRC connection. It may convey information for measurement configuration, mobility control, radio resource configuration (*e.g*. RBs, MAC main configuration and physical channel configuration) comprising any associated dedicated NAS information and security configuration. If the received RRC Connection Reconfiguration message includes the *sCellToReleaseList,* the wireless device may perform an SCell release. If the received RRC Connection Reconfiguration message includes the *sCellToAddModList,* the wireless device may perform SCell additions or modification.

An RRC connection establishment (or reestablishment, resume) procedure may be to establish (or reestablish, resume) an RRC connection. an RRC connection establishment procedure may comprise SRB1 establishment. The RRC connection establishment procedure may be used to transfer the initial NAS dedicated information/ message from a wireless device to E-UTRAN. The *RRCConnectionReestablishment* message may be used to re-establish SRB1.

A measurement report procedure may be to transfer measurement results from a wireless device to NG-RAN. The wireless device may initiate a measurement report procedure after successful security activation. A measurement report message may be employed to transmit measurement results.

The wireless device 110 may comprise at least one communication interface 310 (*e.g.* a wireless modem, an antenna, and/or the like), at least one processor 314, and at least one set of program code instructions 316 stored in non-transitory memory 315 and executable by the at least one processor 314. The wireless device 110 may further comprise at least one of at least one speaker/microphone 311, at least one keypad 312, at least one display/touchpad 313, at least one power source 317, at least one global positioning system (GPS) chipset 318, and other peripherals 319.

The processor 314 of the wireless device 110, the processor 321A of the base station 1 120A, and/or the processor 321B of the base station 2 120B may comprise at least one of a general-purpose processor, a digital signal processor (DSP), a controller, a microcontroller, an application specific integrated circuit (ASIC), a field programmable gate array (FPGA) and/or other programmable logic device, discrete gate and/or transistor logic, discrete hardware components, and the like. The processor 314 of the wireless device 110, the processor 321A in base station 1 120A, and/or the processor 321B in base station 2 120B may perform at least one of signal coding/processing, data processing, power control, input/output processing, and/or any other functionality that may enable the wireless device 110, the base station 1 120A and/or the base station 2 120B to operate in a wireless environment.

The processor 314 of the wireless device 110 may be connected to the speaker/microphone 311, the keypad 312, and/or the display/touchpad 313. The processor 314 may receive user input data from and/or provide user output data to the speaker/microphone 311, the keypad 312, and/or the display/touchpad 313. The processor 314 in the wireless device 110 may receive power from the power source 317 and/or may be configured to distribute the power to the other components in the wireless device 110. The power source 317 may comprise at least one of one or more dry cell batteries, solar cells, fuel cells, and the like. The processor 314 may be connected to the GPS chipset 318. The GPS chipset 318 may be configured to provide geographic location information of the wireless device 110.

The processor 314 of the wireless device 110 may further be connected to other peripherals 319, which may comprise one or more software and/or hardware modules that provide additional features and/or functionalities. For example, the peripherals 319 may comprise at least one of an accelerometer, a satellite transceiver, a digital camera, a universal serial bus (USB) port, a hands-free headset, a frequency modulated (FM) radio unit, a media player, an Internet browser, and the like.

The communication interface 320A of the base station 1, 120A, and/or the communication interface 320B of the base station 2, 120B, may be configured to communicate with the communication interface 310 of the wireless device 110 via a wireless link 330A and/or a wireless link 330B respectively. In an example, the communication interface 320A of the base station 1, 120A, may communicate with the communication interface 320B of the base station 2 and other RAN and core network nodes.

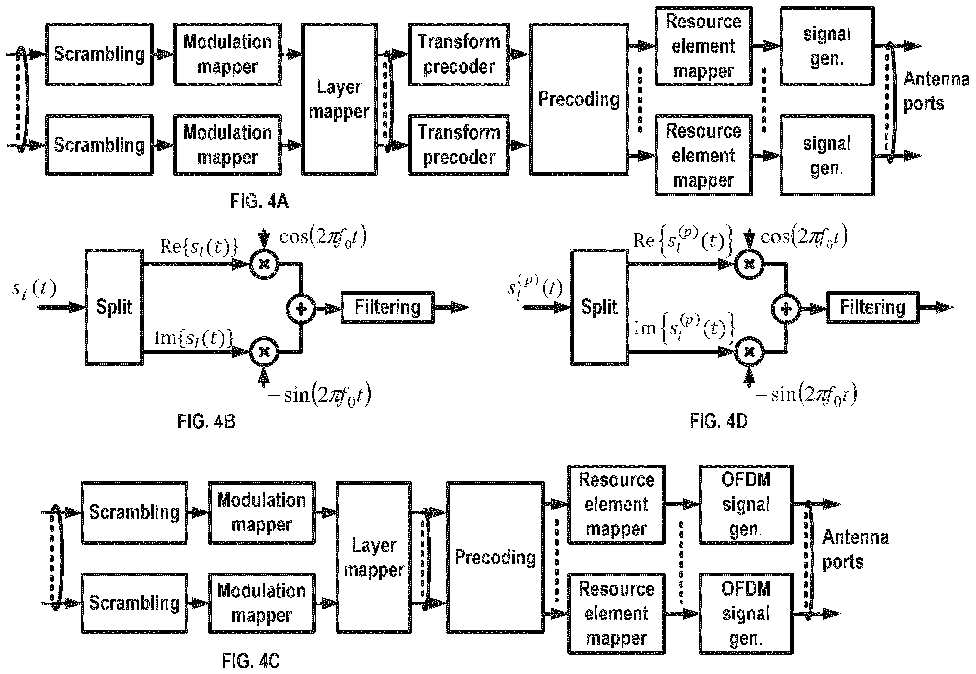

The wireless link 330A and/or the wireless link 330B may comprise at least one of a bidirectional link and/or a directional link. The communication interface 310 of the wireless device 110 may be configured to communicate with the communication interface 320A of the base station 1 120A and/or with the communication interface 320B of the base station 2 120B. The base station 1 120A and the wireless device 110 and/or the base station 2 120B and the wireless device 110 may be configured to send and receive transport blocks via the wireless link 330A and/or via the wireless link 330B, respectively. The wireless link 330A and/or the wireless link 330B may employ at least one frequency carrier. According to some of various aspects of embodiments, transceiver(s) may be employed. A transceiver may be a device that comprises both a transmitter and a receiver. Transceivers may be employed in devices such as wireless devices, base stations, relay nodes, and/or the like. Example embodiments for radio technology implemented in the communication interface 310, 320A, 320B and the wireless link 330A, 330B are illustrated in FIG. 4A, FIG. 4B, FIG. 4C, FIG. 4D, FIG. 6, FIG. 7A, FIG. 7B, FIG. 8, and associated text.

In an example, other nodes in a wireless network (*e.g*. AMF, UPF, SMF, etc) may comprise one or more communication interfaces, one or more processors, and memory storing instructions.

A node (*e.g*. wireless device, base station, AMF, SMF, UPF, servers, switches, antennas, and/or the like) may comprise one or more processors, and memory storing instructions that when executed by the one or more processors causes the node to perform certain processes and/or functions. Example embodiments may enable operation of single-carrier and/or multi-carrier communications. Other example embodiments may comprise a non-transitory tangible computer readable media comprising instructions executable by one or more processors to cause operation of single-carrier and/or multi-carrier communications. Yet other example embodiments may comprise an article of manufacture that comprises a non-transitory tangible computer readable machine-accessible medium having instructions encoded thereon for enabling programmable hardware to cause a node to enable operation of single-carrier and/or multi-carrier communications. The node may include processors, memory, interfaces, and/or the like.

An interface may comprise at least one of a hardware interface, a firmware interface, a software interface, and/or a combination thereof. The hardware interface may comprise connectors, wires, electronic devices such as drivers, amplifiers, and/or the like. The software interface may comprise code stored in a memory device to implement protocol(s), protocol layers, communication drivers, device drivers, combinations thereof, and/or the like. The firmware interface may comprise a combination of embedded hardware and code stored in and/or in communication with a memory device to implement connections, electronic device operations, protocol(s), protocol layers, communication drivers, device drivers, hardware operations, combinations thereof, and/or the like.

FIG. 4A, FIG. 4B, FIG. 4C and FIG. 4D are example diagrams for uplink and downlink signal transmission as per an aspect of an embodiment of the present disclosure. FIG. 4A shows an example uplink transmitter for at least one physical channel. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, an CP-OFDM signal for uplink transmission may be generated by FIG. 4A. These functions are illustrated as examples and it is anticipated that other mechanisms may be implemented in various embodiments.

An example structure for modulation and up-conversion to the carrier frequency of the complex-valued SC-FDMA or CP-OFDM baseband signal for an antenna port and/or the complex-valued Physical Random Access CHannel (PRACH) baseband signal is shown in FIG. 4B. Filtering may be employed prior to transmission.

An example structure for downlink transmissions is shown in FIG. 4C. The baseband signal representing a downlink physical channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments.

In an example, a gNB may transmit a first symbol and a second symbol on an antenna port, to a wireless device. The wireless device may infer the channel (e.g., fading gain, multipath delay, etc.) for conveying the second symbol on the antenna port, from the channel for conveying the first symbol on the antenna port. In an example, a first antenna port and a second antenna port may be quasi co-located if one or more large-scale properties of the channel over which a first symbol on the first antenna port is conveyed may be inferred from the channel over which a second symbol on a second antenna port is conveyed. The one or more large-scale properties may comprise at least one of: delay spread; doppler spread; doppler shift; average gain; average delay; and/or spatial Receiving (Rx) parameters.

An example modulation and up-conversion to the carrier frequency of the complex-valued OFDM baseband signal for an antenna port is shown in FIG. 4D. Filtering may be employed prior to transmission.

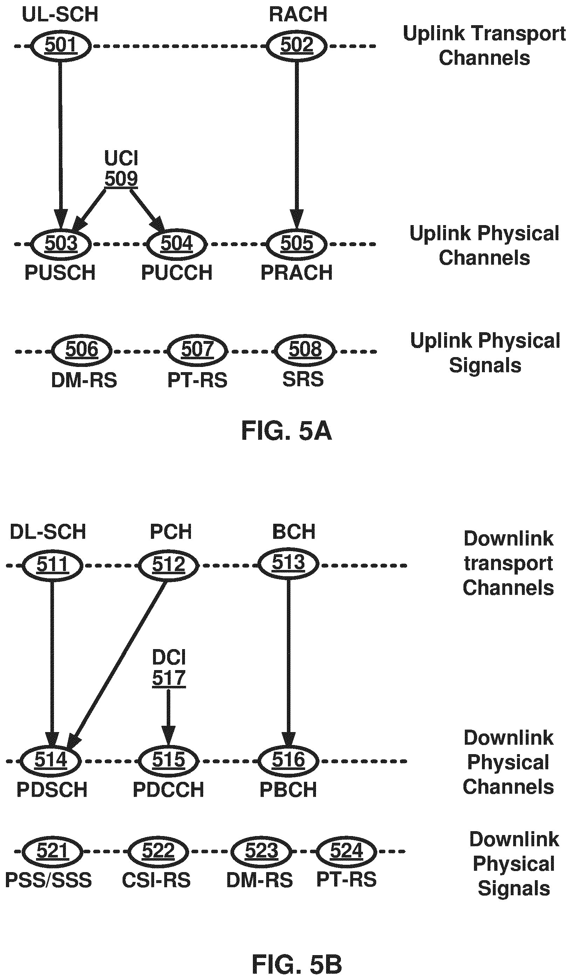

FIG. 5A is a diagram of an example uplink channel mapping and example uplink physical signals. FIG. 5B is a diagram of an example downlink channel mapping and a downlink physical signals. In an example, a physical layer may provide one or more information transfer services to a MAC and/or one or more higher layers. For example, the physical layer may provide the one or more information transfer services to the MAC via one or more transport channels. An information transfer service may indicate how and with what characteristics data are transferred over the radio interface.

In an example embodiment, a radio network may comprise one or more downlink and/or uplink transport channels. For example, a diagram in FIG. 5A shows example uplink transport channels comprising Uplink-Shared CHannel (UL-SCH) 501 and Random Access CHannel (RACH) 502. A diagram in FIG. 5B shows example downlink transport channels comprising Downlink-Shared CHannel (DL-SCH) 511, Paging CHannel (PCH) 512, and Broadcast CHannel (BCH) 513. A transport channel may be mapped to one or more corresponding physical channels. For example, UL-SCH 501 may be mapped to Physical Uplink Shared CHannel (PUSCH) 503. RACH 502 may be mapped to PRACH 505. DL-SCH 511 and PCH 512 may be mapped to Physical Downlink Shared CHannel (PDSCH) 514. BCH 513 may be mapped to Physical Broadcast CHannel (PBCH) 516.

There may be one or more physical channels without a corresponding transport channel. The one or more physical channels may be employed for Uplink Control Information (UCI) 509 and/or Downlink Control Information (DCI) 517. For example, Physical Uplink Control CHannel (PUCCH) 504 may carry UCI 509 from a UE to a base station. For example, Physical Downlink Control CHannel (PDCCH) 515 may carry DCI 517 from a base station to a UE. NR may support UCI 509 multiplexing in PUSCH 503 when UCI 509 and PUSCH 503 transmissions may coincide in a slot at least in part. The UCI 509 may comprise at least one of CSI, Acknowledgement (ACK)/Negative Acknowledgement (NACK), and/or scheduling request. The DCI 517 on PDCCH 515 may indicate at least one of following: one or more downlink assignments and/or one or more uplink scheduling grants

In uplink, a UE may transmit one or more Reference Signals (RSs) to a base station. For example, the one or more RSs may be at least one of Demodulation-RS (DM-RS) 506, Phase Tracking-RS (PT-RS) 507, and/or Sounding RS (SRS) 508. In downlink, a base station may transmit (e.g., unicast, multicast, and/or broadcast) one or more RSs to a UE. For example, the one or more RSs may be at least one of Primary Synchronization Signal (PSS)/Secondary Synchronization Signal (SSS) 521, CSI-RS 522, DM-RS 523, and/or PT-RS 524.

In an example, a UE may transmit one or more uplink DM-RSs 506 to a base station for channel estimation, for example, for coherent demodulation of one or more uplink physical channels (e.g., PUSCH 503 and/or PUCCH 504). For example, a UE may transmit a base station at least one uplink DM-RS 506 with PUSCH 503 and/or PUCCH 504, wherein the at least one uplink DM-RS 506 may be spanning a same frequency range as a corresponding physical channel. In an example, a base station may configure a UE with one or more uplink DM-RS configurations. At least one DM-RS configuration may support a front-loaded DM-RS pattern. A front-loaded DM-RS may be mapped over one or more OFDM symbols (*e.g*., 1 or 2 adjacent OFDM symbols). One or more additional uplink DM-RS may be configured to transmit at one or more symbols of a PUSCH and/or PUCCH. A base station may semi-statistically configure a UE with a maximum number of front-loaded DM-RS symbols for PUSCH and/or PUCCH. For example, a UE may schedule a single-symbol DM-RS and/or double symbol DM-RS based on a maximum number of front-loaded DM-RS symbols, wherein a base station may configure the UE with one or more additional uplink DM-RS for PUSCH and/or PUCCH. A new radio network may support, *e.g.,* at least for CP-OFDM, a common DM-RS structure for DL and UL, wherein a DM-RS location, DM-RS pattern, and/or scrambling sequence may be same or different.

In an example, whether uplink PT-RS 507 is present or not may depend on a RRC configuration. For example, a presence of uplink PT-RS may be UE-specifically configured. For example, a presence and/or a pattern of uplink PT-RS 507 in a scheduled resource may be UE-specifically configured by a combination of RRC signaling and/or association with one or more parameters employed for other purposes (*e.g*., Modulation and Coding Scheme (MCS)) which may be indicated by DCI. When configured, a dynamic presence of uplink PT-RS 507 may be associated with one or more DCI parameters comprising at least MCS. A radio network may support plurality of uplink PT-RS densities defined in time/frequency domain. When present, a frequency domain density may be associated with at least one configuration of a scheduled bandwidth. A UE may assume a same precoding for a DMRS port and a PT-RS port. A number of PT-RS ports may be fewer than a number of DM-RS ports in a scheduled resource. For example, uplink PT-RS 507 may be confined in the scheduled time/frequency duration for a UE.

In an example, a UE may transmit SRS 508 to a base station for channel state estimation to support uplink channel dependent scheduling and/or link adaptation. For example, SRS 508 transmitted by a UE may allow for a base station to estimate an uplink channel state at one or more different frequencies. A base station scheduler may employ an uplink channel state to assign one or more resource blocks of good quality for an uplink PUSCH transmission from a UE. A base station may semi-statistically configure a UE with one or more SRS resource sets. For an SRS resource set, a base station may configure a UE with one or more SRS resources. An SRS resource set applicability may be configured by a higher layer (*e.g.,* RRC) parameter. For example, when a higher layer parameter indicates beam management, a SRS resource in each of one or more SRS resource sets may be transmitted at a time instant. A UE may transmit one or more SRS resources in different SRS resource sets simultaneously. A new radio network may support aperiodic, periodic and/or semi-persistent SRS transmissions. A UE may transmit SRS resources based on one or more trigger types, wherein the one or more trigger types may comprise higher layer signaling (*e.g.,* RRC) and/or one or more DCI formats (*e.g.,* at least one DCI format may be employed for a UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH 503 and SRS 508 are transmitted in a same slot, a UE may be configured to transmit SRS 508 after a transmission of PUSCH 503 and corresponding uplink DM-RS 506.

In an example, a base station may semi-statistically configure a UE with one or more SRS configuration parameters indicating at least one of following: a SRS resource configuration identifier, a number of SRS ports, time domain behavior of SRS resource configuration (*e.g*., an indication of periodic, semi-persistent, or aperiodic SRS), slot (mini-slot, and/or subframe) level periodicity and/or offset for a periodic and/or aperiodic SRS resource, a number of OFDM symbols in a SRS resource, starting OFDM symbol of a SRS resource, a SRS bandwidth, a frequency hopping bandwidth, a cyclic shift, and/or a SRS sequence ID.

In an example, in a time domain, an SS/PBCH block may comprise one or more OFDM symbols (*e.g.,* 4 OFDM symbols numbered in increasing order from 0 to 3) within the SS/PBCH block. An SS/PBCH block may comprise PSS/SSS 521 and PBCH 516. In an example, in the frequency domain, an SS/PBCH block may comprise one or more contiguous subcarriers (*e.g.,* 240 contiguous subcarriers with the subcarriers numbered in increasing order from 0 to 239) within the SS/PBCH block. For example, a PSS/SSS 521 may occupy 1 OFDM symbol and 127 subcarriers. For example, PBCH 516 may span across 3 OFDM symbols and 240 subcarriers. A UE may assume that one or more SS/PBCH blocks transmitted with a same block index may be quasi co-located, *e.g.,* with respect to Doppler spread, Doppler shift, average gain, average delay, and spatial Rx parameters. A UE may not assume quasi co-location for other SS/PBCH block transmissions. A periodicity of an SS/PBCH block may be configured by a radio network (*e.g.,* by an RRC signaling) and one or more time locations where the SS/PBCH block may be sent may be determined by sub-carrier spacing. In an example, a UE may assume a band-specific sub-carrier spacing for an SS/PBCH block unless a radio network has configured a UE to assume a different sub-carrier spacing.

In an example, downlink CSI-RS 522 may be employed for a UE to acquire channel state information. A radio network may support periodic, aperiodic, and/or semi-persistent transmission of downlink CSI-RS 522. For example, a base station may semi-statistically configure and/or reconfigure a UE with periodic transmission of downlink CSI-RS 522. A configured CSI-RS resources may be activated ad/or deactivated. For semi-persistent transmission, an activation and/or deactivation of CSI-RS resource may be triggered dynamically. In an example, CSI-RS configuration may comprise one or more parameters indicating at least a number of antenna ports. For example, a base station may configure a UE with 32 ports. A base station may semi-statistically configure a UE with one or more CSI-RS resource sets. One or more CSI-RS resources may be allocated from one or more CSI-RS resource sets to one or more UEs. For example, a base station may semi-statistically configure one or more parameters indicating CSI RS resource mapping, for example, time-domain location of one or more CSI-RS resources, a bandwidth of a CSI-RS resource, and/or a periodicity. In an example, a UE may be configured to employ a same OFDM symbols for downlink CSI-RS 522 and control resource set (coreset) when the downlink CSI-RS 522 and coreset are spatially quasi co-located and resource elements associated with the downlink CSI-RS 522 are the outside of PRBs configured for coreset. In an example, a UE may be configured to employ a same OFDM symbols for downlink CSI-RS 522 and SS/PBCH blocks when the downlink CSI-RS 522 and SS/PBCH blocks are spatially quasi co-located and resource elements associated with the downlink CSI-RS 522 are the outside of PRBs configured for SS/PBCH blocks.

In an example, a UE may transmit one or more downlink DM-RSs 523 to a base station for channel estimation, for example, for coherent demodulation of one or more downlink physical channels (*e.g.,* PDSCH 514). For example, a radio network may support one or more variable and/or configurable DM-RS patterns for data demodulation. At least one downlink DM-RS configuration may support a front-loaded DM-RS pattern. A front-loaded DM-RS may be mapped over one or more OFDM symbols (*e.g.,* 1 or 2 adjacent OFDM symbols). A base station may semi-statistically configure a UE with a maximum number of front-loaded DM-RS symbols for PDSCH 514. For example, a DM-RS configuration may support one or more DM-RS ports. For example, for single user-MIMO, a DM-RS configuration may support at least 8 orthogonal downlink DM-RS ports. For example, for multiuser-MIMO, a DM-RS configuration may support 12 orthogonal downlink DM-RS ports. A radio network may support, *e.g.,* at least for CP-OFDM, a common DM-RS structure for DL and UL, wherein a DM-RS location, DM-RS pattern, and/or scrambling sequence may be same or different.

In an example, whether downlink PT-RS 524 is present or not may depend on a RRC configuration. For example, a presence of downlink PT-RS 524 may be UE-specifically configured. For example, a presence and/or a pattern of downlink PT-RS 524 in a scheduled resource may be UE-specifically configured by a combination of RRC signaling and/or association with one or more parameters employed for other purposes (*e.g.,* MCS) which may be indicated by DCI. When configured, a dynamic presence of downlink PT-RS 524 may be associated with one or more DCI parameters comprising at least MCS. A radio network may support plurality of PT-RS densities defined in time/frequency domain. When present, a frequency domain density may be associated with at least one configuration of a scheduled bandwidth. A UE may assume a same precoding for a DMRS port and a PT-RS port. A number of PT-RS ports may be fewer than a number of DM-RS ports in a scheduled resource. For example, downlink PT-RS 524 may be confined in the scheduled time/frequency duration for a UE.

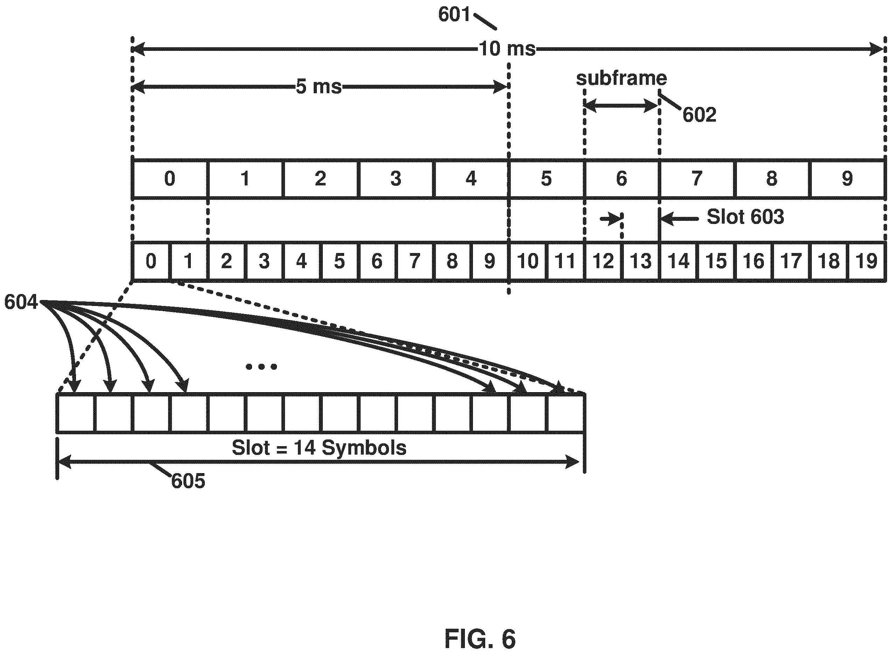

FIG. 6 is a diagram depicting an example transmission time and reception time for a carrier as per an aspect of an embodiment of the present disclosure. A multicarrier OFDM communication system may include one or more carriers, for example, ranging from 1 to 32 carriers, in case of carrier aggregation, or ranging from 1 to 64 carriers, in case of dual connectivity. Different radio frame structures may be supported (*e.g.,* for FDD and for TDD duplex mechanisms). FIG. 6 shows an example frame timing. Downlink and uplink transmissions may be organized into radio frames 601. In this example, radio frame duration is 10 ms. In this example, a 10 ms radio frame 601 may be divided into ten equally sized subframes 602 with 1 ms duration. Subframe(s) may comprise one or more slots (*e.g.* slots 603 and 605) depending on subcarrier spacing and/or CP length. For example, a subframe with 15 kHz, 30 kHz, 60 kHz, 120 kHz, 240 kHz and 480 kHz subcarrier spacing may comprise one, two, four, eight, sixteen and thirty-two slots, respectively. In FIG. 6, a subframe may be divided into two equally sized slots 603 with 0.5 ms duration. For example, 10 subframes may be available for downlink transmission and 10 subframes may be available for uplink transmissions in a 10 ms interval. Uplink and downlink transmissions may be separated in the frequency domain. Slot(s) may include a plurality of OFDM symbols 604. The number of OFDM symbols 604 in a slot 605 may depend on the cyclic prefix length. For example, a slot may be 14 OFDM symbols for the same subcarrier spacing of up to 480 kHz with normal CP. A slot may be 12 OFDM symbols for the same subcarrier spacing of 60kHz with extended CP. A slot may contain downlink, uplink, or a downlink part and an uplink part and/or alike.

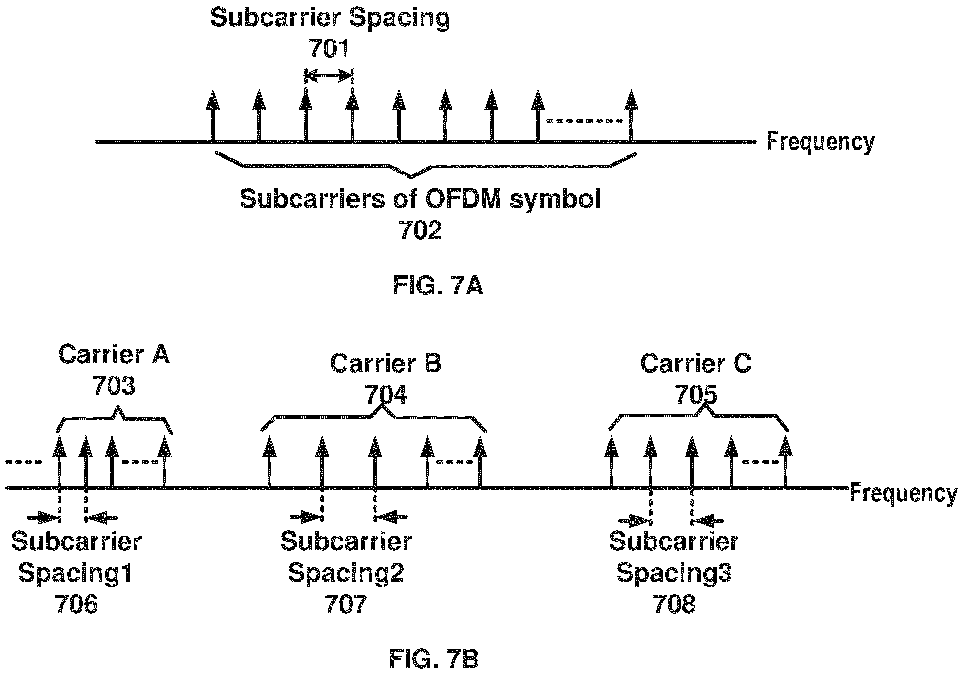

FIG. 7A is a diagram depicting example sets of OFDM subcarriers as per an aspect of an embodiment of the present disclosure. In the example, a gNB may communicate with a wireless device with a carrier with an example channel bandwidth 700. Arrow(s) in the diagram may depict a subcarrier in a multicarrier OFDM system. The OFDM system may use technology such as OFDM technology, SC-FDMA technology, and/or the like. In an example, an arrow 701 shows a subcarrier transmitting information symbols. In an example, a subcarrier spacing 702, between two contiguous subcarriers in a carrier, may be any one of 15KHz, 30KHz, 60 KHz, 120KHz, 240KHz etc. In an example, different subcarrier spacing may correspond to different transmission numerologies. In an example, a transmission numerology may comprise at least: a numerology index; a value of subcarrier spacing; a type of cyclic prefix (CP). In an example, a gNB may transmit to/receive from a UE on a number of subcarriers 703 in a carrier. In an example, a bandwidth occupied by a number of subcarriers 703 (transmission bandwidth) may be smaller than the channel bandwidth 700 of a carrier, due to guard band 704 and 705. In an example, a guard band 704 and 705 may be used to reduce interference to and from one or more neighbor carriers. A number of subcarriers (transmission bandwidth) in a carrier may depend on the channel bandwidth of the carrier and the subcarrier spacing. For example, a transmission bandwidth, for a carrier with 20MHz channel bandwidth and 15KHz subcarrier spacing, may be in number of 1024 subcarriers.

In an example, a gNB and a wireless device may communicate with multiple CCs when configured with CA. In an example, different component carriers may have different bandwidth and/or subcarrier spacing, if CA is supported. In an example, a gNB may transmit a first type of service to a UE on a first component carrier. The gNB may transmit a second type of service to the UE on a second component carrier. Different type of services may have different service requirement (*e.g.,* data rate, latency, reliability), which may be suitable for transmission via different component carrier having different subcarrier spacing and/or bandwidth. FIG. 7B shows an example embodiment. A first component carrier may comprise a first number of subcarriers 706 with a first subcarrier spacing 709. A second component carrier may comprise a second number of subcarriers 707 with a second subcarrier spacing 710. A third component carrier may comprise a third number of subcarriers 708 with a third subcarrier spacing 711. Carriers in a multicarrier OFDM communication system may be contiguous carriers, non-contiguous carriers, or a combination of both contiguous and non-contiguous carriers.

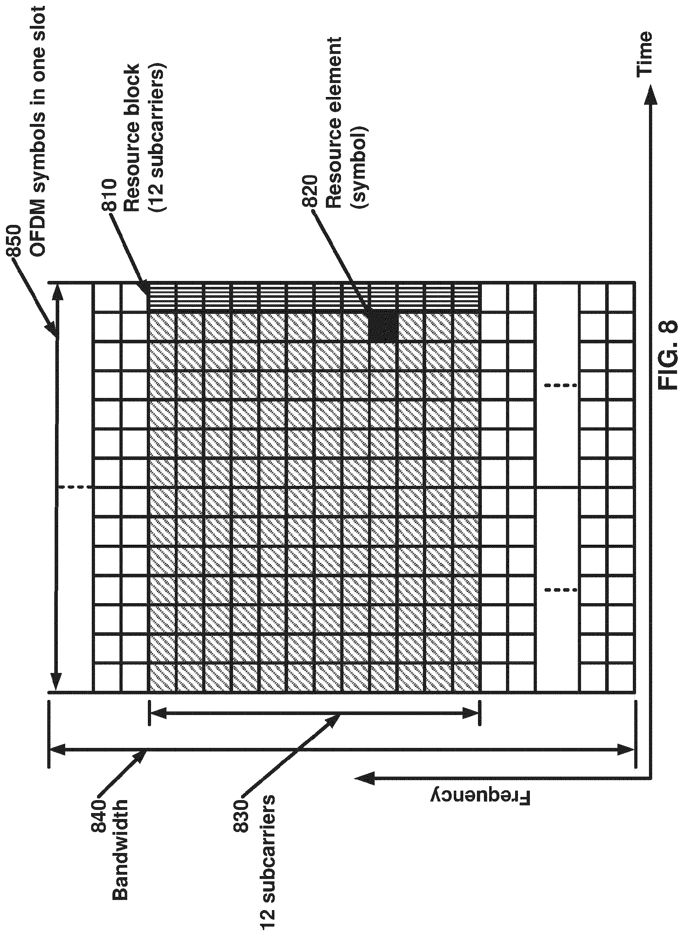

FIG. 8 is a diagram depicting OFDM radio resources as per an aspect of an embodiment of the present disclosure. In an example, a carrier may have a transmission bandwidth 801. In an example, a resource grid may be in a structure of frequency domain 802 and time domain 803. In an example, a resource grid may comprise a first number of OFDM symbols in a subframe and a second number of resource blocks, starting from a common resource block indicated by higher-layer signaling (*e.g*. RRC signaling), for a transmission numerology and a carrier. In an example, in a resource grid, a resource unit identified by a subcarrier index and a symbol index may be a resource element 805. In an example, a subframe may comprise a first number of OFDM symbols 807 depending on a numerology associated with a carrier. For example, when a subcarrier spacing of a numerology of a carrier is 15KHz, a subframe may have 14 OFDM symbols for a carrier. When a subcarrier spacing of a numerology is 30KHz, a subframe may have 28 OFDM symbols. When a subcarrier spacing of a numerology is 60Khz, a subframe may have 56 OFDM symbols, etc. In an example, a second number of resource blocks comprised in a resource grid of a carrier may depend on a bandwidth and a numerology of the carrier.

As shown in FIG. 8, a resource block 806 may comprise 12 subcarriers. In an example, multiple resource blocks may be grouped into a Resource Block Group (RBG) 804. In an example, a size of a RBG may depend on at least one of: a RRC message indicating a RBG size configuration; a size of a carrier bandwidth; or a size of a bandwidth part of a carrier. In an example, a carrier may comprise multiple bandwidth parts. A first bandwidth part of a carrier may have different frequency location and/or bandwidth from a second bandwidth part of the carrier.

In an example, a gNB may transmit a downlink control information comprising a downlink or uplink resource block assignment to a wireless device. A base station may transmit to or receive from, a wireless device, data packets (*e.g*. transport blocks) scheduled and transmitted via one or more resource blocks and one or more slots according to parameters in a downlink control information and/or RRC message(s). In an example, a starting symbol relative to a first slot of the one or more slots may be indicated to the wireless device. In an example, a gNB may transmit to or receive from, a wireless device, data packets scheduled on one or more RBGs and one or more slots.

In an example, a gNB may transmit a downlink control information comprising a downlink assignment to a wireless device via one or more PDCCHs. The downlink assignment may comprise parameters indicating at least modulation and coding format; resource allocation; and/or HARQ information related to DL-SCH. In an example, a resource allocation may comprise parameters of resource block allocation; and/or slot allocation. In an example, a gNB may dynamically allocate resources to a wireless device via a Cell-Radio Network Temporary Identifier (C-RNTI) on one or more PDCCHs. The wireless device may monitor the one or more PDCCHs in order to find possible allocation when its downlink reception is enabled. The wireless device may receive one or more downlink data package on one or more PDSCH scheduled by the one or more PDCCHs, when successfully detecting the one or more PDCCHs.

In an example, a gNB may allocate Configured Scheduling (CS) resources for down link transmission to a wireless device. The gNB may transmit one or more RRC messages indicating a periodicity of the CS grant. The gNB may transmit a DCI via a PDCCH addressed to a Configured Scheduling-RNTI (CS-RNTI) activating the CS resources. The DCI may comprise parameters indicating that the downlink grant is a CS grant. The CS grant may be implicitly reused according to the periodicity defined by the one or more RRC messages, until deactivated.

In an example, a gNB may transmit a downlink control information comprising an uplink grant to a wireless device via one or more PDCCHs. The uplink grant may comprise parameters indicating at least modulation and coding format; resource allocation; and/or HARQ information related to UL-SCH. In an example, a resource allocation may comprise parameters of resource block allocation; and/or slot allocation. In an example, a gNB may dynamically allocate resources to a wireless device via a C-RNTI on one or more PDCCHs. The wireless device may monitor the one or more PDCCHs in order to find possible resource allocation. The wireless device may transmit one or more uplink data package via one or more PUSCH scheduled by the one or more PDCCHs, when successfully detecting the one or more PDCCHs.

In an example, a gNB may allocate CS resources for uplink data transmission to a wireless device. The gNB may transmit one or more RRC messages indicating a periodicity of the CS grant. The gNB may transmit a DCI via a PDCCH addressed to a CS-RNTI activating the CS resources. The DCI may comprise parameters indicating that the uplink grant is a CS grant. The CS grant may be implicitly reused according to the periodicity defined by the one or more RRC message, until deactivated.

In an example, a base station may transmit DCI/control signaling via PDCCH. The DCI may take a format in a plurality of formats. A DCI may comprise downlink and/or uplink scheduling information (*e.g.,* resource allocation information, HARQ related parameters, MCS), request for CSI (*e.g.,* aperiodic CQI reports), request for SRS, uplink power control commands for one or more cells, one or more timing information (*e.g.,* TB transmission/reception timing, HARQ feedback timing, etc.), etc. In an example, a DCI may indicate an uplink grant comprising transmission parameters for one or more transport blocks. In an example, a DCI may indicate downlink assignment indicating parameters for receiving one or more transport blocks. In an example, a DCI may be used by base station to initiate a contention-free random access at the wireless device. In an example, the base station may transmit a DCI comprising slot format indicator (SFI) notifying a slot format. In an example, the base station may transmit a DCI comprising pre-emption indication notifying the PRB(s) and/or OFDM symbol(s) where a UE may assume no transmission is intended for the UE. In an example, the base station may transmit a DCI for group power control of PUCCH or PUSCH or SRS. In an example, a DCI may correspond to an RNTI. In an example, the wireless device may obtain an RNTI in response to completing the initial access (*e.g.,* C-RNTI). In an example, the base station may configure an RNTI for the wireless (*e.g.,* CS-RNTI, TPC-CS-RNTI, TPC-PUCCH-RNTI, TPC-PUSCH-RNTI, TPC-SRS-RNTI). In an example, the wireless device may compute an RNTI (*e.g.,* the wireless device may compute RA-RNTI based on resources used for transmission of a preamble). In an example, an RNTI may have a pre-configured value (*e.g.,* P-RNTI or SI-RNTI). In an example, a wireless device may monitor a group common search space which may be used by base station for transmitting DCIs that are intended for a group of UEs. In an example, a group common DCI may correspond to an RNTI which is commonly configured for a group of UEs. In an example, a wireless device may monitor a UE-specific search space. In an example, a UE specific DCI may correspond to an RNTI configured for the wireless device.

A NR system may support a single beam operation and/or a multi-beam operation. In a multi-beam operation, a base station may perform a downlink beam sweeping to provide coverage for common control channels and/or downlink SS blocks, which may comprise at least a PSS, a SSS, and/or PBCH. A wireless device may measure quality of a beam pair link using one or more RSs. One or more SS blocks, or one or more CSI-RS resources, associated with a CSI-RS resource index (CRI), or one or more DM-RSs of PBCH, may be used as RS for measuring quality of a beam pair link. Quality of a beam pair link may be defined as a reference signal received power (RSRP) value, or a reference signal received quality (RSRQ) value, and/or a CSI value measured on RS resources. The base station may indicate whether an RS resource, used for measuring a beam pair link quality, is quasi-co-located (QCLed) with DM-RSs of a control channel. A RS resource and DM-RSs of a control channel may be called QCLed when a channel characteristics from a transmission on an RS to a wireless device, and that from a transmission on a control channel to a wireless device, are similar or same under a configured criterion. In a multi-beam operation, a wireless device may perform an uplink beam sweeping to access a cell.

In an example, a wireless device may be configured to monitor PDCCH on one or more beam pair links simultaneously depending on a capability of a wireless device. This may increase robustness against beam pair link blocking. A base station may transmit one or more messages to configure a wireless device to monitor PDCCH on one or more beam pair links in different PDCCH OFDM symbols. For example, a base station may transmit higher layer signaling (*e.g.* RRC signaling) or MAC CE comprising parameters related to the Rx beam setting of a wireless device for monitoring PDCCH on one or more beam pair links. A base station may transmit indication of spatial QCL assumption between an DL RS antenna port(s) (for example, cell-specific CSI-RS, or wireless device-specific CSI-RS, or SS block, or PBCH with or without DM-RSs of PBCH), and DL RS antenna port(s) for demodulation of DL control channel. Signaling for beam indication for a PDCCH may be MAC CE signaling, or RRC signaling, or DCI signaling, or specification-transparent and/or implicit method, and combination of these signaling methods.

For reception of unicast DL data channel, a base station may indicate spatial QCL parameters between DL RS antenna port(s) and DM-RS antenna port(s) of DL data channel. The base station may transmit DCI (*e.g*. downlink grants) comprising information indicating the RS antenna port(s). The information may indicate RS antenna port(s) which may be QCLed with the DM-RS antenna port(s). Different set of DM-RS antenna port(s) for a DL data channel may be indicated as QCL with different set of the RS antenna port(s).

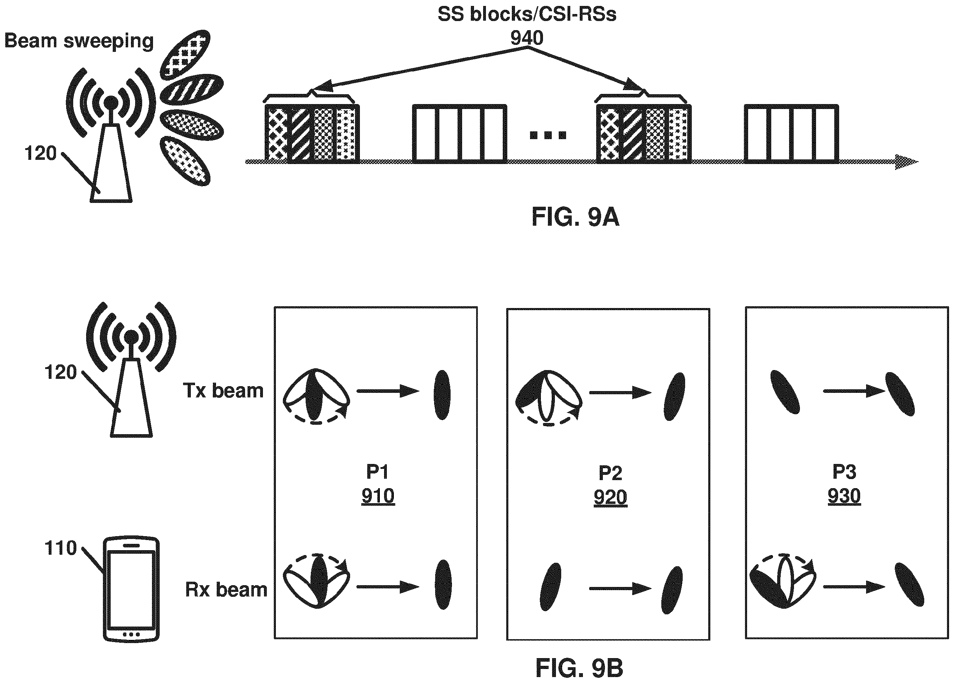

FIG. 9A is an example of beam sweeping in a DL channel. In an RRC_INACTIVE state or RRC_IDLE state, a wireless device may assume that SS blocks form an SS burst 940, and an SS burst set 950. The SS burst set 950 may have a given periodicity. For example, in a multi-beam operation, a base station 120 may transmit SS blocks in multiple beams, together forming a SS burst 940. One or more SS blocks may be transmitted on one beam. If multiple SS bursts 940 are transmitted with multiple beams, SS bursts together may form SS burst set 950.

A wireless device may further use CSI-RS in the multi-beam operation for estimating a beam quality of a links between a wireless device and a base station. A beam may be associated with a CSI-RS. For example, a wireless device may, based on a RSRP measurement on CSI-RS, report a beam index, as indicated in a CRI for downlink beam selection, and associated with a RSRP value of a beam. A CSI-RS may be transmitted on a CSI-RS resource including at least one of one or more antenna ports, one or more time or frequency radio resources. A CSI-RS resource may be configured in a cell-specific way by common RRC signaling, or in a wireless device-specific way by dedicated RRC signaling, and/or L1/L2 signaling. Multiple wireless devices covered by a cell may measure a cell-specific CSI-RS resource. A dedicated subset of wireless devices covered by a cell may measure a wireless device-specific CSI-RS resource.

A CSI-RS resource may be transmitted periodically, or using aperiodic transmission, or using a multi-shot or semi-persistent transmission. For example, in a periodic transmission in FIG. 9A, a base station 120 may transmit configured CSI-RS resources 940 periodically using a configured periodicity in a time domain. In an aperiodic transmission, a configured CSI-RS resource may be transmitted in a dedicated time slot. In a multi-shot or semi-persistent transmission, a configured CSI-RS resource may be transmitted within a configured period. Beams used for CSI-RS transmission may have different beam width than beams used for SS-blocks transmission.

FIG. 9B is an example of a beam management procedure in an example new radio network. A base station 120 and/or a wireless device 110 may perform a downlink L1/L2 beam management procedure. One or more of the following downlink L1/L2 beam management procedures may be performed within one or more wireless devices 110 and one or more base stations 120. In an example, a P-1 procedure 910 may be used to enable the wireless device 110 to measure one or more Transmission (Tx) beams associated with the base station 120 to support a selection of a first set of Tx beams associated with the base station 120 and a first set of Rx beam(s) associated with a wireless device 110. For beamforming at a base station 120, a base station 120 may sweep a set of different TX beams. For beamforming at a wireless device 110, a wireless device 110 may sweep a set of different Rx beams. In an example, a P-2 procedure 920 may be used to enable a wireless device 110 to measure one or more Tx beams associated with a base station 120 to possibly change a first set of Tx beams associated with a base station 120. A P-2 procedure 920 may be performed on a possibly smaller set of beams for beam refinement than in the P-1 procedure 910. A P-2 procedure 920 may be a special case of a P-1 procedure 910. In an example, a P-3 procedure 930 may be used to enable a wireless device 110 to measure at least one Tx beam associated with a base station 120 to change a first set of Rx beams associated with a wireless device 110.

A wireless device 110 may transmit one or more beam management reports to a base station 120. In one or more beam management reports, a wireless device 110 may indicate some beam pair quality parameters, comprising at least, one or more beam identifications; RSRP; Precoding Matrix Indicator (PMI)/Channel Quality Indicator (CQI)/Rank Indicator (RI) of a subset of configured beams. Based on one or more beam management reports, a base station 120 may transmit to a wireless device 110 a signal indicating that one or more beam pair links are one or more serving beams. A base station 120 may transmit PDCCH and PDSCH for a wireless device 110 using one or more serving beams.

In an example embodiment, new radio network may support a Bandwidth Adaptation (BA). In an example, receive and/or transmit bandwidths configured by an UE employing a BA may not be large. For example, a receive and/or transmit bandwidths may not be as large as a bandwidth of a cell. Receive and/or transmit bandwidths may be adjustable. For example, a UE may change receive and/or transmit bandwidths, e.g., to shrink during period of low activity to save power. For example, a UE may change a location of receive and/or transmit bandwidths in a frequency domain, *e.g.* to increase scheduling flexibility. For example, a UE may change a subcarrier spacing, *e.g.* to allow different services.

In an example embodiment, a subset of a total cell bandwidth of a cell may be referred to as a Bandwidth Part (BWP). A base station may configure a UE with one or more BWPs to achieve a BA. For example, a base station may indicate, to a UE, which of the one or more (configured) BWPs is an active BWP.

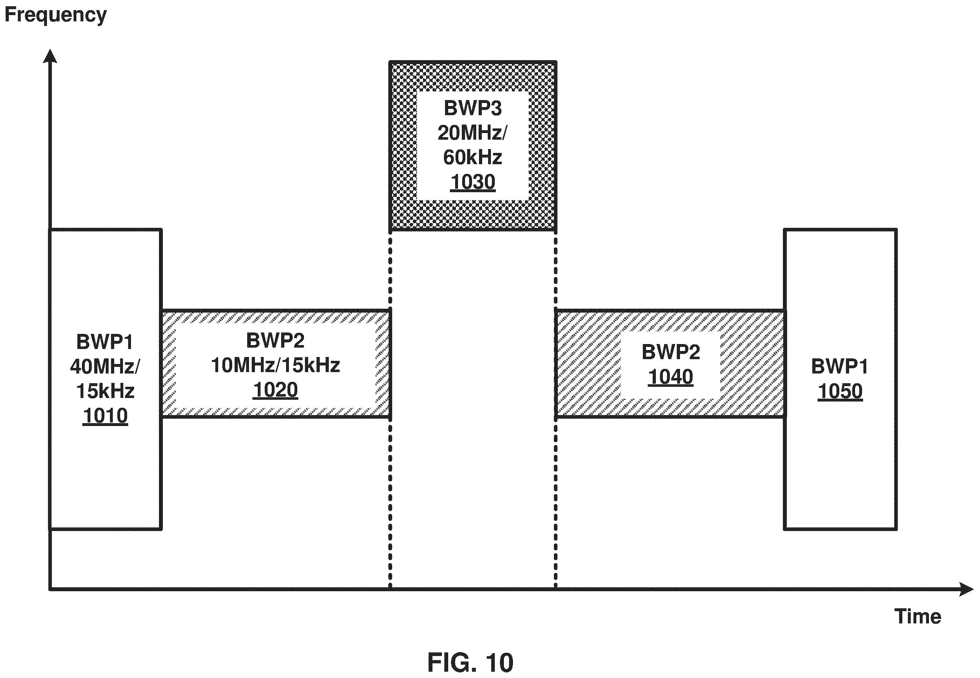

FIG. 10 is an example diagram of 3 BWPs configured: BWP1 (1010 and 1050) with a width of 40 MHz and subcarrier spacing of 15 kHz; BWP2 (1020 and 1040) with a width of 10 MHz and subcarrier spacing of 15 kHz; BWP3 1030 with a width of 20 MHz and subcarrier spacing of 60 kHz.

In an example, a UE, configured for operation in one or more BWPs of a cell, may be configured by one or more higher layers (*e.g.* RRC layer) for a cell a set of one or more BWPs (*e.g.,* at most four BWPs) for receptions by the UE (DL BWP set) in a DL bandwidth by at least one parameter DL-BWP and a set of one or more BWPs (*e.g.,* at most four BWPs) for transmissions by a UE (UL BWP set) in an UL bandwidth by at least one parameter UL-BWP for a cell.

To enable BA on the PCell, a base station may configure a UE with one or more UL and DL BWP pairs. To enable BA on SCells (*e.g.,* in case of CA), a base station may configure a UE at least with one or more DL BWPs (*e.g.,* there may be none in an UL).

In an example, an initial active DL BWP may be defined by at least one of a location and number of contiguous PRBs, a subcarrier spacing, or a cyclic prefix, for a control resource set for at least one common search space. For operation on the PCell, one or more higher layer parameters may indicate at least one initial UL BWP for a random access procedure. If a UE is configured with a secondary carrier on a primary cell, the UE may be configured with an initial BWP for random access procedure on a secondary carrier.

In an example, for unpaired spectrum operation, a UE may expect that a center frequency for a DL BWP may be same as a center frequency for a UL BWP.

For example, for a DL BWP or an UL BWP in a set of one or more DL BWPs or one or more UL BWPs, respectively, a base station may semi-statistically configure a UE for a cell with one or more parameters indicating at least one of following: a subcarrier spacing; a cyclic prefix; a number of contiguous PRBs; an index in the set of one or more DL BWPs and/or one or more UL BWPs; a link between a DL BWP and an UL BWP from a set of configured DL BWPs and UL BWPs; a DCI detection to a PDSCH reception timing; a PDSCH reception to a HARQ-ACK transmission timing value; a DCI detection to a PUSCH transmission timing value; an offset of a first PRB of a DL bandwidth or an UL bandwidth, respectively, relative to a first PRB of a bandwidth.

In an example, for a DL BWP in a set of one or more DL BWPs on a PCell, a base station may configure a UE with one or more control resource sets for at least one type of common search space and/or one UE-specific search space. For example, a base station may not configure a UE without a common search space on a PCell, or on a PSCell, in an active DL BWP.

For an UL BWP in a set of one or more UL BWPs, a base station may configure a UE with one or more resource sets for one or more PUCCH transmissions.

In an example, if a DCI comprises a BWP indicator field, a BWP indicator field value may indicate an active DL BWP, from a configured DL BWP set, for one or more DL receptions. If a DCI comprises a BWP indicator field, a BWP indicator field value may indicate an active UL BWP, from a configured UL BWP set, for one or more UL transmissions.

In an example, for a PCell, a base station may semi-statistically configure a UE with a default DL BWP among configured DL BWPs. If a UE is not provided a default DL BWP, a default BWP may be an initial active DL BWP.

In an example, a base station may configure a UE with a timer value for a PCell. For example, a UE may start a timer, referred to as BWP inactivity timer, when a UE detects a DCI indicating an active DL BWP, other than a default DL BWP, for a paired spectrum operation or when a UE detects a DCI indicating an active DL BWP or UL BWP, other than a default DL BWP or UL BWP, for an unpaired spectrum operation. The UE may increment the timer by an interval of a first value (*e.g.,* the first value may be 1 millisecond or 0.5 milliseconds) if the UE does not detect a DCI during the interval for a paired spectrum operation or for an unpaired spectrum operation. In an example, the timer may expire when the timer is equal to the timer value. A UE may switch to the default DL BWP from an active DL BWP when the timer expires.

In an example, a base station may semi-statistically configure a UE with one or more BWPs. A UE may switch an active BWP from a first BWP to a second BWP in response to receiving a DCI indicating the second BWP as an active BWP and/or in response to an expiry of BWP inactivity timer (for example, the second BWP may be a default BWP). For example, FIG. 10 is an example diagram of 3 BWPs configured, BWP1 (1010 and 1050), BWP2 (1020 and 1040), and BWP3 (1030). BWP2 (1020 and 1040) may be a default BWP. BWP1 (1010) may be an initial active BWP. In an example, a UE may switch an active BWP from BWP1 1010 to BWP2 1020 in response to an expiry of BWP inactivity timer. For example, a UE may switch an active BWP from BWP2 1020 to BWP3 1030 in response to receiving a DCI indicating BWP3 1030 as an active BWP. Switching an active BWP from BWP3 1030 to BWP2 1040 and/or from BWP2 1040 to BWP1 1050 may be in response to receiving a DCI indicating an active BWP and/or in response to an expiry of BWP inactivity timer.

In an example, if a UE is configured for a secondary cell with a default DL BWP among configured DL BWPs and a timer value, UE procedures on a secondary cell may be same as on a primary cell using the timer value for the secondary cell and the default DL BWP for the secondary cell.

In an example, if a base station configures a UE with a first active DL BWP and a first active UL BWP on a secondary cell or carrier, a UE may employ an indicated DL BWP and an indicated UL BWP on a secondary cell as a respective first active DL BWP and first active UL BWP on a secondary cell or carrier.

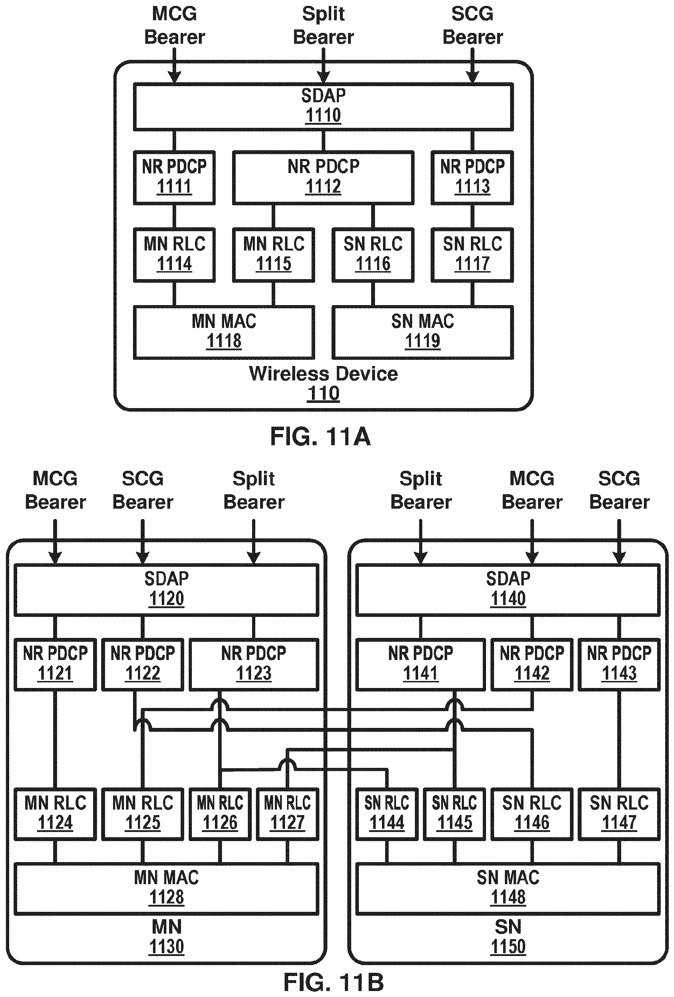

FIG. 11A and FIG. 11B show packet flows employing a multi connectivity (*e.g*. dual connectivity, multi connectivity, tight interworking, and/or the like). FIG. 11A is an example diagram of a protocol structure of a wireless device 110 (*e.g.* UE) with CA and/or multi connectivity as per an aspect of an embodiment. FIG. 11B is an example diagram of a protocol structure of multiple base stations with CA and/or multi connectivity as per an aspect of an embodiment. The multiple base stations may comprise a master node, MN 1130 (*e.g.* a master node, a master base station, a master gNB, a master eNB, and/or the like) and a secondary node, SN 1150 (*e.g.* a secondary node, a secondary base station, a secondary gNB, a secondary eNB, and/or the like). A master node 1130 and a secondary node 1150 may co-work to communicate with a wireless device 110.

When multi connectivity is configured for a wireless device 110, the wireless device 110, which may support multiple reception/transmission functions in an RRC connected state, may be configured to utilize radio resources provided by multiple schedulers of a multiple base stations. Multiple base stations may be inter-connected via a non-ideal or ideal backhaul (*e.g*. Xn interface, X2 interface, and/or the like). A base station involved in multi connectivity for a certain wireless device may perform at least one of two different roles: a base station may either act as a master base station or as a secondary base station. In multi connectivity, a wireless device may be connected to one master base station and one or more secondary base stations. In an example, a master base station (*e.g*. the MN 1130) may provide a master cell group (MCG) comprising a primary cell and/or one or more secondary cells for a wireless device (*e.g.* the wireless device 110). A secondary base station (*e.g*. the SN 1150) may provide a secondary cell group (SCG) comprising a primary secondary cell (PSCell) and/or one or more secondary cells for a wireless device (*e.g.* the wireless device 110).

In multi connectivity, a radio protocol architecture that a bearer employs may depend on how a bearer is setup. In an example, three different type of bearer setup options may be supported: an MCG bearer, an SCG bearer, and/or a split bearer. A wireless device may receive/transmit packets of an MCG bearer via one or more cells of the MCG, and/or may receive/transmits packets of an SCG bearer via one or more cells of an SCG. Multi-connectivity may also be described as having at least one bearer configured to use radio resources provided by the secondary base station. Multi-connectivity may or may not be configured/implemented in some of the example embodiments.

In an example, a wireless device (*e.g*. Wireless Device 110) may transmit and/or receive: packets of an MCG bearer via an SDAP layer (*e.g.* SDAP 1110), a PDCP layer (*e.g.* NR PDCP 1111), an RLC layer (*e.g.* MN RLC 1114), and a MAC layer (*e.g.* MN MAC 1118); packets of a split bearer via an SDAP layer (*e.g.* SDAP 1110), a PDCP layer (*e.g.* NR PDCP 1112), one of a master or secondary RLC layer (*e.g.* MN RLC 1115, SN RLC 1116), and one of a master or secondary MAC layer (*e.g.* MN MAC 1118, SN MAC 1119); and/or packets of an SCG bearer via an SDAP layer (*e.g.* SDAP 1110), a PDCP layer (*e.g.* NR PDCP 1113), an RLC layer (*e.g.* SN RLC 1117), and a MAC layer (*e.g.* MN MAC 1119).

In an example, a master base station (*e.g.* MN 1130) and/or a secondary base station (*e.g.* SN 1150) may transmit/receive: packets of an MCG bearer via a master or secondary node SDAP layer (*e.g.* SDAP 1120, SDAP 1140), a master or secondary node PDCP layer (*e.g.* NR PDCP 1121, NR PDCP 1142), a master node RLC layer (*e.g.* MN RLC 1124, MN RLC 1125), and a master node MAC layer (*e.g.* MN MAC 1128); packets of an SCG bearer via a master or secondary node SDAP layer (*e.g.* SDAP 1120, SDAP 1140), a master or secondary node PDCP layer (*e.g.* NR PDCP 1122, NR PDCP 1143), a secondary node RLC layer (*e.g.* SN RLC 1146, SN RLC 1147), and a secondary node MAC layer (*e.g.* SN MAC 1148); packets of a split bearer via a master or secondary node SDAP layer (*e.g*. SDAP 1120, SDAP 1140), a master or secondary node PDCP layer (*e.g.* NR PDCP 1123, NR PDCP 1141), a master or secondary node RLC layer (*e.g.* MN RLC 1126, SN RLC 1144, SN RLC 1145, MN RLC 1127), and a master or secondary node MAC layer (*e.g.* MN MAC 1128, SN MAC 1148).

In multi connectivity, a wireless device may configure multiple MAC entities: one MAC entity (*e.g.* MN MAC 1118) for a master base station, and other MAC entities (*e.g.* SN MAC 1119) for a secondary base station. In multi-connectivity, a configured set of serving cells for a wireless device may comprise two subsets: an MCG comprising serving cells of a master base station, and SCGs comprising serving cells of a secondary base station. For an SCG, one or more of following configurations may be applied: at least one cell of an SCG has a configured UL CC and at least one cell of a SCG, named as primary secondary cell (PSCell, PCell of SCG, or sometimes called PCell), is configured with PUCCH resources; when an SCG is configured, there may be at least one SCG bearer or one Split bearer; upon detection of a physical layer problem or a random access problem on a PSCell, or a number of NR RLC retransmissions has been reached associated with the SCG, or upon detection of an access problem on a PSCell during a SCG addition or a SCG change: an RRC connection re-establishment procedure may not be triggered, UL transmissions towards cells of an SCG may be stopped, a master base station may be informed by a wireless device of a SCG failure type, for split bearer, a DL data transfer over a master base station may be maintained; an NR RLC acknowledged mode (AM) bearer may be configured for a split bearer; PCell and/or PSCell may not be de-activated; PSCell may be changed with a SCG change procedure (*e.g*. with security key change and a RACH procedure); and/or a bearer type change between a split bearer and a SCG bearer or simultaneous configuration of a SCG and a split bearer may or may not supported.

With respect to interaction between a master base station and a secondary base stations for multi-connectivity, one or more of the following may be applied: a master base station and/or a secondary base station may maintain Radio Resource Management (RRM) measurement configurations of a wireless device; a master base station may (*e.g*. based on received measurement reports, traffic conditions, and/or bearer types) may decide to request a secondary base station to provide additional resources (*e.g*. serving cells) for a wireless device; upon receiving a request from a master base station, a secondary base station may create/modify a container that may result in configuration of additional serving cells for a wireless device (or decide that the secondary base station has no resource available to do so); for a UE capability coordination, a master base station may provide (a part of) an AS configuration and UE capabilities to a secondary base station; a master base station and a secondary base station may exchange information about a UE configuration by employing of RRC containers (inter-node messages) carried via Xn messages; a secondary base station may initiate a reconfiguration of the secondary base station existing serving cells (*e.g.* PUCCH towards the secondary base station); a secondary base station may decide which cell is a PSCell within a SCG; a master base station may or may not change content of RRC configurations provided by a secondary base station; in case of a SCG addition and/or a SCG SCell addition, a master base station may provide recent (or the latest) measurement results for SCG cell(s); a master base station and secondary base stations may receive information of SFN and/or subframe offset of each other from OAM and/or via an Xn interface, (*e.g.* for a purpose of DRX alignment and/or identification of a measurement gap). In an example, when adding a new SCG SCell, dedicated RRC signaling may be used for sending required system information of a cell as for CA, except for a SFN acquired from a MIB of a PSCell of a SCG.

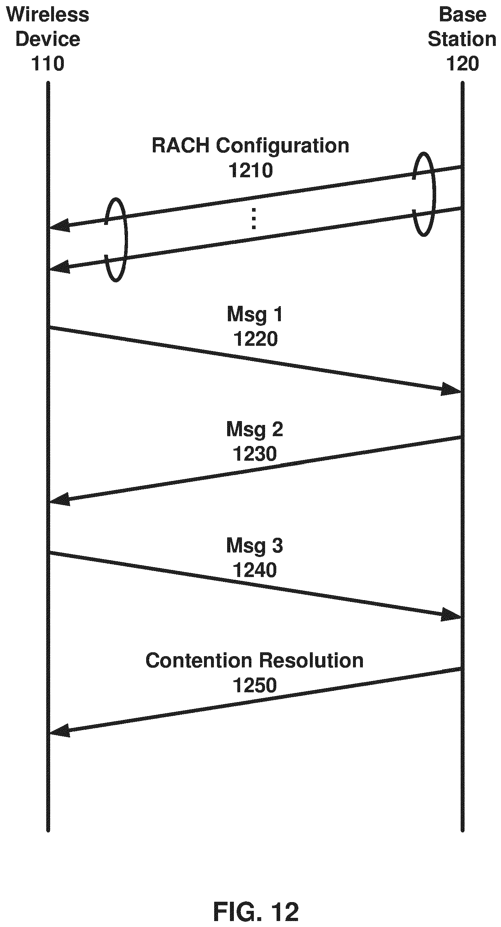

FIG. 12 is an example diagram of a random access procedure. One or more events may trigger a random access procedure. For example, one or more events may be at least one of following: initial access from RRC_IDLE, RRC connection re-establishment procedure, handover, DL or UL data arrival during RRC_CONNECTED when UL synchronization status is non-synchronized, transition from RRC_Inactive, and/or request for other system information. For example, a PDCCH order, a MAC entity, and/or a beam failure indication may initiate a random access procedure.

In an example embodiment, a random access procedure may be at least one of a contention based random access procedure and a contention free random access procedure. For example, a contention based random access procedure may comprise, one or more Msg 1 1220 transmissions, one or more Msg2 1230 transmissions, one or more Msg3 1240 transmissions, and contention resolution 1250. For example, a contention free random access procedure may comprise one or more Msg 1 1220 transmissions and one or more Msg2 1230 transmissions.

In an example, a base station may transmit (*e.g.,* unicast, multicast, or broadcast), to a UE, a RACH configuration 1210 via one or more beams. The RACH configuration 1210 may comprise one or more parameters indicating at least one of following: available set of PRACH resources for a transmission of a random access preamble, initial preamble power (*e.g.,* random access preamble initial received target power), an RSRP threshold for a selection of a SS block and corresponding PRACH resource, a power-ramping factor (*e.g.,* random access preamble power ramping step), random access preamble index, a maximum number of preamble transmission, preamble group A and group B, a threshold (*e.g.,* message size) to determine the groups of random access preambles, a set of one or more random access preambles for system information request and corresponding PRACH resource(s), if any, a set of one or more random access preambles for beam failure recovery request and corresponding PRACH resource(s), if any, a time window to monitor RA response(s), a time window to monitor response(s) on beam failure recovery request, and/or a contention resolution timer.

In an example, the Msg1 1220 may be one or more transmissions of a random access preamble. For a contention based random access procedure, a UE may select a SS block with a RSRP above the RSRP threshold. If random access preambles group B exists, a UE may select one or more random access preambles from a group A or a group B depending on a potential Msg3 1240 size. If a random access preambles group B does not exist, a UE may select the one or more random access preambles from a group A. A UE may select a random access preamble index randomly (*e.g*. with equal probability or a normal distribution) from one or more random access preambles associated with a selected group. If a base station semi-statistically configures a UE with an association between random access preambles and SS blocks, the UE may select a random access preamble index randomly with equal probability from one or more random access preambles associated with a selected SS block and a selected group.

For example, a UE may initiate a contention free random access procedure based on a beam failure indication from a lower layer. For example, a base station may semi-statistically configure a UE with one or more contention free PRACH resources for beam failure recovery request associated with at least one of SS blocks and/or CSI-RSs. If at least one of SS blocks with a RSRP above a first RSRP threshold amongst associated SS blocks or at least one of CSI-RSs with a RSRP above a second RSRP threshold amongst associated CSI-RSs is available, a UE may select a random access preamble index corresponding to a selected SS block or CSI-RS from a set of one or more random access preambles for beam failure recovery request.

For example, a UE may receive, from a base station, a random access preamble index via PDCCH or RRC for a contention free random access procedure. If a base station does not configure a UE with at least one contention free PRACH resource associated with SS blocks or CSI-RS, the UE may select a random access preamble index. If a base station configures a UE with one or more contention free PRACH resources associated with SS blocks and at least one SS block with a RSRP above a first RSRP threshold amongst associated SS blocks is available, the UE may select the at least one SS block and select a random access preamble corresponding to the at least one SS block. If a base station configures a UE with one or more contention free PRACH resources associated with CSI-RSs and at least one CSI-RS with a RSRP above a second RSPR threshold amongst the associated CSI-RSs is available, the UE may select the at least one CSI-RS and select a random access preamble corresponding to the at least one CSI-RS.

A UE may perform one or more Msg1 1220 transmissions by transmitting the selected random access preamble. For example, if a UE selects an SS block and is configured with an association between one or more PRACH occasions and one or more SS blocks, the UE may determine an PRACH occasion from one or more PRACH occasions corresponding to a selected SS block. For example, if a UE selects a CSI-RS and is configured with an association between one or more PRACH occasions and one or more CSI-RSs, the UE may determine a PRACH occasion from one or more PRACH occasions corresponding to a selected CSI-RS. A UE may transmit, to a base station, a selected random access preamble via a selected PRACH occasions. A UE may determine a transmit power for a transmission of a selected random access preamble at least based on an initial preamble power and a power-ramping factor. A UE may determine a RA-RNTI associated with a selected PRACH occasions in which a selected random access preamble is transmitted. For example, a UE may not determine a RA-RNTI for a beam failure recovery request. A UE may determine an RA-RNTI at least based on an index of a first OFDM symbol and an index of a first slot of a selected PRACH occasions, and/or an uplink carrier index for a transmission of Msg1 1220.

In an example, a UE may receive, from a base station, a random access response, Msg 2 1230. A UE may start a time window (*e.g., ra-ResponseWindow*) to monitor a random access response. For beam failure recovery request, a base station may configure a UE with a different time window (*e.g., bfr-ResponseWindow*) to monitor response on beam failure recovery request. For example, a UE may start a time window (*e.g., ra-ResponseWindow* or *bfr-ResponseWindow*) at a start of a first PDCCH occasion after a fixed duration of one or more symbols from an end of a preamble transmission. If a UE transmits multiple preambles, the UE may start a time window at a start of a first PDCCH occasion after a fixed duration of one or more symbols from an end of a first preamble transmission. A UE may monitor a PDCCH of a cell for at least one random access response identified by a RA-RNTI or for at least one response to beam failure recovery request identified by a C-RNTI while a timer for a time window is running.

In an example, a UE may consider a reception of random access response successful if at least one random access response comprises a random access preamble identifier corresponding to a random access preamble transmitted by the UE. A UE may consider the contention free random access procedure successfully completed if a reception of random access response is successful. If a contention free random access procedure is triggered for a beam failure recovery request, a UE may consider a contention free random access procedure successfully complete if a PDCCH transmission is addressed to a C-RNTI. In an example, if at least one random access response comprises a random access preamble identifier, a UE may consider the random access procedure successfully completed and may indicate a reception of an acknowledgement for a system information request to upper layers. If a UE has signaled multiple preamble transmissions, the UE may stop transmitting remaining preambles (if any) in response to a successful reception of a corresponding random access response.

In an example, a UE may perform one or more Msg 3 1240 transmissions in response to a successful reception of random access response (*e.g.,* for a contention based random access procedure). A UE may adjust an uplink transmission timing based on a timing advanced command indicated by a random access response and may transmit one or more transport blocks based on an uplink grant indicated by a random access response. Subcarrier spacing for PUSCH transmission for Msg3 1240 may be provided by at least one higher layer (*e.g.* RRC) parameter. A UE may transmit a random access preamble via PRACH and Msg3 1240 via PUSCH on a same cell. A base station may indicate an UL BWP for a PUSCH transmission of Msg3 1240 via system information block. A UE may employ HARQ for a retransmission of Msg 3 1240.

In an example, multiple UEs may perform Msg 1 1220 by transmitting a same preamble to a base station and receive, from the base station, a same random access response comprising an identity (*e.g.,* TC-RNTI). Contention resolution 1250 may ensure that a UE does not incorrectly use an identity of another UE. For example, contention resolution 1250 may be based on C-RNTI on PDCCH or a UE contention resolution identity on DL-SCH. For example, if a base station assigns a C-RNTI to a UE, the UE may perform contention resolution 1250 based on a reception of a PDCCH transmission that is addressed to the C-RNTI. In response to detection of a C-RNTI on a PDCCH, a UE may consider contention resolution 1250 successful and may consider a random access procedure successfully completed. If a UE has no valid C-RNTI, a contention resolution may be addressed by employing a TC-RNTI. For example, if a MAC PDU is successfully decoded and a MAC PDU comprises a UE contention resolution identity MAC CE that matches the CCCH SDU transmitted in Msg3 1250, a UE may consider the contention resolution 1250 successful and may consider the random access procedure successfully completed.

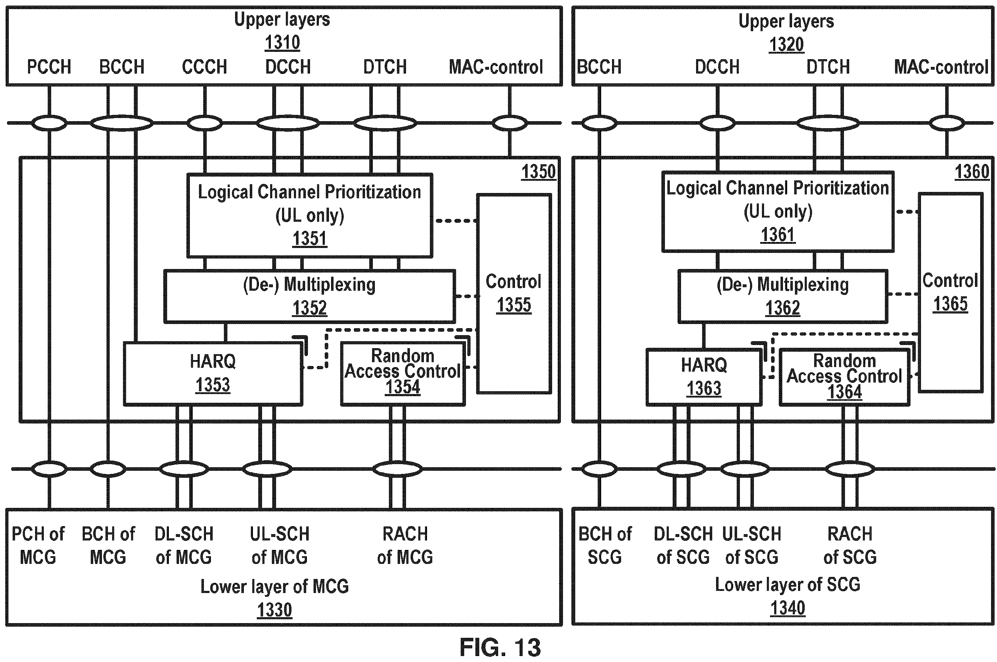

FIG. 13 is an example structure for MAC entities as per an aspect of an embodiment. In an example, a wireless device may be configured to operate in a multi-connectivity mode. A wireless device in RRC_CONNECTED with multiple RX/TX may be configured to utilize radio resources provided by multiple schedulers located in a plurality of base stations. The plurality of base stations may be connected via a non-ideal or ideal backhaul over the Xn interface. In an example, a base station in a plurality of base stations may act as a master base station or as a secondary base station. A wireless device may be connected to one master base station and one or more secondary base stations. A wireless device may be configured with multiple MAC entities, *e.g*. one MAC entity for master base station, and one or more other MAC entities for secondary base station(s). In an example, a configured set of serving cells for a wireless device may comprise two subsets: an MCG comprising serving cells of a master base station, and one or more SCGs comprising serving cells of a secondary base station(s). Figure 13 illustrates an example structure for MAC entities when MCG and SCG are configured for a wireless device.

In an example, at least one cell in a SCG may have a configured UL CC, wherein a cell of at least one cell may be called PSCell or PCell of SCG, or sometimes may be simply called PCell. A PSCell may be configured with PUCCH resources. In an example, when a SCG is configured, there may be at least one SCG bearer or one split bearer. In an example, upon detection of a physical layer problem or a random access problem on a PSCell, or upon reaching a number of RLC retransmissions associated with the SCG, or upon detection of an access problem on a PSCell during a SCG addition or a SCG change: an RRC connection re-establishment procedure may not be triggered, UL transmissions towards cells of an SCG may be stopped, a master base station may be informed by a UE of a SCG failure type and DL data transfer over a master base station may be maintained.

In an example, a MAC sublayer may provide services such as data transfer and radio resource allocation to upper layers (*e.g.* 1310 or 1320). A MAC sublayer may comprise a plurality of MAC entities (*e.g.* 1350 and 1360). A MAC sublayer may provide data transfer services on logical channels. To accommodate different kinds of data transfer services, multiple types of logical channels may be defined. A logical channel may support transfer of a particular type of information. A logical channel type may be defined by what type of information (*e.g.,* control or data) is transferred. For example, BCCH, PCCH, CCCH and DCCH may be control channels and DTCH may be a traffic channel. In an example, a first MAC entity (*e.g.* 1310) may provide services on PCCH, BCCH, CCCH, DCCH, DTCH and MAC control elements. In an example, a second MAC entity (*e.g.* 1320) may provide services on BCCH, DCCH, DTCH and MAC control elements.

A MAC sublayer may expect from a physical layer (*e.g.* 1330 or 1340) services such as data transfer services, signaling of HARQ feedback, signaling of scheduling request or measurements (*e.g*. CQI). In an example, in dual connectivity, two MAC entities may be configured for a wireless device: one for MCG and one for SCG. A MAC entity of wireless device may handle a plurality of transport channels. In an example, a first MAC entity may handle first transport channels comprising a PCCH of MCG, a first BCH of MCG, one or more first DL-SCHs of MCG, one or more first UL-SCHs of MCG and one or more first RACHs of MCG. In an example, a second MAC entity may handle second transport channels comprising a second BCH of SCG, one or more second DL-SCHs of SCG, one or more second UL-SCHs of SCG and one or more second RACHs of SCG.

In an example, if a MAC entity is configured with one or more SCells, there may be multiple DL-SCHs and there may be multiple UL-SCHs as well as multiple RACHs per MAC entity. In an example, there may be one DL-SCH and UL-SCH on a SpCell. In an example, there may be one DL-SCH, zero or one UL-SCH and zero or one RACH for an SCell. A DL-SCH may support receptions using different numerologies and/or TTI duration within a MAC entity. A UL-SCH may also support transmissions using different numerologies and/or TTI duration within the MAC entity.

In an example, a MAC sublayer may support different functions and may control these functions with a control (*e.g.* 1355 or 1365) element. Functions performed by a MAC entity may comprise mapping between logical channels and transport channels (*e.g.,* in uplink or downlink), multiplexing (*e.g*. 1352 or 1362) of MAC SDUs from one or different logical channels onto transport blocks (TB) to be delivered to the physical layer on transport channels (*e.g.,* in uplink), demultiplexing (*e.g*. 1352 or 1362) of MAC SDUs to one or different logical channels from transport blocks (TB) delivered from the physical layer on transport channels (*e.g.,* in downlink), scheduling information reporting (*e.g.,* in uplink), error correction through HARQ in uplink or downlink (*e.g.* 1363), and logical channel prioritization in uplink (*e.g.* 1351 or 1361). A MAC entity may handle a random access process (*e.g.* 1354 or 1364).

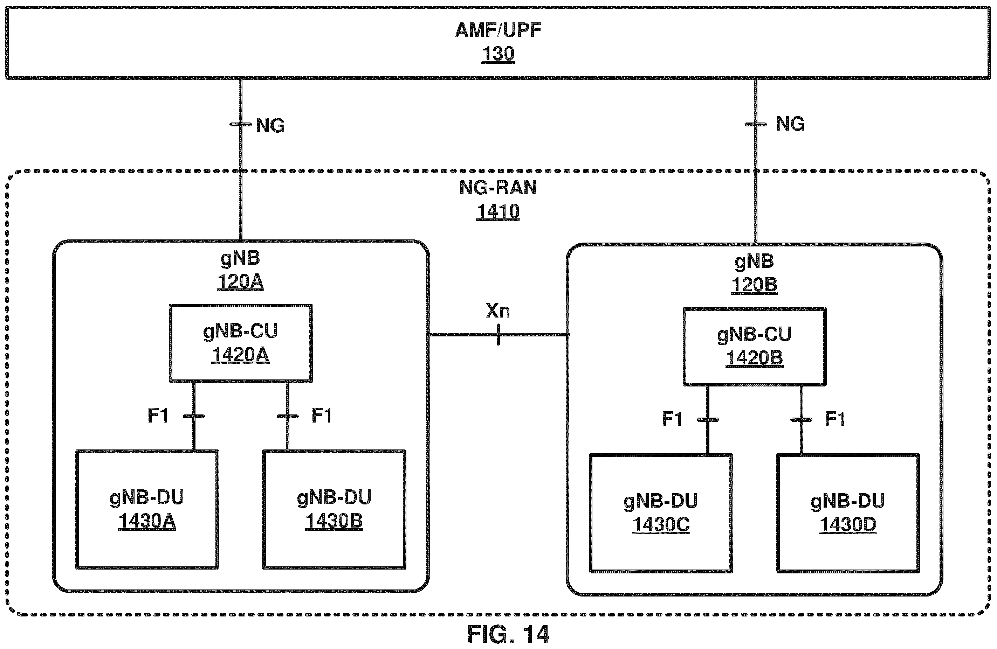

FIG. 14 is an example diagram of a RAN architecture comprising one or more base stations. In an example, a protocol stack (*e.g.* RRC, SDAP, PDCP, RLC, MAC, and PHY) may be supported at a node. A base station (*e.g*. gNB 120A or 120B) may comprise a base station central unit (CU) (*e.g.* gNB-CU 1420A or 1420B) and at least one base station distributed unit (DU) (*e.g.* gNB-DU 1430A, 1430B, 1430C, or 1430D) if a functional split is configured. Upper protocol layers of a base station may be located in a base station CU, and lower layers of the base station may be located in the base station DUs. An F1 interface (*e.g*. CU-DU interface) connecting a base station CU and base station DUs may be an ideal or non-ideal backhaul. F1-C may provide a control plane connection over an F1 interface, and F1-U may provide a user plane connection over the F1 interface. In an example, an Xn interface may be configured between base station CUs.

In an example, a base station CU may comprise an RRC function, an SDAP layer, and a PDCP layer, and base station DUs may comprise an RLC layer, a MAC layer, and a PHY layer. In an example, various functional split options between a base station CU and base station DUs may be possible by locating different combinations of upper protocol layers (RAN functions) in a base station CU and different combinations of lower protocol layers (RAN functions) in base station DUs. A functional split may support flexibility to move protocol layers between a base station CU and base station DUs depending on service requirements and/or network environments.

In an example, functional split options may be configured per base station, per base station CU, per base station DU, per UE, per bearer, per slice, or with other granularities. In per base station CU split, a base station CU may have a fixed split option, and base station DUs may be configured to match a split option of a base station CU. In per base station DU split, a base station DU may be configured with a different split option, and a base station CU may provide different split options for different base station DUs. In per UE split, a base station (base station CU and at least one base station DUs) may provide different split options for different wireless devices. In per bearer split, different split options may be utilized for different bearers. In per slice splice, different split options may be applied for different slices.

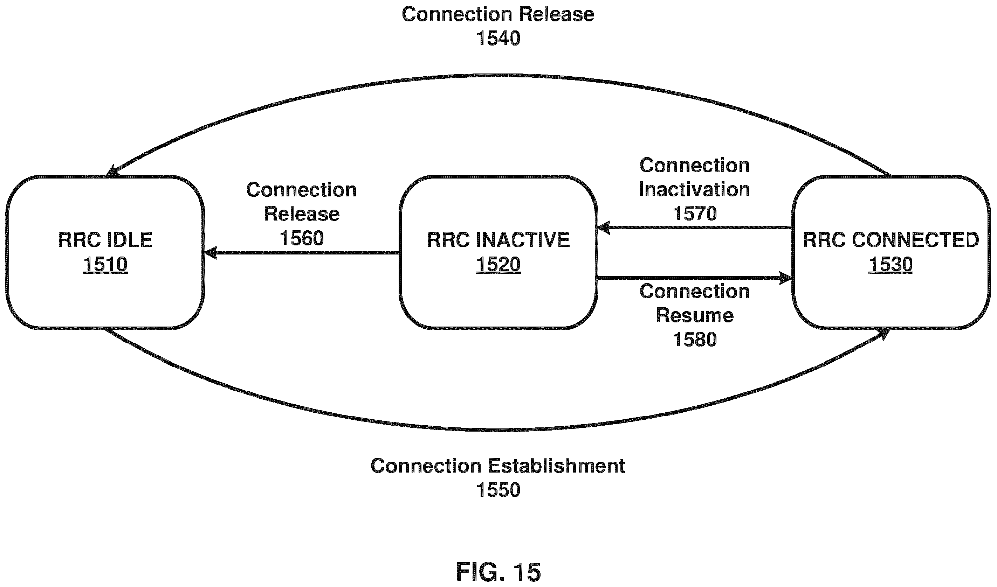

FIG. 15 is an example diagram showing RRC state transitions of a wireless device. In an example, a wireless device may be in at least one RRC state among an RRC connected state (*e.g.* RRC Connected 1530, RRC_Connected), an RRC idle state (*e.g.* RRC Idle 1510, RRC_Idle), and/or an RRC inactive state (*e.g.* RRC Inactive 1520, RRC_Inactive). In an example, in an RRC connected state, a wireless device may have at least one RRC connection with at least one base station (*e.g*. gNB and/or eNB), which may have a UE context of the wireless device. A UE context (*e.g.* a wireless device context) may comprise at least one of an access stratum context, one or more radio link configuration parameters, bearer (*e.g.* data radio bearer (DRB), signaling radio bearer (SRB), logical channel, QoS flow, PDU session, and/or the like) configuration information, security information, PHY/MAC/RLC/PDCP/SDAP layer configuration information, and/or the like configuration information for a wireless device. In an example, in an RRC idle state, a wireless device may not have an RRC connection with a base station, and a UE context of a wireless device may not be stored in a base station. In an example, in an RRC inactive state, a wireless device may not have an RRC connection with a base station. A UE context of a wireless device may be stored in a base station, which may be called as an anchor base station (*e.g*. last serving base station).

In an example, a wireless device may transition a UE RRC state between an RRC idle state and an RRC connected state in both ways (*e.g*. connection release 1540 or connection establishment 1550; or connection reestablishment) and/or between an RRC inactive state and an RRC connected state in both ways (*e.g*. connection inactivation 1570 or connection resume 1580). In an example, a wireless device may transition its RRC state from an RRC inactive state to an RRC idle state (*e.g*. connection release 1560).

In an example, an anchor base station may be a base station that may keep a UE context (a wireless device context) of a wireless device at least during a time period that a wireless device stays in a RAN notification area (RNA) of an anchor base station, and/or that a wireless device stays in an RRC inactive state. In an example, an anchor base station may be a base station that a wireless device in an RRC inactive state was lastly connected to in a latest RRC connected state or that a wireless device lastly performed an RNA update procedure in. In an example, an RNA may comprise one or more cells operated by one or more base stations. In an example, a base station may belong to one or more RNAs. In an example, a cell may belong to one or more RNAs.

In an example, a wireless device may transition a UE RRC state from an RRC connected state to an RRC inactive state in a base station. A wireless device may receive RNA information from the base station. RNA information may comprise at least one of an RNA identifier, one or more cell identifiers of one or more cells of an RNA, a base station identifier, an IP address of the base station, an AS context identifier of the wireless device, a resume identifier, and/or the like.

In an example, an anchor base station may broadcast a message (*e.g*. RAN paging message) to base stations of an RNA to reach to a wireless device in an RRC inactive state, and/or the base stations receiving the message from the anchor base station may broadcast and/or multicast another message (*e.g*. paging message) to wireless devices in their coverage area, cell coverage area, and/or beam coverage area associated with the RNA through an air interface.

In an example, when a wireless device in an RRC inactive state moves into a new RNA, the wireless device may perform an RNA update (RNAU) procedure, which may comprise a random access procedure by the wireless device and/or a UE context retrieve procedure. A UE context retrieve may comprise: receiving, by a base station from a wireless device, a random access preamble; and fetching, by a base station, a UE context of the wireless device from an old anchor base station. Fetching may comprise: sending a retrieve UE context request message comprising a resume identifier to the old anchor base station and receiving a retrieve UE context response message comprising the UE context of the wireless device from the old anchor base station.

In an example embodiment, a wireless device in an RRC inactive state may select a cell to camp on based on at least a on measurement results for one or more cells, a cell where a wireless device may monitor an RNA paging message and/or a core network paging message from a base station. In an example, a wireless device in an RRC inactive state may select a cell to perform a random access procedure to resume an RRC connection and/or to transmit one or more packets to a base station (*e.g.* to a network). In an example, if a cell selected belongs to a different RNA from an RNA for a wireless device in an RRC inactive state, the wireless device may initiate a random access procedure to perform an RNA update procedure. In an example, if a wireless device in an RRC inactive state has one or more packets, in a buffer, to transmit to a network, the wireless device may initiate a random access procedure to transmit one or more packets to a base station of a cell that the wireless device selects. A random access procedure may be performed with two messages (*e.g.* 2 stage random access) and/or four messages (*e.g*. 4 stage random access) between the wireless device and the base station.

In an example embodiment, a base station receiving one or more uplink packets from a wireless device in an RRC inactive state may fetch a UE context of a wireless device by transmitting a retrieve UE context request message for the wireless device to an anchor base station of the wireless device based on at least one of an AS context identifier, an RNA identifier, a base station identifier, a resume identifier, and/or a cell identifier received from the wireless device. In response to fetching a UE context, a base station may transmit a path switch request for a wireless device to a core network entity (*e.g.* AMF, MME, and/or the like). A core network entity may update a downlink tunnel endpoint identifier for one or more bearers established for the wireless device between a user plane core network entity (e.g. UPF, S-GW, and/or the like) and a RAN node (e.g*.* the base station), e.g. changing a downlink tunnel endpoint identifier from an address of the anchor base station to an address of the base station.

A gNB may communicate with a wireless device via a wireless network employing one or more new radio technologies. The one or more radio technologies may comprise at least one of: multiple technologies related to physical layer; multiple technologies related to medium access control layer; and/or multiple technologies related to radio resource control layer. Example embodiments of enhancing the one or more radio technologies may improve performance of a wireless network. Example embodiments may increase the system throughput, or data rate of transmission. Example embodiments may reduce battery consumption of a wireless device. Example embodiments may improve latency of data transmission between a gNB and a wireless device. Example embodiments may improve network coverage of a wireless network. Example embodiments may improve transmission efficiency of a wireless network.

A gNB may transmit one or more MAC PDUs to a wireless device. In an example, a MAC PDU may be a bit string that is byte aligned (e.g., a multiple of eight bits) in length. In an example, bit strings may be represented by tables in which the most significant bit is the leftmost bit of the first line of the table, and the least significant bit is the rightmost bit on the last line of the table. More generally, the bit string may be read from left to right and then in the reading order of the lines. In an example, the bit order of a parameter field within a MAC PDU is represented with the first and most significant bit in the leftmost bit and the last and least significant bit in the rightmost bit.

In an example, a MAC SDU may be a bit string that is byte aligned (e.g., a multiple of eight bits) in length. In an example, a MAC SDU may be included in a MAC PDU from the first bit onward.

In an example, a MAC CE may be a bit string that is byte aligned (e.g., a multiple of eight bits) in length.

In an example, a MAC subheader may be a bit string that is byte aligned (e.g., a multiple of eight bits) in length. In an example, a MAC subheader may be placed immediately in front of a corresponding MAC SDU, MAC CE, or padding.

In an example, a MAC entity may ignore a value of reserved bits in a DL MAC PDU.

In an example, a MAC PDU may comprise one or more MAC subPDUs. A MAC subPDU of the one or more MAC subPDUs may comprise: a MAC subheader only (including padding); a MAC subhearder and a MAC SDU; a MAC subheader and a MAC CE; and/or a MAC subheader and padding. In an example, the MAC SDU may be of variable size. In an example, a MAC subhearder may correspond to a MAC SDU, a MAC CE, or padding.

In an example, when a MAC subheader corresponds to a MAC SDU, a variable-sized MAC CE, or padding, the MAC subheader may comprise: an R field with a one bit length; an F field with a one bit length; an LCID field with a multi-bit length; and/or an L field with a multi-bit length.

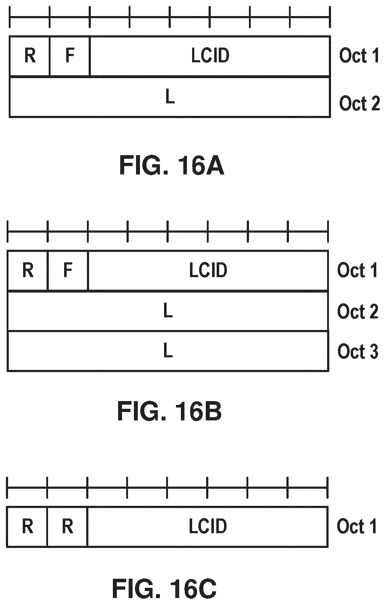

FIG. 16A shows an example of a MAC subheader with an R field, an F field, an LCID field, and an L field. In the example MAC subheader of FIG. 16A, the LCID field may be six bits in length, and the L field may be eight bits in length. FIG. 16B shows example of a MAC subheader with an R field, a F field, an LCID field, and an L field. In the example MAC subheader of FIG. 16B, the LCID field may be six bits in length, and the L field may be sixteen bits in length.

In an example, when a MAC subheader corresponds to a fixed sized MAC CE or padding, the MAC subheader may comprise: an R field with a two bit length and an LCID field with a multi-bit length. FIG. 16C shows an example of a MAC subheader with an R field and an LCID field. In the example MAC subheader of FIG. 16C, the LCID field may be six bits in length, and the R field may be two bits in length.

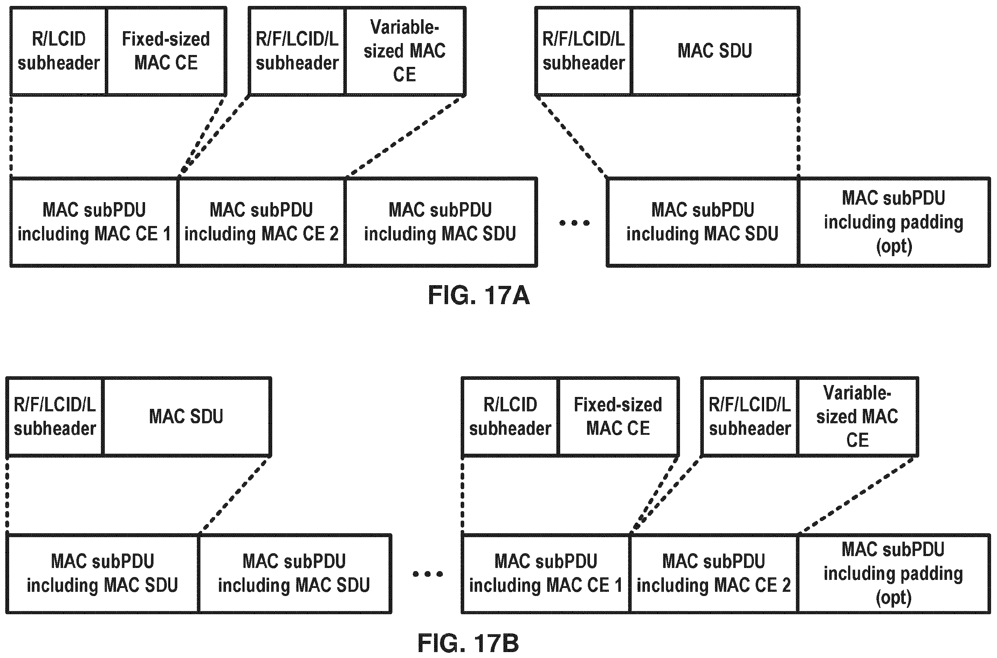

FIG. 17A shows an example of a DL MAC PDU. In the example of FIG. 17A, multiple MAC CEs, such as MAC CE 1 and 2, may be placed together. A MAC subPDU comprising a MAC CE may be placed before any MAC subPDU comprising a MAC SDU or a MAC subPDU comprising padding.

FIG. 17B shows an example of a UL MAC PDU. In the example of FIG. 17B, multiple MAC CEs, such as MAC CE 1 and 2, may be placed together. A MAC subPDU comprising a MAC CE may be placed after all MAC subPDUs comprising a MAC SDU. In addition, the MAC subPDU may be placed before a MAC subPDU comprising padding.

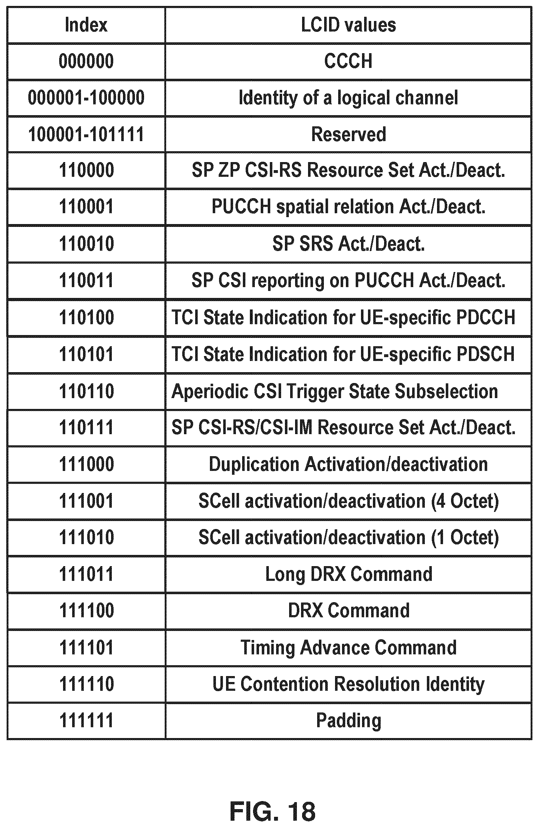

In an example, a MAC entity of a gNB may transmit one or more MAC CEs to a MAC entity of a wireless device. FIG. 18 shows an example of multiple LCIDs that may be associated with the one or more MAC CEs. In the example of FIG. 18, the one or more MAC CEs comprise at least one of: a SP ZP CSI-RS Resource Set Activation/Deactivation MAC CE; a PUCCH spatial relation Activation/Deactivation MAC CE; a SP SRS Activation/Deactivation MAC CE; a SP CSI reporting on PUCCH Activation/Deactivation MAC CE; a TCI State Indication for UE-specific PDCCH MAC CE; a TCI State Indication for UE-specific PDSCH MAC CE; an Aperiodic CSI Trigger State Subselection MAC CE; a SP CSI-RS/CSI-IM Resource Set Activation/Deactivation MAC CE; a UE contention resolution identity MAC CE; a timing advance command MAC CE; a DRX command MAC CE; a Long DRX command MAC CE; an SCell activation/deactivation MAC CE (1 Octet); an SCell activation/deactivation MAC CE (4 Octet); and/or a duplication activation/deactivation MAC CE. In an example, a MAC CE, such as a MAC CE transmitted by a MAC entity of a gNB to a MAC entity of a wireless device, may have an LCID in the MAC subheader corresponding to the MAC CE. Different MAC CE may have different LCID in the MAC subheader corresponding to the MAC CE. For example, an LCID given by 111011 in a MAC subheader may indicate that a MAC CE associated with the MAC subheader is a long DRX command MAC CE.

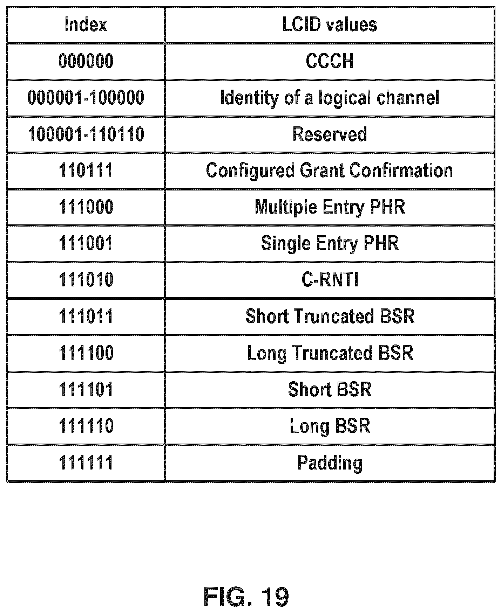

In an example, the MAC entity of the wireless device may transmit to the MAC entity of the gNB one or more MAC CEs. FIG. 19 shows an example of the one or more MAC CEs. The one or more MAC CEs may comprise at least one of: a short buffer status report (BSR) MAC CE; a long BSR MAC CE; a C-RNTI MAC CE; a configured grant confirmation MAC CE; a single entry PHR MAC CE; a multiple entry PHR MAC CE; a short truncated BSR; and/or a long truncated BSR. In an example, a MAC CE may have an LCID in the MAC subheader corresponding to the MAC CE. Different MAC CE may have different LCID in the MAC subheader corresponding to the MAC CE. For example, an LCID given by 111011 in a MAC subheader may indicate that a MAC CE associated with the MAC subheader is a short-truncated command MAC CE.

In carrier aggregation (CA), two or more component carriers (CCs) may be aggregated. A wireless device may simultaneously receive or transmit on one or more CCs, depending on capabilities of the wireless device, using the technique of CA. In an example, a wireless device may support CA for contiguous CCs and/or for non-contiguous CCs. CCs may be organized into cells. For example, CCs may be organized into one primary cell (PCell) and one or more secondary cells (SCells).

When configured with CA, a wireless device may have one RRC connection with a network. During an RRC connection establishment/re-establishment/handover, a cell providing NAS mobility information may be a serving cell. During an RRC connection re-establishment/handover procedure, a cell providing a security input may be a serving cell. In an example, the serving cell may denote a PCell. In an example, a gNB may transmit, to a wireless device, one or more messages comprising configuration parameters of a plurality of one or more SCells, depending on capabilities of the wireless device.

When configured with CA, a base station and/or a wireless device may employ an activation/deactivation mechanism of an SCell to improve battery or power consumption of the wireless device. When a wireless device is configured with one or more SCells, a gNB may activate or deactivate at least one of the one or more SCells. Upon configuration of an SCell, the SCell may be deactivated unless an SCell state associated with the SCell is set to "activated" or "dormant".

In an example, a wireless device may activate/deactivate an SCell in response to receiving an SCell Activation/Deactivation MAC CE.

In an example, a gNB may transmit, to a wireless device, one or more messages comprising an SCell timer (e.g., *sCellDeactivationTimer*). In an example, a wireless device may deactivate an SCell in response to an expiry of the SCell timer.

When a wireless device receives an SCell Activation/Deactivation MAC CE activating an SCell, the wireless device may activate the SCell. In response to the activating the SCell, the wireless device may perform operations comprising: SRS transmissions on the SCell; CQI/PMI/RI/CRI reporting for the SCell; PDCCH monitoring on the SCell; PDCCH monitoring for the SCell; and/or PUCCH transmissions on the SCell.

In an example, in response to the activating the SCell, the wireless device may start or restart a first SCell timer (e.g., *sCellDeactivationTimer*) associated with the SCell. The wireless device may start or restart the first SCell timer in the slot when the SCell Activation/Deactivation MAC CE activating the SCell has been received. In an example, in response to the activating the SCell, the wireless device may (re-)initialize one or more suspended configured uplink grants of a configured grant Type 1 associated with the SCell according to a stored configuration. In an example, in response to the activating the SCell, the wireless device may trigger PHR.

When a wireless device receives an SCell Activation/Deactivation MAC CE deactivating an activated SCell, the wireless device may deactivate the activated SCell. In an example, when a first SCell timer (e.g., *sCellDeactivationTimer*) associated with an activated SCell expires, the wireless device may deactivate the activated SCell. In response to the deactivating the activated SCell, the wireless device may stop the first SCell timer associated with the activated SCell. In an example, in response to the deactivating the activated SCell, the wireless device may clear one or more configured downlink assignments and/or one or more configured uplink grants of a configured uplink grant Type 2 associated with the activated SCell. In an example, in response to the deactivating the activated SCell, the wireless device may: suspend one or more configured uplink grants of a configured uplink grant Type 1 associated with the activated SCell; and/or flush HARQ buffers associated with the activated SCell.

In an example, when an SCell is deactivated, a wireless device may not perform operations comprising: transmitting SRS on the SCell; reporting CQI/PMI/RI/CRI for the SCell; transmitting on UL-SCH on the SCell; transmitting on RACH on the SCell; monitoring at least one first PDCCH on the SCell; monitoring at least one second PDCCH for the SCell; and/or transmitting a PUCCH on the SCell.

In an example, when at least one first PDCCH on an activated SCell indicates an uplink grant or a downlink assignment, a wireless device may restart a first SCell timer (e.g., *sCellDeactivationTimer*) associated with the activated SCell. In an example, when at least one second PDCCH on a serving cell (e.g. a PCell or an SCell configured with PUCCH, i.e. PUCCH SCell) scheduling the activated SCell indicates an uplink grant or a downlink assignment for the activated SCell, a wireless device may restart the first SCell timer (e.g., *sCellDeactivationTimer*) associated with the activated SCell.

In an example, when an SCell is deactivated, if there is an ongoing random access procedure on the SCell, a wireless device may abort the ongoing random access procedure on the SCell.

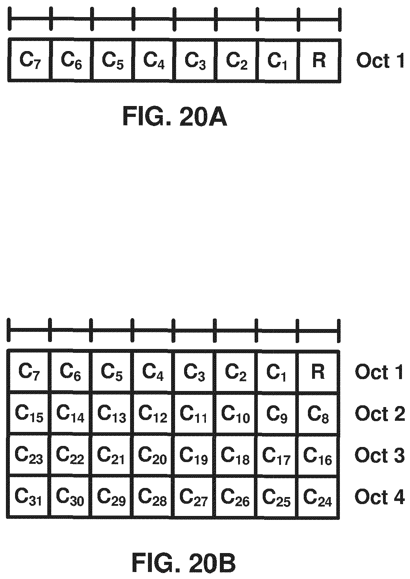

FIG. 20A shows an example of an SCell Activation/Deactivation MAC CE of one octet. A first MAC PDU subheader with a first LCID (e.g., '111010' as shown in FIG. 18) may identify the SCell Activation/Deactivation MAC CE of one octet. The SCell Activation/Deactivation MAC CE of one octet may have a fixed size. The SCell Activation/Deactivation MAC CE of one octet may comprise a single octet. The single octet may comprise a first number of C-fields (e.g. seven) and a second number of R-fields (e.g., one).

FIG. 20B shows an example of an SCell Activation/Deactivation MAC CE of four octets. A second MAC PDU subheader with a second LCID (e.g., '111001' as shown in FIG. 18) may identify the SCell Activation/Deactivation MAC CE of four octets. The SCell Activation/Deactivation MAC CE of four octets may have a fixed size. The SCell Activation/Deactivation MAC CE of four octets may comprise four octets. The four octets may comprise a third number of C-fields (e.g., 31) and a fourth number of R-fields (e.g., 1).

In FIG. 20A and/or FIG. 20B, a Cᵢ field may indicate an activation/deactivation status of an SCell with an SCell index i if an SCell with SCell index i is configured. In an example, when the Cᵢ field is set to one, an SCell with an SCell index i may be activated. In an example, when the Cᵢ field is set to zero, an SCell with an SCell index i may be deactivated. In an example, if there is no SCell configured with SCell index i, the wireless device may ignore the Cᵢ field. In FIG. 20A and FIG. 20B, an R field may indicate a reserved bit. The R field may be set to zero.

When configured with CA, a base station and/or a wireless device may employ a hibernation mechanism for an SCell to improve battery or power consumption of the wireless device and/or to improve latency of SCell activation/addition. When the wireless device hibernates the SCell, the SCell may be transitioned into a dormant state. In response to the SCell being transitioned into a dormant state, the wireless device may: stop transmitting SRS on the SCell; report CQI/PMI/RI/PTI/CRI for the SCell according to a periodicity configured for the SCell in a dormant state; not transmit on UL-SCH on the SCell; not transmit on RACH on the SCell; not monitor the PDCCH on the SCell; not monitor the PDCCH for the SCell; and/or not transmit PUCCH on the SCell. In an example, reporting CSI for an SCell and not monitoring the PDCCH on/for the SCell, when the SCell is in a dormant state, may provide the base station an always-updated CSI for the SCell. With the always-updated CSI, the base station may employ a quick and/or accurate channel adaptive scheduling on the SCell once the SCell is transitioned back into active state, thereby speeding up the activation procedure of the SCell. In an example, reporting CSI for the SCell and not monitoring the PDCCH on/for the SCell, when the SCell is in dormant state, may improve battery or power consumption of the wireless device, while still providing the base station timely and/or accurate channel information feedback. In an example, a PCell/PSCell and/or a PUCCH secondary cell may not be configured or transitioned into dormant state.

When configured with one or more SCells, a gNB may activate, hibernate, or deactivate at least one of the one or more SCells. In an example, a gNB may transmit one or more RRC messages comprising parameters indicating at least one SCell being set to an active state, a dormant state, or an inactive state, to a wireless device.

In an example, when an SCell is in an active state, the wireless device may perform: SRS transmissions on the SCell; CQI/PMI/RI/CRI reporting for the SCell; PDCCH monitoring on the SCell; PDCCH monitoring for the SCell; and/or PUCCH/SPUCCH transmissions on the SCell.

In an example, when an SCell is in an inactive state, the wireless device may: not transmit SRS on the SCell; not report CQI/PMI/RI/CRI for the SCell; not transmit on UL-SCH on the SCell; not transmit on RACH on the SCell; not monitor PDCCH on the SCell; not monitor PDCCH for the SCell; and/or not transmit PUCCH/SPUCCH on the SCell.

In an example, when an SCell is in a dormant state, the wireless device may: not transmit SRS on the SCell; report CQI/PMI/RI/CRI for the SCell; not transmit on UL-SCH on the SCell; not transmit on RACH on the SCell; not monitor PDCCH on the SCell; not monitor PDCCH for the SCell; and/or not transmit PUCCH/SPUCCH on the SCell.

When configured with one or more SCells, a gNB may activate, hibernate, or deactivate at least one of the one or more SCells. In an example, a gNB may transmit one or more MAC control elements comprising parameters indicating activation, deactivation, or hibernation of at least one SCell to a wireless device.

In an example, a gNB may transmit a first MAC CE (e.g., activation/deactivation MAC CE, as shown in FIG. 20A or FIG. 20B) indicating activation or deactivation of at least one SCell to a wireless device. In FIG. 20A and/or FIG. 20B, a Cᵢ field may indicate an activation/deactivation status of an SCell with an SCell index i if an SCell with SCell index i is configured. In an example, when the Cᵢ field is set to one, an SCell with an SCell index i may be activated. In an example, when the Cᵢ field is set to zero, an SCell with an SCell index i may be deactivated. In an example, if there is no SCell configured with SCell index i, the wireless device may ignore the Cᵢ field. In FIG. 20A and FIG. 20B, an R field may indicate a reserved bit. In an example, the R field may be set to zero.

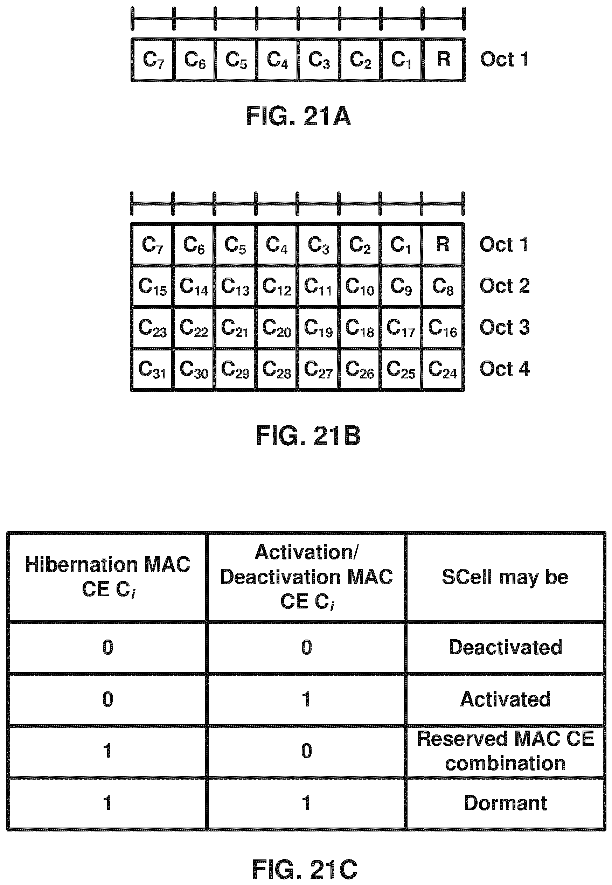

In an example, a gNB may transmit a second MAC CE (e.g., hibernation MAC CE) indicating activation or hibernation of at least one SCell to a wireless device. In an example, the second MAC CE may be associated with a second LCID different from a first LCID of the first MAC CE (e.g., activation/deactivation MAC CE). In an example, the second MAC CE may have a fixed size. In an example, the second MAC CE may consist of a single octet containing seven C-fields and one R-field. FIG. 21A shows an example of the second MAC CE with a single octet. In another example, the second MAC CE may consist of four octets containing 31 C-fields and one R-field. FIG. 21B shows an example of the second MAC CE with four octets. In an example, the second MAC CE with four octets may be associated with a third LCID different from the second LCID for the second MAC CE with a single octet, and/or the first LCID for activation/deactivation MAC CE. In an example, when there is no SCell with a serving cell index greater than 7, the second MAC CE of one octet may be applied, otherwise the second MAC CE of four octets may be applied.

In an example, when the second MAC CE is received, and the first MAC CE is not received, C*ᵢ* may indicate a dormant/activated status of an SCell with SCell index i if there is an SCell configured with SCell index i, otherwise the MAC entity may ignore the C*ᵢ* field. In an example, when C*ᵢ* is set to "1", the wireless device may transition an SCell associated with SCell index i into a dormant state. In an example, when C*ᵢ* is set to "0", the wireless device may activate an SCell associated with SCell index i. In an example, when C*ᵢ* is set to "0" and the SCell with SCell index i is in a dormant state, the wireless device may activate the SCell with SCell index *i.* In an example, when C*ᵢ* is set to "0" and the SCell with SCell index *i* is not in a dormant state, the wireless device may ignore the C*ᵢ* field.

In an example, when both the first MAC CE (activation/deactivation MAC CE) and the second MAC CE (hibernation MAC CE) are received, two C*ᵢ* fields of the two MAC CEs may indicate possible state transitions of the SCell with SCell index i if there is an SCell configured with SCell index i, otherwise the MAC entity may ignore the C*ᵢ* fields. In an example, the C*ᵢ* fields of the two MAC CEs may be interpreted according to FIG. 21C.

When configured with one or more SCells, a gNB may activate, hibernate, or deactivate at least one of the one or more SCells. In an example, a MAC entity of a gNB and/or a wireless device may maintain an SCell deactivation timer (e.g., *sCellDeactivationTimer)* per configured SCell (except the SCell configured with PUCCH/SPUCCH, if any) and deactivate the associated SCell upon its expiry.

In an example, a MAC entity of a gNB and/or a wireless device may maintain an SCell hibernation timer (e.g., *sCellHibernationTimer)* per configured SCell (except the SCell configured with PUCCH/SPUCCH, if any) and hibernate the associated SCell upon the SCell hibernation timer expiry if the SCell is in active state. In an example, when both the SCell deactivation timer and the SCell hibernation timer are configured, the SCell hibernation timer may take priority over the SCell deactivation timer. In an example, when both the SCell deactivation timer and the SCell hibernation timer are configured, a gNB and/or a wireless device may ignore the SCell deactivation timer regardless of the SCell deactivation timer expiry.

In an example, a MAC entity of a gNB and/or a wireless device may maintain a dormant SCell deactivation timer (e.g., *dormantSCellDeactivationTimer)* per configured SCell (except the SCell configured with PUCCH/SPUCCH, if any), and deactivate the associated SCell upon the dormant SCell deactivation timer expiry if the SCell is in dormant state.

In an example, when a MAC entity of a wireless device is configured with an activated SCell upon SCell configuration, the MAC entity may activate the SCell. In an example, when a MAC entity of a wireless device receives a MAC CE(s) activating an SCell, the MAC entity may activate the SCell. In an example, the MAC entity may start or restart the SCell deactivation timer associated with the SCell in response to activating the SCell. In an example, the MAC entity may start or restart the SCell hibernation timer (if configured) associated with the SCell in response to activating the SCell. In an example, the MAC entity may trigger PHR procedure in response to activating the SCell.

In an example, when a MAC entity of a wireless device receives a MAC CE(s) indicating deactivating an SCell, the MAC entity may deactivate the SCell. In an example, in response to receiving the MAC CE(s), the MAC entity may: deactivate the SCell; stop an SCell deactivation timer associated with the SCell; and/or flush all HARQ buffers associated with the SCell.

In an example, when an SCell deactivation timer associated with an activated SCell expires and an SCell hibernation timer is not configured, the MAC entity may: deactivate the SCell; stop the SCell deactivation timer associated with the SCell; and/or flush all HARQ buffers associated with the SCell.

In an example, when a first PDCCH on an activated SCell indicates an uplink grant or downlink assignment, or a second PDCCH on a serving cell scheduling an activated SCell indicates an uplink grant or a downlink assignment for the activated SCell, or a MAC PDU is transmitted in a configured uplink grant or received in a configured downlink assignment, the MAC entity may: restart the SCell deactivation timer associated with the SCell; and/or restart the SCell hibernation timer associated with the SCell if configured. In an example, when an SCell is deactivated, an ongoing random access procedure on the SCell may be aborted.

In an example, when a MAC entity is configured with an SCell associated with an SCell state set to dormant state upon the SCell configuration, or when the MAC entity receives MAC CE(s) indicating transitioning the SCell into a dormant state, the MAC entity may: transition the SCell into a dormant state; transmit one or more CSI reports for the SCell; stop an SCell deactivation timer associated with the SCell; stop an SCell hibernation timer associated with the SCell if configured; start or restart a dormant SCell deactivation timer associated with the SCell; and/or flush all HARQ buffers associated with the SCell. In an example, when the SCell hibernation timer associated with the activated SCell expires, the MAC entity may: hibernate the SCell; stop the SCell deactivation timer associated with the SCell; stop the SCell hibernation timer associated with the SCell; and/or flush all HARQ buffers associated with the SCell. In an example, when a dormant SCell deactivation timer associated with a dormant SCell expires, the MAC entity may: deactivate the SCell; and/or stop the dormant SCell deactivation timer associated with the SCell. In an example, when an SCell is in dormant state, ongoing random access procedure on the SCell may be aborted.

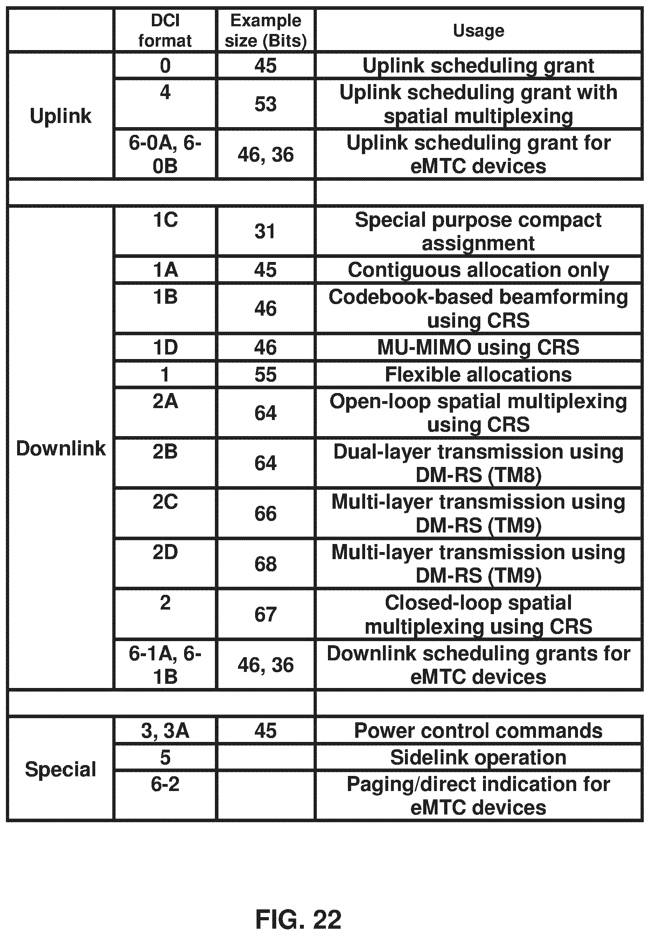

FIG. 22 shows DCI formats for an example of 20 MHz FDD operation with 2 Tx antennas at the base station and no carrier aggregation in an LTE system. In a NR system, the DCI formats may comprise at least one of: DCI format 0_0/0_1 indicating scheduling of PUSCH in a cell; DCI format 1_0/1_1 indicating scheduling of PDSCH in a cell; DCI format 2_0 notifying a group of UEs of slot format; DCI format 2_1 notifying a group of UEs of PRB(s) and OFDM symbol(s) where a UE may assume no transmission is intended for the UE; DCI format 2_2 indicating transmission of TPC commands for PUCCH and PUSCH; and/or DCI format 2_3 indicating transmission of a group of TPC commands for SRS transmission by one or more UEs. In an example, a gNB may transmit a DCI via a PDCCH for scheduling decision and power-control commends. More specifically, the DCI may comprise at least one of: downlink scheduling assignments, uplink scheduling grants, power-control commands. The downlink scheduling assignments may comprise at least one of: PDSCH resource indication, transport format, HARQ information, and control information related to multiple antenna schemes, a command for power control of the PUCCH used for transmission of ACK/NACK in response to downlink scheduling assignments. The uplink scheduling grants may comprise at least one of: PUSCH resource indication, transport format, and HARQ related information, a power control command of the PUSCH.

In an example, the different types of control information correspond to different DCI message sizes. For example, supporting spatial multiplexing with noncontiguous allocation of RBs in the frequency domain may require a larger scheduling message in comparison with an uplink grant allowing for frequency-contiguous allocation only. The DCI may be categorized into different DCI formats, where a format corresponds to a certain message size and usage.

In an example, a UE may monitor one or more PDCCH candidates to detect one or more DCI with one or more DCI format. The one or more PDCCH may be transmitted in common search space or UE-specific search space. A UE may monitor PDCCH with only a limited set of DCI format, to save power consumption. For example, a normal UE may not be required to detect a DCI with DCI format 6 which is used for an eMTC UE. The more DCI format to be detected, the more power be consumed at the UE.

In an example, the one or more PDCCH candidates that a UE monitors may be defined in terms of PDCCH UE-specific search spaces. A PDCCH UE-specific search space at CCE aggregation level *L* ∈ {1, 2, 4, 8} may be defined by a set of PDCCH candidates for CCE aggregation level *L .* In an example, for a DCI format, a UE may be configured per serving cell by one or more higher layer parameters a number of PDCCH candidates per CCE aggregation level *L .*

In an example, in non-DRX mode operation, a UE may monitor one or more PDCCH candidate in control resource set *q* according to a periodicity of *W*_{PDCCH, *q*} symbols that may be configured by one or more higher layer parameters for control resource set q .

In an example, the information in the DCI formats used for downlink scheduling may be organized into different groups, with the field present varying between the DCI formats, including at least one of: resource information, consisting of: carrier indicator (0 or 3bits), RB allocation; HARQ process number; MCS, NDI, and RV (for the first TB); MCS, NDI and RV (for the second TB); MIMO related information; PDSCH resource-element mapping and QCI; Downlink assignment index (DAI); TPC for PUCCH; SRS request (1bit), triggering one-shot SRS transmission; ACK/NACK offset; DCI format 0/1A indication, used to differentiate between DCI format 1A and 0; and padding if necessary. The MIMO related information may comprise at least one of: PMI, precoding information, transport block swap flag, power offset between PDSCH and reference signal, reference-signal scrambling sequence, number of layers, and/or antenna ports for the transmission.

In an example, the information in the DCI formats used for uplink scheduling may be organized into different groups, with the field present varying between the DCI formats, including at least one of: resource information, consisting of: carrier indicator, resource allocation type, RB allocation; MCS, NDI (for the first TB); MCS, NDI (for the second TB); phase rotation of the uplink DMRS; precoding information; CSI request, requesting an aperiodic CSI report; SRS request (2bit), used to trigger aperiodic SRS transmission using one of up to three preconfigured settings; uplink index/DAI; TPC for PUSCH; DCI format 0/1A indication; and padding if necessary.

In an example, a gNB may perform cyclic redundancy check (CRC) scrambling for a DCI, before transmitting the DCI via a PDCCH. The gNB may perform CRC scrambling by bitwise addition (or Modulo-2 addition or exclusive OR (XOR) operation) of multiple bits of at least one wireless device identifier (e.g., C-RNTI, CS-RNTI, TPC-CS-RNTI, TPC-PUCCH-RNTI, TPC-PUSCH-RNTI, SP CSI C-RNTI, SRS-TPC-RNTI, INT-RNTI, SFI-RNTI, P-RNTI, SI-RNTI, RA-RNTI, and/or MCS-C-RNTI) with the CRC bits of the DCI. The wireless device may check the CRC bits of the DCI, when detecting the DCI. The wireless device may receive the DCI when the CRC is scrambled by a sequence of bits that is the same as the at least one wireless device identifier.

In a NR system, in order to support wide bandwidth operation, a gNB may transmit one or more PDCCH in different control resource sets. A gNB may transmit one or more RRC message comprising configuration parameters of one or more control resource sets. At least one of the one or more control resource sets may comprise at least one of: a first OFDM symbol; a number of consecutive OFDM symbols; a set of resource blocks; a CCE-to-REG mapping; and a REG bundle size, in case of interleaved CCE-to-REG mapping.

A base station (gNB) may configure a wireless device (UE) with uplink (UL) bandwidth parts (BWPs) and downlink (DL) BWPs to enable bandwidth adaptation (BA) on a PCell. If carrier aggregation is configured, the gNB may further configure the UE with at least DL BWP(s) (i.e., there may be no UL BWPs in the UL) to enable BA on an SCell. For the PCell, an initial active BWP may be a first BWP used for initial access. For the SCell, a first active BWP may be a second BWP configured for the UE to operate on the SCell upon the SCell being activated.

In paired spectrum (e.g. FDD), a gNB and/or a UE may independently switch a DL BWP and an UL BWP. In unpaired spectrum (e.g. TDD), a gNB and/or a UE may simultaneously switch a DL BWP and an UL BWP.

In an example, a gNB and/or a UE may switch a BWP between configured BWPs by means of a DCI or a BWP inactivity timer. When the BWP inactivity timer is configured for a serving cell, the gNB and/or the UE may switch an active BWP to a default BWP in response to an expiry of the BWP inactivity timer associated with the serving cell. The default BWP may be configured by the network.

In an example, for FDD systems, when configured with BA, one UL BWP for each uplink carrier and one DL BWP may be active at a time in an active serving cell. In an example, for TDD systems, one DL/UL BWP pair may be active at a time in an active serving cell. Operating on the one UL BWP and the one DL BWP (or the one DL/UL pair) may improve UE battery consumption. BWPs other than the one active UL BWP and the one active DL BWP that the UE may work on may be deactivated. On deactivated BWPs, the UE may: not monitor PDCCH; and/or not transmit on PUCCH, PRACH, and UL-SCH.

In an example, a serving cell may be configured with at most a first number (e.g., four) of BWPs. In an example, for an activated serving cell, there may be one active BWP at any point in time.

In an example, a BWP switching for a serving cell may be used to activate an inactive BWP and deactivate an active BWP at a time. In an example, the BWP switching may be controlled by a PDCCH indicating a downlink assignment or an uplink grant. In an example, the BWP switching may be controlled by a BWP inactivity timer (e.g., *bwp-InactivityTimer).* In an example, the BWP switching may be controlled by a MAC entity in response to initiating a Random Access procedure. Upon addition of an SpCell or activation of an SCell, one BWP may be initially active without receiving a PDCCH indicating a downlink assignment or an uplink grant. The active BWP for a serving cell may be indicated by RRC and/or PDCCH. In an example, for unpaired spectrum, a DL BWP may be paired with a UL BWP, and BWP switching may be common for both UL and DL.

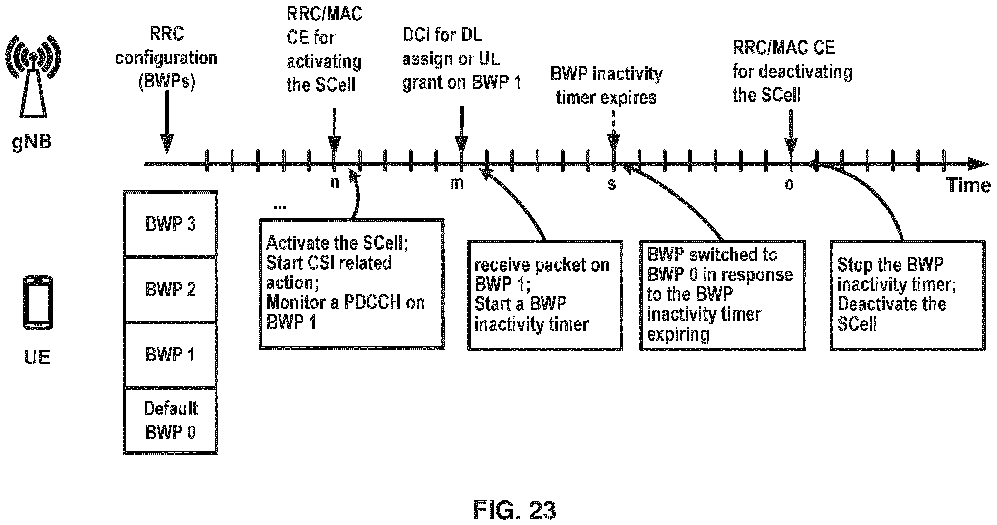

FIG. 23 shows an example of BWP switching on an SCell. In an example, a UE may receive RRC message comprising parameters of a SCell and one or more BWP configuration associated with the SCell. The RRC message may comprise: RRC connection reconfiguration message (e.g., *RRCReconfiguration);* RRC connection reestablishment message (e.g., *RRCRestablishment);* and/or RRC connection setup message (e.g., *RRCSetup).* Among the one or more BWPs, at least one BWP may be configured as the first active BWP (e.g., BWP 1 in FIG. 23), one BWP as the default BWP (e.g., BWP 0 in FIG. 23). The UE may receive a MAC CE to activate the SCell at n^{th} slot. The UE may start a SCell deactivation timer (e.g., *sCellDeactivationTimer),* and start CSI related actions for the SCell, and/or start CSI related actions for the first active BWP of the SCell. The UE may start monitoring a PDCCH on BWP 1 in response to activating the SCell.

In an example, the UE may start restart a BWP inactivity timer (e.g., *bwp-InactivityTimer)* at *m*^{th} slot in response to receiving a DCI indicating DL assignment on BWP 1. The UE may switch back to the default BWP (e.g., BWP 0) as an active BWP when the BWP inactivity timer expires, at *s*^{th} slot. The UE may deactivate the SCell and/or stop the BWP inactivity timer when the *sCellDeactivationTimer* expires.

Employing the BWP inactivity timer may further reduce UE's power consumption when the UE is configured with multiple cells with each cell having wide bandwidth (e.g., 1 GHz). The UE may only transmit on or receive from a narrow-bandwidth BWP (e.g., 5MHz) on the PCell or SCell when there is no activity on an active BWP.

In an example, a MAC entity may apply normal operations on an active BWP for an activated serving cell configured with a BWP comprising: transmitting on UL-SCH; transmitting on RACH; monitoring a PDCCH; transmitting PUCCH; receiving DL-SCH; and/or (re-) initializing any suspended configured uplink grants of configured grant Type 1 according to a stored configuration, if any.

In an example, on an inactive BWP for each activated serving cell configured with a BWP, a MAC entity may: not transmit on UL-SCH; not transmit on RACH; not monitor a PDCCH; not transmit PUCCH; not transmit SRS, not receive DL-SCH; clear any configured downlink assignment and configured uplink grant of configured grant Type 2; and/or suspend any configured uplink grant of configured Type 1.

In an example, if a MAC entity receives a PDCCH for a BWP switching of a serving cell while a Random Access procedure associated with this serving cell is not ongoing, a UE may perform the BWP switching to a BWP indicated by the PDCCH.

In an example, if a bandwidth part indicator field is configured in DCI format 1_1, the bandwidth part indicator field value may indicate the active DL BWP, from the configured DL BWP set, for DL receptions. In an example, if a bandwidth part indicator field is configured in DCI format 0_1, the bandwidth part indicator field value may indicate the active UL BWP, from the configured UL BWP set, for UL transmissions.

In an example, for a primary cell, a UE may be provided by a higher layer parameter Default-DL-BWP a default DL BWP among the configured DL BWPs. If a UE is not provided a default DL BWP by the higher layer parameter Default-DL-BWP, the default DL BWP is the initial active DL BWP.

In an example, a UE may be provided by higher layer parameter *bwp-InactivityTimer, a* timer value for the primary cell. If configured, the UE may increment the timer, if running, every interval of 1 millisecond for frequency range 1 or every 0.5 milliseconds for frequency range 2 if the UE may not detect a DCI format 1_1 for paired spectrum operation or if the UE may not detect a DCI format 1_1 or DCI format 0_1 for unpaired spectrum operation during the interval.

In an example, if a UE is configured for a secondary cell with higher layer parameter Default-DL-BWP indicating a default DL BWP among the configured DL BWPs and the UE is configured with higher layer parameter *bwp-InactivityTimer* indicating a timer value, the UE procedures on the secondary cell may be same as on the primary cell using the timer value for the secondary cell and the default DL BWP for the secondary cell.

In an example, if a UE is configured by higher layer parameter Active-BWP-DL-SCell a first active DL BWP and by higher layer parameter Active-BWP-UL-SCell a first active UL BWP on a secondary cell or carrier, the UE may use the indicated DL BWP and the indicated UL BWP on the secondary cell as the respective first active DL BWP and first active UL BWP on the secondary cell or carrier.

In an example, a wireless device may transmit one or more uplink control information (UCI) via one or more PUCCH resources to a base station. The one or more UCI may comprise at least one of: HARQ-ACK information; scheduling request (SR); and/or CSI report. In an example, a PUCCH resource may be identified by at least: frequency location (e.g., starting PRB); and/or a PUCCH format associated with initial cyclic shift of a base sequence and time domain location (e.g., starting symbol index). In an example, a PUCCH format may be PUCCH format 0, PUCCH format 1, PUCCH format 2, PUCCH format 3, or PUCCH format 4. A PUCCH format 0 may have a length of 1 or 2 OFDM symbols and be less than or equal to 2 bits. A PUCCH format 1 may occupy a number between 4 and 14 of OFDM symbols and be less than or equal to 2 bits. A PUCCH format 2 may occupy 1 or 2 OFDM symbols and be greater than 2 bits. A PUCCH format 3 may occupy a number between 4 and 14 of OFDM symbols and be greater than 2 bits. A PUCCH format 4 may occupy a number between 4 and 14 of OFDM symbols and be greater than 2 bits. The PUCCH resource may be configured on a PCell, or a PUCCH secondary cell.

In an example, when configured with multiple uplink BWPs, a base station may transmit to a wireless device, one or more RRC messages comprising configuration parameters of one or more PUCCH resource sets (e.g., at most 4 sets) on an uplink BWP of the multiple uplink BWPs. Each PUCCH resource set may be configured with a PUCCH resource set index, a list of PUCCH resources with each PUCCH resource being identified by a PUCCH resource identifier (e.g., *pucch-Resourceid),* and/or a maximum number of UCI information bits a wireless device may transmit using one of the plurality of PUCCH resources in the PUCCH resource set.

In an example, when configured with one or more PUCCH resource sets, a wireless device may select one of the one or more PUCCH resource sets based on a total bit length of UCI information bits (e.g., HARQ-ARQ bits, SR, and/or CSI) the wireless device will transmit. In an example, when the total bit length of UCI information bits is less than or equal to 2, the wireless device may select a first PUCCH resource set with the PUCCH resource set index equal to "0". In an example, when the total bit length of UCI information bits is greater than 2 and less than or equal to a first configured value, the wireless device may select a second PUCCH resource set with the PUCCH resource set index equal to "1". In an example, when the total bit length of UCI information bits is greater than the first configured value and less than or equal to a second configured value, the wireless device may select a third PUCCH resource set with the PUCCH resource set index equal to "2". In an example, when the total bit length of UCI information bits is greater than the second configured value and less than or equal to a third value (e.g., 1706), the wireless device may select a fourth PUCCH resource set with the PUCCH resource set index equal to "3".

In an example, a wireless device may determine, based on a number of uplink symbols of UCI transmission and a number of UCI bits, a PUCCH format from a plurality of PUCCH formats comprising PUCCH format 0, PUCCH format 1, PUCCH format 2, PUCCH format 3 and/or PUCCH format 4. In an example, the wireless device may transmit UCI in a PUCCH using PUCCH format 0 if the transmission is over 1 symbol or 2 symbols and the number of HARQ-ACK information bits with positive or negative SR (HARQ-ACK/SR bits) is 1 or 2. In an example, the wireless device may transmit UCI in a PUCCH using PUCCH format 1 if the transmission is over 4 or more symbols and the number of HARQ-ACK/SR bits is 1 or 2. In an example, the wireless device may transmit UCI in a PUCCH using PUCCH format 2 if the transmission is over 1 symbol or 2 symbols and the number of UCI bits is more than 2. In an example, the wireless device may transmit UCI in a PUCCH using PUCCH format 3 if the transmission is over 4 or more symbols, the number of UCI bits is more than 2 and PUCCH resource does not include an orthogonal cover code. In an example, the wireless device may transmit UCI in a PUCCH using PUCCH format 4 if the transmission is over 4 or more symbols, the number of UCI bits is more than 2 and the PUCCH resource includes an orthogonal cover code.

In an example, in order to transmit HARQ-ACK information on a PUCCH resource, a wireless device may determine the PUCCH resource from a PUCCH resource set. The PUCCH resource set may be determined as mentioned above. The wireless device may determine the PUCCH resource based on a PUCCH resource indicator field in a DCI (e.g., with a DCI format 1_0 or DCI for 1_1) received on a PDCCH. A 3-bit PUCCH resource indicator field in the DCI may indicate one of eight PUCCH resources in the PUCCH resource set. The wireless device may transmit the HARQ-ACK information in a PUCCH resource indicated by the 3-bit PUCCH resource indicator field in the DCI.

In an example, the wireless device may transmit one or more UCI bits via a PUCCH resource of an active uplink BWP of a PCell or a PUCCH secondary cell. Since at most one active uplink BWP in a cell is supported for a wireless device, the PUCCH resource indicated in the DCI is naturally a PUCCH resource on the active uplink BWP of the cell.

In an example, DRX operation may be used by a wireless device (UE) to improve UE battery lifetime. In an example, in DRX, UE may discontinuously monitor downlink control channel, e.g., PDCCH or EPDCCH. In an example, the base station may configure DRX operation with a set of DRX parameters, e.g., using RRC configuration. The set of DRX parameters may be selected based on the application type such that the wireless device may reduce power and resource consumption. In an example, in response to DRX being configured/activated, a UE may receive data packets with an extended delay, since the UE may be in DRX Sleep/Off state at the time of data arrival at the UE and the base station may wait until the UE transitions to the DRX ON state.

In an example, during a DRX mode, the UE may power down most of its circuitry when there are no packets to be received. The UE may monitor PDCCH discontinuously in the DRX mode. The UE may monitor the PDCCH continuously when a DRX operation is not configured. During this time the UE listens to the downlink (DL) (or monitors PDCCHs) which is called DRX Active state. In a DRX mode, a time during which UE doesn't listen/monitor PDCCH is called DRX Sleep state.

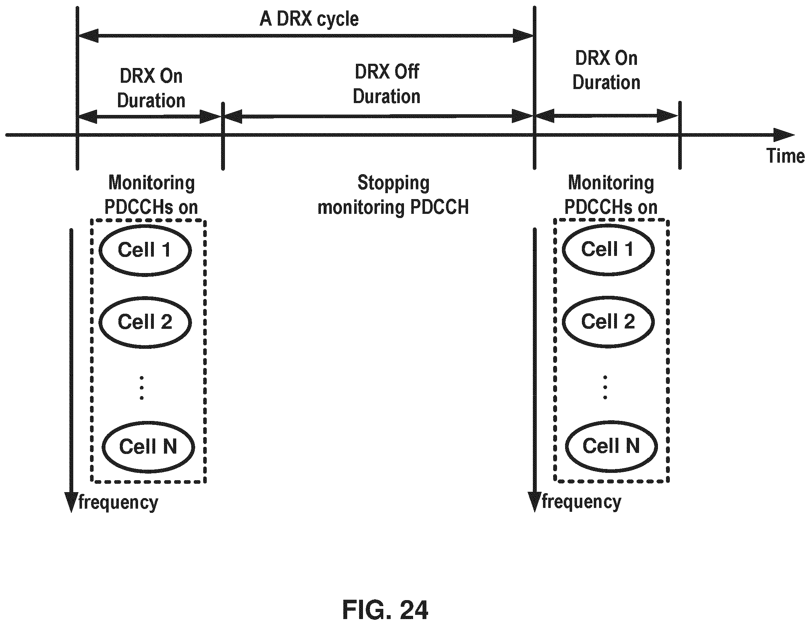

FIG. 24 shows an example of the embodiment. A gNB may transmit an RRC message comprising one or more DRX parameters of a DRX cycle. The one or more parameters may comprise a first parameter and/or a second parameter. The first parameter may indicate a first time value of the DRX Active state (e.g., DRX On duration) of the DRX cycle. The second parameter may indicate a second time of the DRX Sleep state (e.g., DRX Off duration) of the DRX cycle. The one or more parameters may further comprise a time duration of the DRX cycle. During the DRX Active state, the UE may monitor PDCCHs for detecting one or more DCIs on a serving cell. During the DRX Sleep state, the UE may stop monitoring PDCCHs on the serving cell. When multiple cells are in active state, the UE may monitor all PDCCHs on (or for) the multiple cells during the DRX Active state. During the DRX off duration, the UE may stop monitoring all PDCCH on (or for) the multiple cells. The UE may repeat the DRX operations according to the one or more DRX parameters.

In an example, DRX may be beneficial to the base station. In an example, if DRX is not configured, the wireless device may be transmitting periodic CSI and/or SRS frequently (e.g., based on the configuration). With DRX, during DRX OFF periods, the UE may not transmit periodic CSI and/or SRS. The base station may assign these resources to the other UEs to improve resource utilization efficiency.

In an example, the MAC entity may be configured by RRC with a DRX functionality that controls the UE's downlink control channel (e.g., PDCCH) monitoring activity for a plurality of RNTIs for the MAC entity. The plurality of RNTIs may comprise at least one of: C-RNTI; CS-RNTI; INT-RNTI; SP-CSI-RNTI; SFI-RNTI; TPC-PUCCH-RNTI; TPC-PUSCH-RNTI; Semi-Persistent Scheduling C-RNTI; eIMTA-RNTI; SL-RNTI; SL-V-RNTI; CC-RNTI; or SRS-TPC-RNTI. In an example, in response to being in RRC_CONNECTED, if DRX is configured, the MAC entity may monitor the PDCCH discontinuously using the DRX operation; otherwise the MAC entity may monitor the PDCCH continuously.

In an example, RRC may control DRX operation by configuring a plurality of timers. The plurality of timers may comprise: a DRX On duration timer (e.g., *drx-onDurationTimer); a* DRX inactivity timer (e.g., *drx-InactivityTimer);* a downlink DRX HARQ RTT timer (e.g., *drx-HARQ-RTT-TimerDL);* an uplink DRX HARQ RTT Timer (e.g., *drx-HARQ-RTT-TimerUL*); *a* downlink retransmission timer (e.g., *drx-RetransmissionTimerDL*); an uplink retransmission timer (e.g., *drx-RetransmissionTimerUL*); one or more parameters of a short DRX configuration (e.g., *drx-ShortCycle* and/or *drx-ShortCycleTimer*)) and one or more parameters of a long DRX configuration (e.g., *drx*-*LongCycle*). In an example, time granularity for DRX timers may be in terms of PDCCH subframes (e.g., indicated as psf in the DRX configurations), or in terms of milliseconds.

In an example, in response to a DRX cycle being configured, the Active Time may include the time while at least one timer is running. The at least one timer may comprise *drx-onDurationTimer, drx-InactivityTimer, drx-RetransmissionTimerDL, drx-RetransmissionTimerUL,* or *mac-ContentionResolutionTimer.*

In an example, *drx-Inactivity-Timer* may specify a time duration for which the UE may be active after successfully decoding a PDCCH indicating a new transmission (UL or DL or SL). In an example, this timer may be restarted upon receiving PDCCH for a new transmission (UL or DL or SL). In an example, the UE may transition to a DRX mode (e.g., using a short DRX cycle or a long DRX cycle) in response to the expiry of this timer.

In an example, *drx-ShortCycle* may be a first type of DRX cycle (e.g., if configured) that needs to be followed when UE enters DRX mode. In an example, a DRX-Config IE indicates the length of the short cycle.

In an example, *drx-ShortCycleTimer* may be expressed as multiples of shortDRX-Cycle. The timer may indicate the number of initial DRX cycles to follow the short DRX cycle before entering the long DRX cycle.

In an example, *drx-onDurationTimer* may specify the time duration at the beginning of a DRX Cycle (e.g., DRX ON). In an example, *drx-onDurationTimer* may indicate the time duration before entering the sleep mode (DRX OFF).

In an example, *drx-HARQ-RTT-TimerDL* may specify a minimum duration from the time new transmission is received and before the UE may expect a retransmission of a same packet. In an example, this timer may be fixed and may not be configured by RRC.

In an example, *drx-RetransmissionTimerDL* may indicate a maximum duration for which UE may be monitoring PDCCH when a retransmission from the eNodeB is expected by the UE.

In an example, in response to a DRX cycle being configured, the Active Time may comprise the time while a Scheduling Request is sent on PUCCH and is pending.

In an example, in response to a DRX cycle being configured, the Active Time may comprise the time while an uplink grant for a pending HARQ retransmission can occur and there is data in the corresponding HARQ buffer for synchronous HARQ process.

In an example, in response to a DRX cycle being configured, the Active Time may comprise the time while a PDCCH indicating a new transmission addressed to the C-RNTI of the MAC entity has not been received after successful reception of a Random Access Response for the preamble not selected by the MAC entity.

In an example, DRX may be configured for a wireless device. A DL HARQ RTT Timer may expire in a subframe and the data of the corresponding HARQ process may not be successfully decoded. The MAC entity may start the *drx-RetransmissionTimerDL* for the corresponding HARQ process.

In an example, DRX may be configured for a wireless device. An UL HARQ RTT Timer may expire in a subframe. The MAC entity may start the *drx-RetransmissionTimerUL* for the corresponding HARQ process.

In an example, DRX may be configured for a wireless device. A DRX Command MAC control element or a Long DRX Command MAC control element may be received. The MAC entity may stop *drx-onDurationTimer* and stop *drx-InactivityTimer.*

In an example, DRX may be configured for a wireless device. In an example, *drx-InactivityTimer* may expire or a DRX Command MAC control element may be received in a subframe. In an example, in response to Short DRX cycle being configured, the MAC entity may start or restart *drx-ShortCycleTimer* and may use Short DRX Cycle. Otherwise, the MAC entity may use the Long DRX cycle.

In an example, DRX may be configured for a wireless device. In an example, *drx-ShortCycleTimer* may expire in a subframe. The MAC entity may use the Long DRX cycle.

In an example, DRX may be configured for a wireless device. In an example, a Long DRX Command MAC control element may be received. The MAC entity may stop *drx-ShortCycleTimer* and may use the Long DRX cycle.

In an example, DRX may be configured for a wireless device. In an example, if the Short DRX Cycle is used and [(SFN * 10) + subframe number] modulo *(drx-ShortCycle) =* (*drxStartOffset*) modulo (*drx-ShortCycle*), the wireless device may start *drx-onDurationTimer.*

In an example, DRX may be configured for a wireless device. In an example, if the Long DRX Cycle is used and [(SFN * 10) + subframe number] modulo (*drx-longCycle*) = *drxStartOffset,* the wireless device may start *drx-onDurationTimer.*

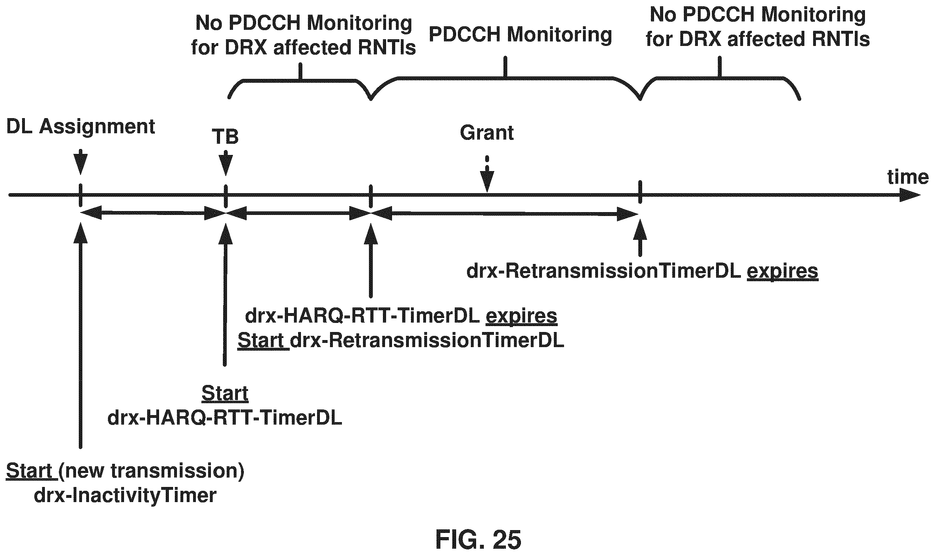

FIG. 25 shows example of DRX operation in a legacy system. A base station may transmit an RRC message comprising configuration parameters of DRX operation. A base station may transmit to a UE, a first DCI via a PDCCH for assignment of downlink resources. The UE may start the *drx-InactivityTimer* during which, the UE may monitor the PDCCH and/or receiving a transport block (TB) on the downlink resources. After receiving the TB, the UE may start a HARQ RTT Timer (e.g., *drx-HARQ-RTT-TimerDL*), during which, the UE may stop monitoring the PDCCH. The UE may transmit a NACK to the base station upon unsuccessful receiving the TB. When the HARQ RTT Timer expires, the UE may monitor the PDCCH and start a HARQ retransmission timer (e.g., *drx-RetransmissionTimerDL*). When the HARQ retransmission timer is running, the UE may receive a second DCI indicating a DL grant for the retransmission of the TB. If not receiving the second DCI before the HARQ retransmission timer expires, the UE may stop monitoring the PDCCH.

Similarly, for uplink transmission, the base station may transmit a first DCI for an uplink grant via a PDCCH, to the UE. The UE may start the *drx-InactivityTimer* during which, the UE may monitor the PDCCH. After transmitting a TB via the uplink grant, the UE may start a HARQ RTT Timer (e.g., *drx-HARQ-RTT-TimerUL*), during which, the UE may stop monitoring the PDCCH. The base station may transmit a NACK to the UE upon unsuccessful receiving the TB. When the HARQ RTT Timer (e.g., *drx-HARQ-RTT-TimerUL*) expires, the UE may start a HARQ retransmission timer (e.g., *drx-RetransmissionTimerUL*) and monitor the PDCCH for the NACK. When the HARQ retransmission timer is running, the UE may receive a second DCI indicating an uplink grant for the retransmission of the TB. If not receiving the second DCI before the HARQ retransmission timer expires, the UE may stop monitoring the PDCCH.

In an example, a wireless device may receive an uplink grant dynamically on a PDCCH or in a random access response (RAR). The wireless device may receive an uplink grant configured semi-persistently by a radio resource control (RRC) message. The wireless device may transmit, via the uplink grant, an uplink transport block (TB) on an uplink shared channel (UL-SCH). To transmit the uplink transport block, a medium access control (MAC) layer of the wireless device may receive one or more HARQ information from lower layers (e.g., physical layer) of the wireless device. The one or more HARQ information may comprise at least one of: HARQ process identifier (ID); new data indicator (NDI); redundancy version (RV); and/or transport block size (TBS).

In an example, if a MAC entity of a wireless device has a C-RNTI, a Temporary C-RNTI (TC-RNTI), or a configured scheduling RNTI (CS-RNTI), for each PDCCH occasion and for each serving cell belonging to a time alignment group (TAG) that has a running *timeAlignmentTimer* and for each uplink grant received for the PDCCH occasion, if the uplink grant for the serving Cell has been received on the PDCCH for the MAC entity's C-RNTI or TC-RNTI, the MAC entity may deliver the uplink grant and one or more associated HARQ information to the HARQ entity.

In an example, a MAC entity of a wireless device may comprise a HARQ enity for each serving cell with configured uplink (e.g., comprising a case when the wireless device is configured with a supplementary uplink). The HARQ entity may mantain a number of parallel HARQ processes. Each HARQ process of the number of parallel HARQ processes may support one TB, and the HARQ process may be associated with a HARQ process identifier (ID). For UL transmission with UL grant in RA Response, HARQ process identifier 0 may be used.

In an example, when a MAC entity of a wireless device is configured with PUSCH repetition (e.g., *pusch-AggregationFactor >* 1), the parameter *pusch-AggregationFactor* may provide a number of transmissions of a TB within a bundle of a dynamic grant. After the initial transmission, *pusch-AggregationFactor -* 1 HARQ retransmissions may follow within a bundle. When the MAC entity is configured with *repK >* 1, the parameter *repK* may provide a number of transmissions of a TB within a bundle of a configured uplink grant. After the initial transmission, HARQ retransmissions may follow within a bundle. For both dynamic grant and configured uplink grant, bundling operation may rely on the HARQ entity for invoking the same HARQ process for each transmission that is part of the same bundle. Within a bundle, HARQ retransmissions may be triggered without waiting for feedback from previous transmission according to *pusch-AggregationFactor* for the dynamic grant and *repK* for the configured uplink grant, respectively. Each transmission within a bundle may be a separate uplink grant after the initial uplink grant within a bundle is delivered to the HARQ entity.

In an example, for each transmission within a bundle of a dynamic grant, a sequence of redundancy versions may be determined based on one or more fields of a DCI carrying the dynamic grant. For each transmission within a bundle of a configured uplink grant, a sequence of redundancy versions may be determined based on one or more configuration parameters in a RRC message.

In an example, for an uplink grant, a HARQ entity of a wireless device may identify a HARQ process associated with the uplink grant. For the identified HARQ process, if the received uplink grant is not addressed to a TC-RNTI on PDCCH, and an NDI provided in the associated HARQ information has been toggled compared to an NDI value in the previous transmission of the TB of the HARQ process, the HARQ entity may obtain a MAC PDU to transmit from a multiplexing and assembly entity. In response to obtaining the MAC PDU, the HARQ entity may deliver the MAC PDU, the uplink grant, and the HARQ information of the TB to the identified HARQ processand instruct the identified HARQ process to trigger a new transmission. In an example, for the identified HARQ process, if the received uplink grant is addressed to a TC-RNTI on PDCCH, or the NDI provided in the associated HARQ information has not been toggled compared to the NDI value in the previous transmission of the TB of the HARQ process, the HARQ entity may deliver the uplink grant and the HARQ information (e.g., redundancy version) of the TB to the identified HARQ process, and instruct the identified HARQ process to trigger a retransmission.

In an example, a HARQ process may be associated with a HARQ buffer. A wireless device may perform a new transmission on a resource and with a modulation coding scheme (MCS) indicated on either a PDCCH, a RAR, or a RRC message. In an example, the wireless device may perform a retransmsiison on a resource and (if provided) with a MCS indicated on PDCCH, or on a same resource and with a same MCS as was used for last made transmission attempt within a bundle.

In an example, if a HARQ entity requests a new transmission of a TB, a HARQ process may store the MAC PDU in an associated HARQ buffer, store the uplink grant received from the HARQ entity, and generate a transmission for the TB. If the HARQ entity requests a retransmission for a TB, the HARQ process may store the uplink grant received from the HARQ entity and generate a transmission for the TB. In an example, to generate a transmission for a TB, the HARQ process may instruct the physical layer to generate a transmission according to the stored uplink grant if the MAC PDU was obtained from a Msg3 buffer or if there is no measurement gap at the time of the transmission and, in case of retransmission, if the retransmission does not collide with a transmission for the MAC PDU obtained from the Msg3 buffer.

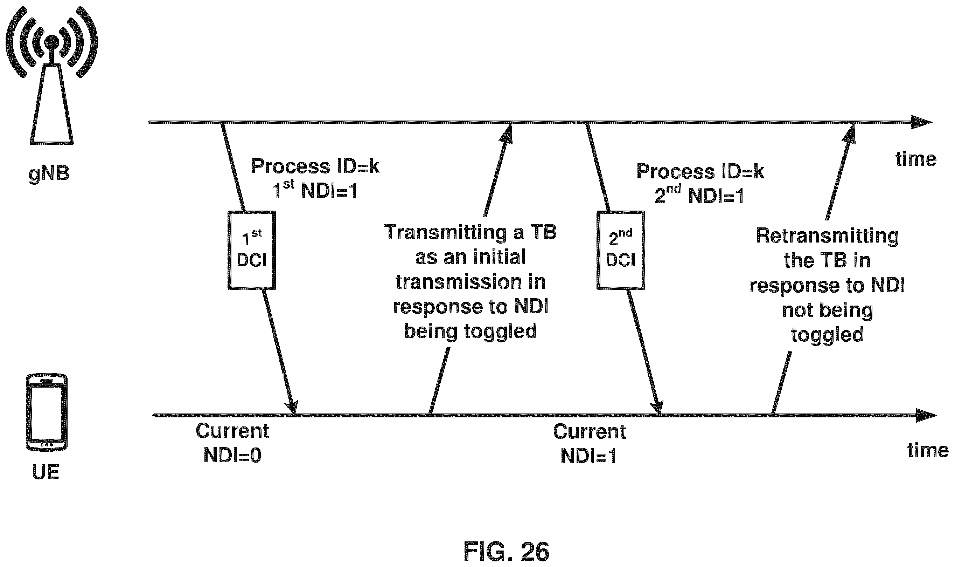

FIG. 26 shows an example of uplink TB retransmission mechansim based on HARQ procedure. In an example, a base station (e.g., gNB in FIG. 26) may transmit to a wireless device (e.g., UE in FIG. 26), a first downlink control information (DCI) comprising an uplink grant and one or more more HARQ information. The one or more HARQ information may comprise a HARQ process ID (e.g., Process ID=k as shown in FIG. 26), a first NDI value (e.g., 1^{st} NDI=1). The UE, before receiving the first DCI, may have a current NDI value (e.g., Current NDI=0 as shown in FIG. 26). In response to receiving the first DCI, the UE may determine that the first NDI has been toggled in response to the first NDI value (1) being different from the current NDI vlaue (0). In response to the first NDI being toggled, a HARQ entity of the wireless device may obtain a MAC PDU from a multiplexing and assembly entitiy of the wireless device. The HARQ entity may deliver the MAC PDU, the uplink grant, and the one or more HARQ information to a HARQ process, where the HARQ process is identifed by the HARQ proess ID (e.g., Process ID=k as shown in FIG. 26). The HARQ entity may instruct the HARQ process to trigger a new transmission for a TB comprising the MAC PDU. The HARQ process may store the MAC PDU in an associated HARQ buffer and store the uplink grant. The HARQ process may instruct a physical layer of the wireless device to generate a new transmission for the TB according to the stored uplink grant. As shown in FIG. 26, the physical layer may transmit the TB according to the stored uplink grant. In an example, the gNB may provide a subsequent uplink grant to the UE for a retransmission of the TB when the gNB does not successfully receive the TB transmitted by the UE. The gNB may transmit a second DCI indicating the retransmission, where the second DCI comprises a same HARQ process ID as the first HARQ process ID, a second uplink grant, a RV value, and a second NDI value (e.g., 2^{nd} NDI=1). The UE may determine the second NDI is not toggled in response to the second NDI value (1) being equal to the first NDI value (1), which is now the new Current NDI value. In response to the second NDI not being toggled, the HARQ entity may deliver, to a HARQ process identified by the HARQ process ID=k, the second uplink grant and the RV value, and the HARQ entity may intruct the HARQ process to trigger a retransmission of the TB. The HARQ process may store the second uplink grant. The HARQ process may instruct the physical layer of the wireless device to generate a retransmission for the TB according to the second uplink grant. As shown in FIG. 26, the physical layer may retransmit the TB according to the second uplink grant.

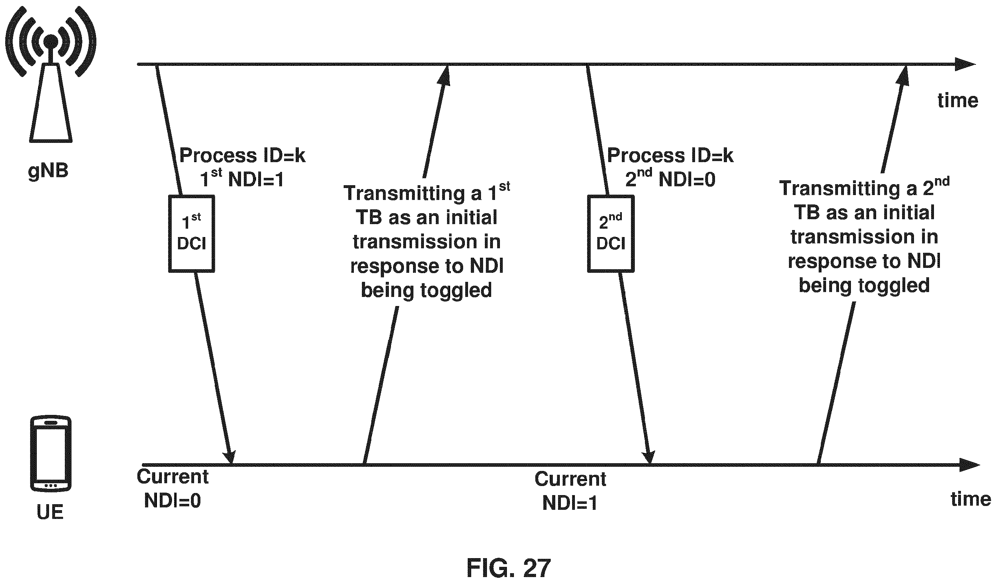

FIG. 27 shows an example of uplink TB transmission mechansim based on HARQ procedure. In an example, a base station (e.g., gNB in FIG. 27) may transmit to a wireless device (e.g., UE in FIG. 27), a first DCI comprising an uplink grant and one or more more HARQ information. The one or more HARQ information may comprise a HARQ process ID (e.g., Process ID=k as shown in FIG. 27) and a first NDI value (e.g., 1^{st} NDI=1). The UE, before receiving the first DCI, may have a current NDI value (e.g., Current NDI=0 as shown in FIG. 27). In response to receiving the first DCI, the UE may determine that the first NDI has been toggled in response to the first NDI value (1) being different from the current NDI vlaue (0). In response to the first NDI being toggled, a HARQ entity of the wireless device may obtain a MAC PDU from a multiplexing and assembly entitiy of the wireless device. The HARQ entity may deliver the MAC PDU, the uplink grant and the one or more HARQ information to a HARQ process, where the HARQ process is identifed by the HARQ proess ID (e.g., Process ID=k as shown in FIG. 27). The HARQ entity may instruct the HARQ process to trigger a new transmission for a first TB comprising the MAC PDU. The HARQ process may store the MAC PDU in an associated HARQ buffer and store the uplink grant. The HARQ process may instruct a physical layer of the wireless device to generate a new transmission for the first TB according to the stored uplink grant. As shown in FIG. 27, the physical layer may transmit the first TB acroding to the stored uplink grant. In an example, the gNB may provide a subsequent uplink grant to the UE for transmitting a second TB after the gNB successfully receives the first TB. The gNB may transmit a second DCI indicating the new transmission, where the second DCI comprises a same HARQ process ID as the first HARQ process ID, a second uplink grant, a RV value, and a second NDI value (e.g., 0 as shown in FIG. 27). The UE may determine the second NDI is toggled in response to the second NDI value (0) being different from the first NDI value (1), which is now the new Current NDI value. In response to the second NDI being toggled, a HARQ entity of the wireless device may obtain a second MAC PDU from the multiplexing and assembly entitiy. The HARQ entity may deliver the second MAC PDU, the second uplink grant, and one or more second HARQ information to the HARQ process (e.g., identified by Process ID=k). The HARQ entity may instruct the HARQ process to trigger a new transmission for the second TB comprising the second MAC PDU. The HARQ process may store the second MAC PDU in an associated HARQ buffer and store the second uplink grant. The HARQ process may instruct the physical layer to generate a new transmission for the second TB according to the second uplink grant. As shown in FIG. 27, the physical layer may trnasmit the second TB according to the second uplink grant.

In an example, a wireless system (e.g., 4G or 5G) may support multiple types of services, where different UEs may transmit different data packets for the different services. The multiple types of services may comprise at least one of: an ultra-reliable low-latency communication (URLLC); an enhanced mobile broadband service (eMBB); a machine type communication (MTC); and a vehicle to vehicle (or vehicle to everything) communication (V2X). In an example, a first data packet (e.g., a URLLC data packet) of a first wireless device may be multiplexed with a second data packet (e.g., an eMBB data packet) of a second wireless device on a PUSCH resource. In an example, the first data packet may be transmitted with a first transmission format (e.g., a first numerology or a first scheduling granularity) on a first PUSCH resource. In an example, the second data packet may be transmitted with a second transmission format (e.g., a second numerology or a second scheduling granularity) on a second PUSCH resource. In an example, the first PUSCH resource may be a part of the second PUSCH resource. In an example, the second PUSCH resource may be allocated for the second wireless device by an uplink grant indicated via a PDCCH. Assuming the first data packet is required (or at least preferred) to be transmitted with a lower latency than the second data packet (e.g., given the respective service types associated with the first and second data packets), the first data packet of the first wireless device may be transmitted on the first PUSCH resource which is a part of the second PUSCH resource. In such case, the base station may receive data from the second wireless device on the second PUSCH resource, which may also contain signals (e.g., on the part of the second PUSCH resource corresponding to the first PUSCH resource) for the first wireless device. In an example, the base station may wrongly detect the second data packet of the second wireless device if there is no mechanism to indicate whether the first data packet was transmitted on the part of the second PUSCH resource allocated to the second data packet. In order to solve this preemption problem, where higher priority data (e.g., URLLC) is multiplexed with and preempts lower priority data (e.g., eMBB data) (or more generally the problem of multiplexing uplink transmissions with different transmission formats) on a PUSCH, a gNB may transmit a DCI comprising fields indicating one or more uplink pre-emption indications to a wireless device (e.g., the second wireless device) or a group of wireless devices (e.g., including the second wireless device), indicating whether one or more time/frequency resources are pre-empted (e.g., reserved for the first wireless device) or not.

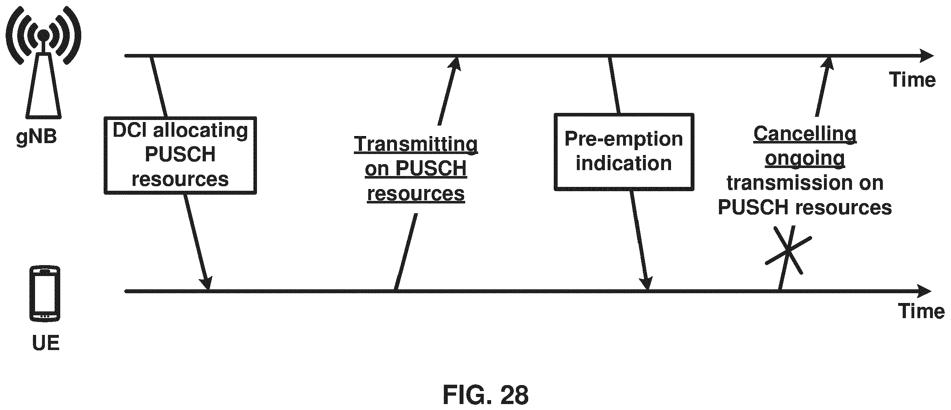

FIG. 28 shows an example of uplink pre-emption mechanism. In an example, a base station (e.g., gNB in FIG. 28) may transmit to a wireless device (e.g., UE in FIG. 28), a first DCI comprising a first uplink grant. The uplink grant may comprise PUSCH resources. In response to the first DCI, the UE may start transmitting a TB on the first uplink grant. As shown in FIG. 28, the UE may receive an uplink pre-emption indication from the base station. The uplink pre-emption indication may comprise a cancellation indication, a stop indication, or a suspending indication. The uplink pre-emption indication may indicate that at least a part of the PUSCH resources is pre-empted, or the wireless device may stop uplink transmission on the at least part of the PUSCH resources. As shown in FIG. 28, in response to the uplink pre-emption indication, the wireless deivce may stop the ongoing uplink transmission on the at least part of the PUSCH resources, wherein the at least part of the PUSCH resoruces are pre-empted based on the uplink pre-emption indication. In an example, the base station may transmit a DCI comprising the uplink pre-emption indication. The DCI may be tranmitted to a wireless device addressed by a C-RNTI, or be transmited to a group of wireless devices addressed by a group RNTI. In an example, the base station may transmit a MAC CE comprising the uplink pre-emption indication. In an example, the base station may transmit a signal sequence (e.g., a CSI-RS/DMRS) comprising the uplink pre-emption indication. In an example, after transmitting the uplink pre-emption indication, the base station may transmit a second DCI to a second UE (e.g., URLLC UE) indicating a second uplink grant comprising the at least part of the PUSCH resources, where the PUSCH resources are allocated in the first DCI for the first UE. The second UE, in response to receiving the second DCI, may transmit uplink data via the second uplink grant.

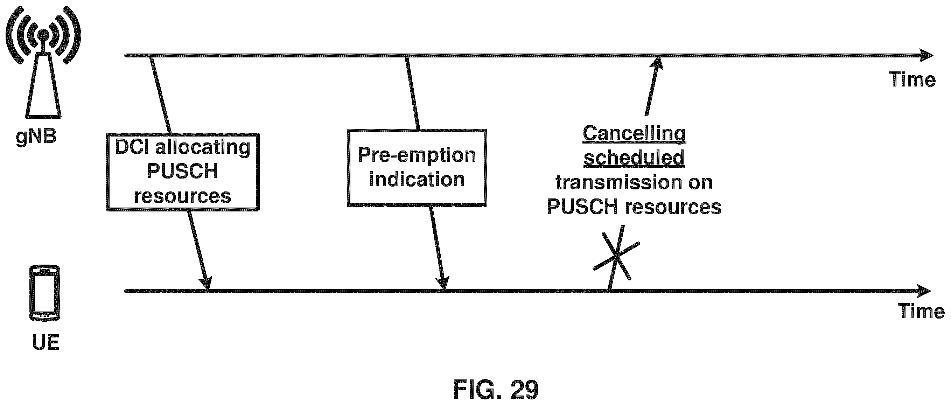

FIG. 29 shows an example of cancellation of scheduled (e.g., not started yet) uplink transmission based on uplink pre-emption indication. In an example, a base station (e.g., gNB in FIG. 29) may transmit to a wireless device (e.g., UE in FIG. 29), a first DCI comprising a first uplink grant. The uplink grant may comprise PUSCH resources. In response to the first DCI, the UE may generate a TB based on the fist DCI. As shown in FIG. 29, the UE, before starting uplink transmission of the TB, may receive an uplink pre-emption indication from the base station. The uplink pre-emption indication may comprise a cancellation indication, a stop indication, or a suspending indication. The uplink pre-emption indication may indicate that at least a part of the PUSCH resources is pre-empted, or the wireless device may stop uplink transmission on the at least part of the PUSCH resources. As shown in FIG. 29, in response to the uplink pre-emption indication, the wireless deivce may stop the scheduled (e.g., not started yet) uplink transmission on the at least part of the PUSCH resources, wherein the at least part of the PUSCH resoruces are pre-empted based on the uplink pre-emption indication. In an example, the base station may transmit a DCI comprising the uplink pre-emption indication. The DCI may be tranmitted to a wireless device addressed by a C-RNTI, or be transmited to a group of wireless devices addressed by a group RNTI. In an example, the base station may transmit a MAC CE comprising the uplink pre-emption indication. In an example, the base station may transmit a signal sequence (e.g., a CSI-RS/DMRS) comprising the uplink pre-emption indication. In an example, after transmitting the uplink pre-emption indication, the base station may transmit a second DCI to a second UE (e.g., URLLC UE) indicating a second uplink grant comprising the at least part of the PUSCH resources, where the PUSCH resources are allocated in the first DCI for the first UE. The second UE, in response to receiving the second DCI, may transmit uplink data via the second uplink grant.

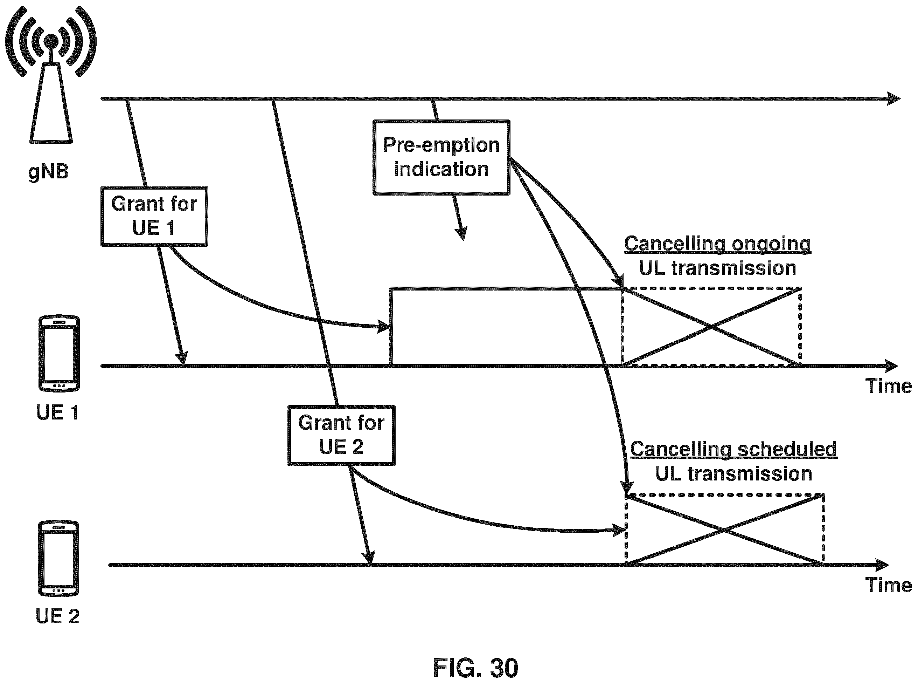

FIG. 30 shows an example of group uplink cancellation based on uplink pre-emption indication. In an example, a base station (e.g., gNB in FIG. 30) may transmit to a first wireless device (e.g., UE 1 in FIG. 30), a first DCI comprising a first uplink grant. The first uplink grant may comprise first PUSCH resources. The gNB may transmit to a second wireless device (e.g., UE 2 in FIG. 30), a second DCI comprising a second uplink grant. The second uplink grnat may comprise second PUSCH resources. As shown in FIG. 30, the gNB may transmit an uplink pre-emption indication to UE 1 and UE 2 in a group command DCI.

In an example, UE 1 may receive the pre-emption indication after UE 1 starts uplink transmisison on the first uplink grant. UE 2 may receive the uplink pre-emption indication before UE 2 starts uplink transmission on the second uplink grant.

In an example, the uplink pre-emption indication may comprise a cancellation indication, a stop indication, or a suspending indication. In an example, a base station may transmit a DCI comprising the uplink pre-emption indication. The DCI may be tranmitted to a group of wireless devices (e.g., UE 1 and UE 2) addressed by a group RNTI.

In an example, UE 1 may start uplink transmission on the first uplink grant at a first symbol earlier than a second symbol on which uplink transmission shall be stopped according to the uplink pre-emption indication.

In an example, the uplink pre-emption indication may indicate uplink transmsison shall be stopped on a first symbol earlier than a second symbol on which scheduled uplink transmission of UE 2 may occur.

As shown in FIG. 30, UE 1, after receiving the uplink pre-emption indication, may stop ongoing uplink transmission on at least first part of the first uplink grant, based on the uplink pre-emption indication. UE 2 may, after receiving the uplink pre-emption indication, may stop scheduled uplink transmission on at least second part of the second uplink grant, based on the uplink pre-emption indication. The uplink pre-emption indication may indicate that the at least first part of the first uplink grant is pre-empted, and/or the at least second part of the second uplink grant is pre-empted. In an example, after transmitting the uplink pre-emption indication, the base station may transmit a third DCI to a third UE (e.g., URLLC UE) indicating a third uplink grant comprising the at least first part of the first uplink grant and/or the at least second part of the second uplink grant. The third UE, in response to receiving the third DCI, may transmit uplink data via the third uplink grant.

In exsiting technologies, in resposne to receiving an uplink pre-emption indication, a wireless device may cancel uplink transmission (either ongoing or scheduled) of a TB on an uplink grant (e.g., dynamical or sem-persistent), where the uplink grant may be received in a first DCI or a RRC message. The wireless device may receive a new uplink grant in a second DCI after canceling the uplink transmission. The wireless device may determine whether a NDI is toggled or not based on a NDI value received in the second DCI and a value in a previous transmission of the TB. Different from a case of downlink pre-emption indication, when the wireless device cancels the uplink transmission of the TB based on the uplink pre-emption indication, the wireless device, by employing existing technologies, may have difficulty in determining whether the new uplink grant in the second DCI is for a new transmission or a retransmission. This is because it is unclear whether the wireless device should treate the cancelled uplink transmission as a transmsion which has been performed or whether the wireless device should treate the cancelled uplink transmission as a transmission that has not been performed. When the wireless device cancels the uplink transmission of the TB based on the uplink pre-emption indication, the wireless device and the base station, by implementing exisiting technologies, may not align with whether the NDI is toggled or not (or, more generally, whether the cancelled uplink transmission is treated as having been performed or not). When not aligned with the base station regarding whether the NDI is toggled or not, the wireless device may wrongly retransmit a first TB, while the base station actually requires an initial transmission of a second TB. When not aligned with the base station regarding whether the NDI is toggled or not, the wireless device may wrongly transmit a first TB, while the base station actually is expecting to receive a retransmission of a second TB. As a result, existing technologies may reduce system throughput, increase data transmission latency, and/or increase power consumption of the wireless device. There is a need to define the wireless device's behaviour when receiving an uplink pre-emption indication, e.g., for the purpose of correctly determining whether the wireless device should perform a retransmission or an initial transmission upon receiving a DCI. Example embodiments may align a base station and a wireless device regarding a status of an uplink HARQ process when uplink pre-emption mechanism is supported for mulitplexing different transmissions with different transmission formats. Example embodiments may improve system throughput, reduce data transmission latency, and/or reduce power consumption of the wireless device.

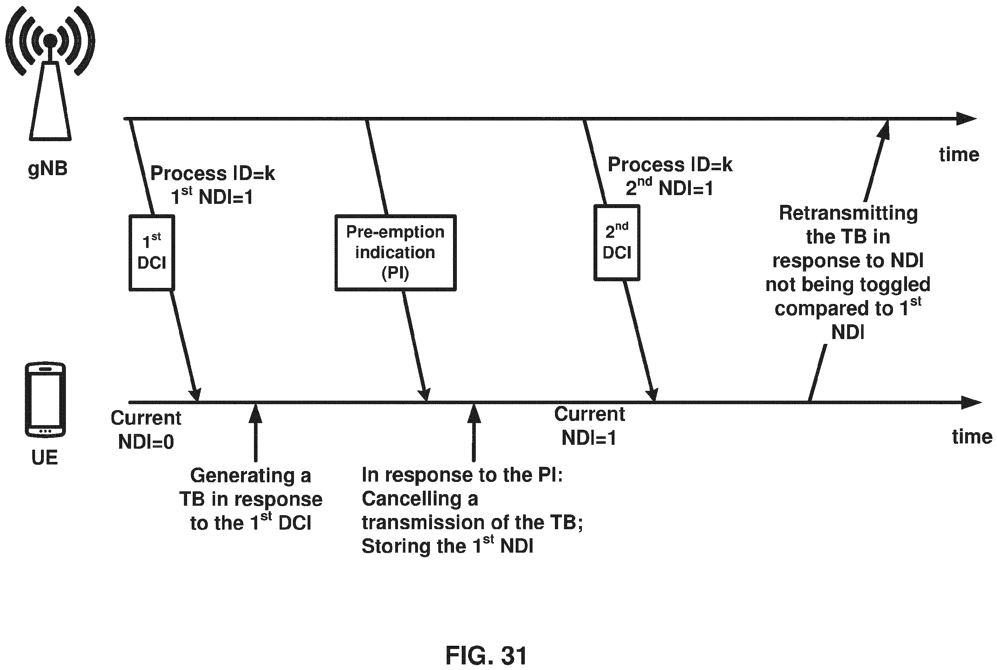

FIG. 31 shows an example of enhanced HARQ procedure when uplink pre-emption indication is supported. In an example, a base station (e.g., gNB in FIG. 31) may transmit to a wireless device (e.g., UE in FIG. 31), a first donwlink control information (DCI) comprising an uplink grant and one or more more HARQ information. The one or more HARQ information may comprise a HARQ process ID (e.g., Process ID=k as shown in FIG. 31), a first NDI value (e.g., 1^{st} NDI=1). The wireless device, before receiving the first DCI, may have a current NDI value (e.g., 0 as shown in FIG. 31). In response to receiving the first DCI, the wireless device may determine that the first NDI has been toggled in response to the first NDI value (1) being different from the current NDI vlaue (0). In response to the first NDI being toggled, a HARQ entity of the wireless device may obtain a MAC PDU from a multiplexing and assembly entitiy of the wireless device. The HARQ entity may deliver the MAC PDU, the uplink grant and the one or more HARQ information to a HARQ process, where the HARQ process is identifed by the HARQ proess ID (e.g., Process ID=k as shown in FIG. 31). The HARQ entity may instruct the HARQ process to trigger an initial (or a new) transmission for a first TB comprising the MAC PDU. The HARQ process may store the MAC PDU in an associated HARQ buffer, and store the uplink grant. The HARQ process may instruct a physical layer of the wireless device to generate an initial (or a new) transmission for the first TB according to the stored uplink grant.

In an example, as shown in FIG. 31, a physical layer of a wireless device may receive an uplink pre-emption indication from the base station, before starting a transmission for a first TB according to an uplink grant. The uplink pre-emption indication may indicate that the wireless device may cancel (suspend, or stop) the transmission for the first TB on at least one of PUSCH resources of the uplink grant. In response to the uplink pre-emption indication, the physical layer may cancel the transmission for the first TB on the at least one of the PUSCH resources of the uplink grant. In response to cancelling the transmission for the first TB, a HARQ entity of the wireless device may store the first NDI value as a current NDI value. The HARQ entity of the wireless device may consider the transmission of the first TB as has been performed by the physical layer, while the physical layer cancelled the transmission of the first TB in response to the uplink pre-emption indication.

As shown in FIG. 31, the physical layer of the wireless device may receive a second DCI comprising a same HARQ process ID as the first HARQ process ID, a second uplink grant, a RV value, and a second NDI value (e.g., 1 as shown in FIG. 31). The physical layer may deliver the second uplink grant and one or more HARQ information (e.g., the first HARQ process ID, the RV value, and/or the second NDI value) to a MAC layer of the wireless device. The MAC entity may deliver the uplink grant and the one or more HARQ information to a HARQ entity of the wireless device. The HARQ entity may identify a HARQ process by the first HARQ process ID. The HARQ entity may determine whether a NDI is toggled based on the second NDI value and the current NDI value. In an example, as shown in FIG. 31, the HARQ entity may determine that the NDI is not toggled in response to the second NDI value (1, as shown in FIG. 31) being same as the current NDI value, where the current NDI value is a value the HARQ entity stores after the wireless device receives the first DCI. In response to the NDI not being toggled, the HARQ entity may instruct the HARQ process to trigger a retransmission of the first TB. The HARQ process may intruct the physical layer to generate a retransmission of the first TB. Accordingly, the physical layer may retransmit the first TB according to the second uplink grant. The HARQ entity, by implementing example embodiments, may store a NDI value received before cancelling uplink transmission in response to an uplink pre-emption indication. The HARQ entity, by implementing example embodiments, may determine a transmission of a TB as has been performed by the physical layer, while the physical layer has cancelled the uplink transmission in response to an uplink pre-emption indication. The HARQ entity, by implementing example embodiments, may correctly determine whether an initial transmission or a retransmission is required based on the stored NDI value and a second NDI value, upon the wireless device receives the second DCI comprising the second NDI value. Example embodiments may enable alignment between a base station and a wireless device regarding a status of an uplink HARQ process when uplink pre-emption mechanism is supported for mulitplexing different transmissions with different transmission foramts. Example embodiments may improve system throughput, reduce data transmission latency, and/or reduce power consumption of the wireless device.

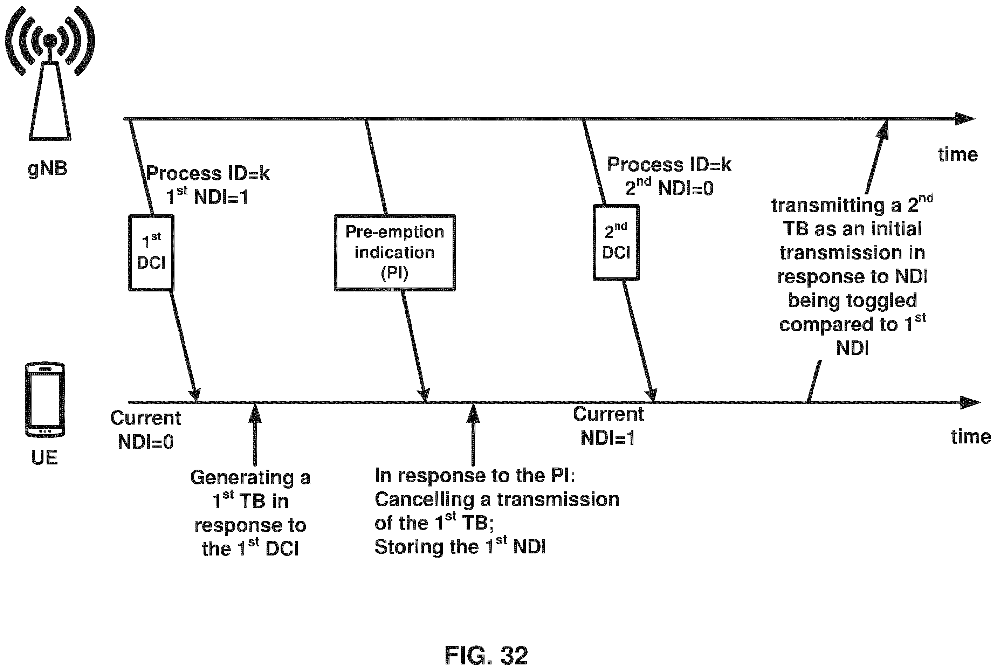

FIG. 32 shows an example of enhanced HARQ procedure when uplink pre-emption indication is supported. In an example, a base station (e.g., gNB in FIG. 32) may transmit to a wireless device (e.g., UE in FIG. 32), a first DCI comprising an uplink grant and one or more more HARQ information. The one or more HARQ information may comprise a HARQ process ID (e.g., Process ID=k as shown in FIG. 32), a first NDI value (e.g., 1^{st} NDI=1). The wireless device, before receiving the first DCI, may have a current NDI value (e.g., 0 as shown in FIG. 32). In response to receiving the first DCI, the wireless device may determine that the first NDI has been toggled in response to the first NDI value (1) being different from the current NDI vlaue (0). In response to the first NDI being toggled, a HARQ entity of the wireless device may obtain a MAC PDU from a multiplexing and assembly entitiy of the wireless device. The HARQ entity may deliver the MAC PDU, the uplink grant and the one or more HARQ information to a HARQ process, where the HARQ process is identifed by the HARQ proess ID (e.g., Process ID=k as shown in FIG. 32). The HARQ entity may instruct the HARQ process to trigger an initial (or a new) transmission for a first TB comprising the MAC PDU. The HARQ process may store the MAC PDU in an associated HARQ buffer, and store the uplink grant. The HARQ process may instruct a physical layer of the wireless device to generate an initial (or a new) transmission for the first TB according to the stored uplink grant.

In an example, as shown in FIG. 32, a physical layer of a wireless device may receive an uplink pre-emption indication from the base station, before starting a transmission of a first TB according to an uplink grant. The uplink pre-emption indication may indicate that the wireless device may cancel (suspend, or stop) the transmission of the first TB on at least one of PUSCH resources of the uplink grant. In response to the uplink pre-emption indication, the physical layer may cancel the transmission of the first TB on the at least one of the PUSCH resources of the uplink grant. In response to cancelling the transmission of the first TB, a HARQ entity of the wireless device may store the first NDI value as a current NDI value. The HARQ entity of the wireless device may consider the transmission of the first TB as has been performed by the physical layer, while the physical layer has cancelled the transmission of the first TB in response to the uplink pre-emption indication.

As shown in FIG. 32, the physical layer of the wireless device may receive a second DCI comprising a same HARQ process ID as the first HARQ process ID, a second uplink grant, a RV value, and a second NDI value (e.g., 0 as shown in FIG. 32). The physical layer may deliver the second uplink grant and one or more HARQ information (e.g., the first HARQ process ID, the RV value, and/or the second NDI value) to a MAC layer of the wireless device. The MAC entity may deliver the uplink grant and the one or more HARQ information to a HARQ entity of the wireless device. The HARQ entity may identify a HARQ process by the first HARQ process ID. The HARQ entity may determine whether a NDI is toggled based on the second NDI value and the current NDI value. In an example, as shown in FIG. 32, the HARQ entity may determine that the NDI is toggled in response to the second NDI value (0, as shown in FIG. 32) being different from the current NDI value, where the current NDI value is a value the HARQ entity stores after the wireless device receives the first DCI. In response to the NDI being toggled, the HARQ entity may instruct the HARQ process to trigger an initial (or a new) transmission of a second TB. The HARQ process may intruct the physical layer to generate an initial (or a new) transmisison of the second TB. Accordingly, the physical layer may transmit the second TB as the initial (or new) transmission according to the second uplink grant. The HARQ entity, by implementing example embodiments, may store a NDI value received before cancelling uplink transmission in response to an uplink pre-emption indication. The HARQ entity, by implementing example embodiments, may consider (or determine) a transmission of a TB as has been performed by the physical layer, while the physical layer has cancelled the uplink transmission in response to an uplink pre-emption indication. The HARQ entity, by implement example embodiments, may correctly determine whether an initial transmission or a retransmission is required based on the stored NDI value and a second NDI value, upon the wireless device receives the second DCI comprising the second NDI value. Example embodiments may enable alignment between a base station and a wireless device regarding a status of an uplink HARQ process when uplink pre-emption indicatoin is supported for mulitplexing different transmissions with different transmission foramts. Example embodiments may improve system throughput, reduce data transmission latency, and/or reduce power consumption of the wireless device.

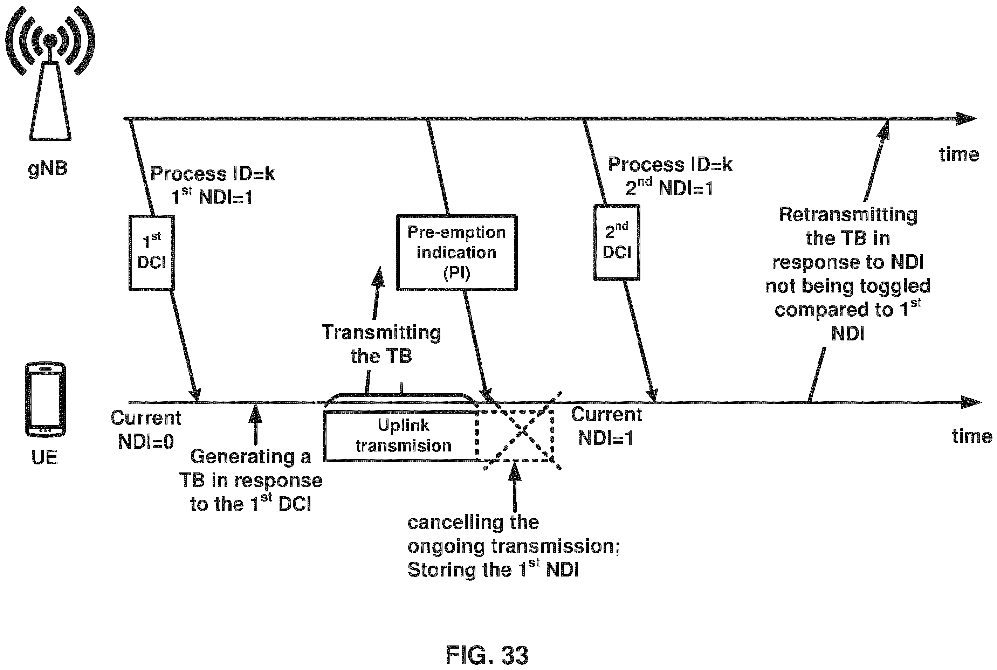

FIG. 33 shows an example of enhanced HARQ procedure when uplink pre-emption indication is supported. In an example, a base station (e.g., gNB in FIG. 33) may transmit to a wireless device (e.g., UE in FIG. 33), a first DCI comprising an uplink grant and one or more more HARQ information. The one or more HARQ information may comprise a HARQ process ID (e.g., Process ID=k as shown in FIG. 33), a first NDI value (e.g., 1^{st} NDI=1). The wireless device, before receiving the first DCI, may have a current NDI value (e.g., 0 as shown in FIG. 33). In response to receiving the first DCI, the wireless device may determine that the first NDI has been toggled in response to the first NDI value (1) being different from the current NDI vlaue (0). In response to the first NDI being toggled, a HARQ entity of the wireless device may obtain a MAC PDU from a multiplexing and assembly entitiy of the wireless device. The HARQ entity may deliver the MAC PDU, the uplink grant and the one or more HARQ information to a HARQ process, where the HARQ process is identifed by the HARQ proess ID (e.g., Process ID=k as shown in FIG. 33). The HARQ entity may instruct the HARQ process to trigger an initial (or a new) transmission for a first TB comprising the MAC PDU. The HARQ process may store the MAC PDU in an associated HARQ buffer, and store the uplink grant. The HARQ process may instruct a physical layer of the wireless device to generate an initial (or a new) transmission for the first TB according to the stored uplink grant. As shown in FIG. 33, the physical layer may start the initial (or the new) transmission on PUSCH resources based on the stored uplink grant.

In an example, as shown in FIG. 33, a physical layer of a wireless device may receive an uplink pre-emption indication from the base station, during a transmission of a first TB on PUSCH resources of an uplink grant. The uplink pre-emption indication may indicate that the wireless device may stop (suspend, or cancel) the transmission of the first TB on at least one of the PUSCH resources. In response to the uplink pre-emption indication, the physical layer may stop the ongoing transmission of the first TB on the at least one of the PUSCH resources of the uplink grant. In an example, the physical layer may finish a transmission of a first part of the first TB and may not start a transmission of a second part of the first TB, when the wireless device receives the uplink pre-emption indication. The uplink pre-emption indication may indicate that the wireless device may stop (suspend, or cancel) the transmission of the second part of the first TB on at least one of the PUSCH resources. In response to stopping the ongoing transmission of the first TB, a HARQ entity of the wireless device may store the first NDI value as a current NDI value. The HARQ entity of the wireless device may consider the transmission of the first TB as has been performed by the physical layer, while the physical layer has finished a transmission of the first part of the first TB and has stopped a transmission of the second part of the first TB in response to the uplink pre-emption indication.

As shown in FIG. 33, the physical layer of the wireless device may receive a second DCI comprising a same HARQ process ID as the first HARQ process ID, a second uplink grant, a RV value, and a second NDI value (e.g., 1 as shown in FIG. 33). The physical layer deliver the second uplink grant and one or more HARQ information (e.g., the first HARQ process ID, the RV value, and/or the second NDI value) to a MAC layer of the wireless device. The MAC entity may deliver the uplink grant and the one or more HARQ information to a HARQ entity of the wireless device. The HARQ entity may identify a HARQ process by the first HARQ process ID. The HARQ entity may determine whether a NDI is toggled based on the second NDI value and the current NDI value. In an example, as shown in FIG. 33, the HARQ entity may determine that the NDI is not toggled in response to the second NDI value (1, as shown in FIG. 33) being same as the current NDI value, where the current NDI value is a value the HARQ entity stores after the wireless device receives the first DCI. In response to the NDI not being toggled, the HARQ entity may instruct the HARQ process to trigger a retransmission of the first TB. The HARQ process may intruct the physical layer to generate a retransmission of the first TB. Accordingly, the physical layer may retransmit the first TB according to the second uplink grant. The HARQ entity, by implementing example embodiments, may store a NDI value received before stopping an ongoing uplink transmission in response to an uplink pre-emption indication. The HARQ entity, by implementing example embodiments, may consider (or determine) a transmission of a TB as has been performed by the physical layer, while the physical layer has finished a transmission of a first part of the TB and has not finished a transmission of a second part of the TB in response to an uplink pre-emption indication. The HARQ entity, by implement example embodiments, may correctly determine whether an initial transmission or a retransmission is required based on the stored NDI value and a second NDI value, upon the wireless device receives the second DCI comprising the second NDI value. Example embodiments may enable alignment between a base station and a wireless device regarding a status of an uplink HARQ process when uplink pre-emption indication is supported for mulitplexing different transmissions with different transmission foramts. Example embodiments may improve system throughput, reduce data transmission latency, and/or reduce power consumption of the wireless device.

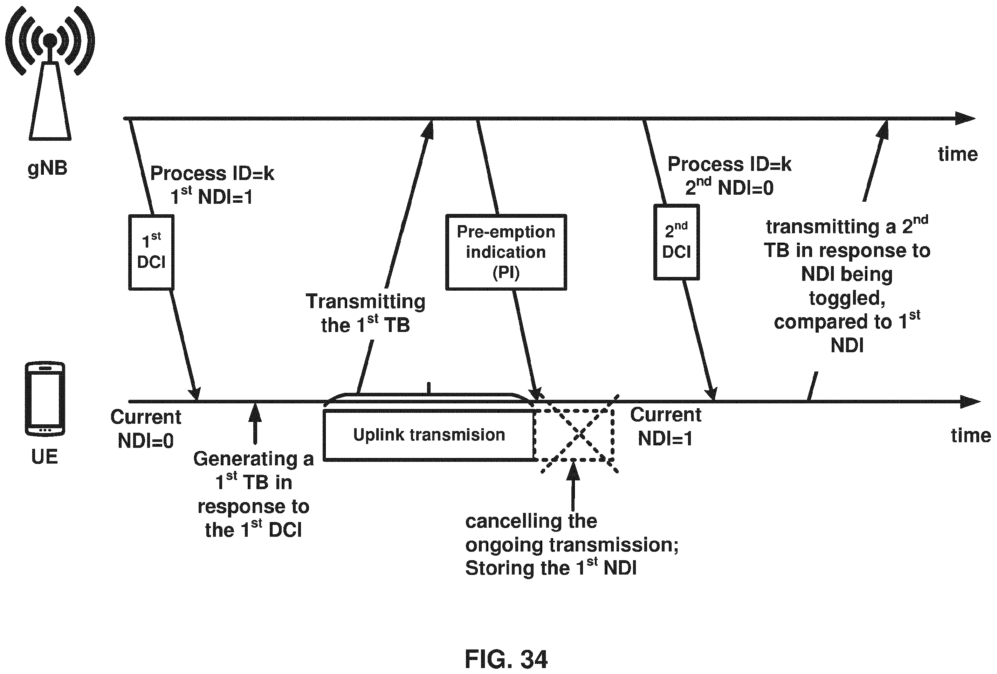

FIG. 34 shows an example of enhanced HARQ procedure when uplink pre-emption indication is supported. In an example, a base station (e.g., gNB in FIG. 34) may transmit to a wireless device (e.g., UE in FIG. 34), a first DCI comprising an uplink grant and one or more more HARQ information. The one or more HARQ information may comprise a HARQ process ID (e.g., Process ID=k as shown in FIG. 34), a first NDI value (e.g., 1^{st} NDI=1). The wireless device, before receiving the first DCI, may have a current NDI value (e.g., 0 as shown in FIG. 34). In response to receiving the first DCI, the wireless device may determine that the first NDI has been toggled in response to the first NDI value (1) being different from the current NDI vlaue (0). In response to the first NDI being toggled, a HARQ entity of the wireless device may obtain a MAC PDU from a multiplexing and assembly entitiy of the wireless device. The HARQ entity may deliver the MAC PDU, the uplink grant and the one or more HARQ information to a HARQ process, where the HARQ process is identifed by the HARQ proess ID (e.g., Process ID=k as shown in FIG. 34). The HARQ entity may instruct the HARQ process to trigger an initial (or a new) transmission of a first TB comprising the MAC PDU. The HARQ process may store the MAC PDU in an associated HARQ buffer, and/or store the uplink grant. The HARQ process may instruct a physical layer of the wireless device to generate an initial (or a new) transmission of the first TB according to the stored uplink grant. As shown in FIG. 34, the physical layer may start the initial (or the new) transmission on PUSCH resources based on the stored uplink grant.

In an example, as shown in FIG. 34, a physical layer of a wireless device may receive an uplink pre-emption indication from the base station, during a transmission of a first TB on PUSCH resources of an uplink grant. The uplink pre-emption indication may indicate that the wireless device may stop (suspend, or cancel) the transmission of the first TB on at least one of the PUSCH resources. In response to the uplink pre-emption indication, the physical layer may stop the ongoing transmission of the first TB on the at least one of the PUSCH resources of the uplink grant. In an example, the physical layer may finish a transmission of a first part of the first TB and may not start a transmission of a second part of the first TB, when the wireless device receives the uplink pre-emption indication. The uplink pre-emption indication may indicate that the wireless device may stop (suspend, or cancel) the transmission of the second part of the first TB on at least one of the PUSCH resources. In response to stopping the ongoing transmission of the first TB, a HARQ entity of the wireless device may store the first NDI value as a current NDI value. The HARQ entity of the wireless device may consider the transmission of the first TB as has been performed by the physical layer, while the physical layer has finished a transmission of the first part of the first TB and has stopped a transmission of the second part of the first TB in response to the uplink pre-emption indication.

As shown in FIG. 34, the physical layer of the wireless device may receive a second DCI comprising a same HARQ process ID as the first HARQ process ID, a second uplink grant, a RV value, and a second NDI value (e.g., 0 as shown in FIG. 34). The physical layer deliver the second uplink grant and one or more HARQ information (e.g., the first HARQ process ID, the RV value, and/or the second NDI value) to a MAC layer of the wireless device. The MAC entity may deliver the uplink grant and the one or more HARQ information to a HARQ entity of the wireless device. The HARQ entity may identify a HARQ process by the first HARQ process ID. The HARQ entity may determine whether a NDI is toggled based on the second NDI value and the current NDI value. In an example, as shown in FIG. 34, the HARQ entity may determine that the NDI is toggled in response to the second NDI value (0, as shown in FIG. 34) being different from the current NDI value, where the current NDI value is a value the HARQ entity stores after the wireless device receives the first DCI. In response to the NDI being toggled, the HARQ entity may instruct the HARQ process to trigger an initial (or a new) transmission of a second TB. The second TB may be different from the first TB. The HARQ process may intruct the physical layer to generate an initial (or a new) transmisison of the second TB. Accordingly, the physical layer may transmit the second TB as the initial transmission based on the second uplink grant. The HARQ entity, by implementing example embodiments, may store a NDI value received before stopping an ongoing uplink transmission in response to an uplink pre-emption indication. The HARQ entity, by implementing example embodiments, may determine a transmission of a TB as has been performed by the physical layer, while the physical layer has finished a transmission of a first part of the TB and has not finished a transmission of a second part of the TB in response to an uplink pre-emption indication. The HARQ entity, by implement example embodiments, may correctly determine whether an initial transmission or a retransmission is required based on the stored NDI value and a second NDI value, upon the wireless device receives a second DCI comprising the second NDI value. Example embodiments may enable alignment between a base station and a wireless device regarding a status of an uplink HARQ process when uplink pre-emption indication is supported for mulitplexing different transmissions with different transmission foramts. Example embodiments may improve system throughput, reduce data transmission latency, and/or reduce power consumption of the wireless device.

In existing technologies, a wireless device may start a bandwidth part (BWP) inactivity timer (e.g., *bwp-InactivityTimer)* in response to receiving a DCI comprising an uplink grant. During a time period when the *bwp-InactivityTimer* is running, the wireless device may keep a BWP in active state. When the *bwp-InactivityTimer* expires, the wireless device may deactivate the BWP, and switch to a default BWP. Similarly, the wireless device may start a secondary cell (SCell) deactivation timer (e.g., *SCellDeactivationTimer*) in response to receiving a DCI comprising an uplink grant. During a time period when the *SCellDeactivationTimer* is running, the wireless device may keep a SCell in active state. When the *SCellDeactivationTimer* expires, the wireless device may deactivate the SCell. In an example, the wireless device may start the *bwp-InactivityTimer* and/or the *SCellDeactivationTimer* when the wireless device receives a DCI comprising an uplink grant. The wireless device may receive an uplink pre-emption indication from a base station, during a time period when the *bwp-InactivityTimer* and/or the *SCellDeactivationTimer* is running. The wireless device may stop (cancel, or suspend) uplink PUSCH transmission in response to receiving the uplink pre-emption indication. The uplink pre-emption indication may indicate that the uplink PUSCH transmission shall be stopped. The wireless device may expect to receive a DCI indicating a retransmission, after stopping the uplink PUSCH transmission. The *bwp-InactivityTimer* and/or the *SCellDeactivationTimer* may expires after the wireless device receives the uplink pre-emption indication, and/or when the wireless device is expecting to receive the DCI for the retransmission. The wireless device, by implementing existing technologies, may switch to a default BWP, or deactivate a SCell, in response to an expiry of the *bwp-InactivityTimer* and/or in response to an expiry of the *SCellDeactivationTimer.* Existing technologies may increase data transmission delay, and/or reduce system throughput. There is a need to define a wireless device's behavior when receiving an uplink pre-emption indication, e.g., for the purpose of maintaining an active state of a BWP when the wireless device is expecting a retransmission command. Example embodiments may avoid switching to the default BWP and/or deactivating the SCell, after the wireless device receives the uplink pre-emption indication. Example embodiments may improve data transmission delay and/or system throughput.

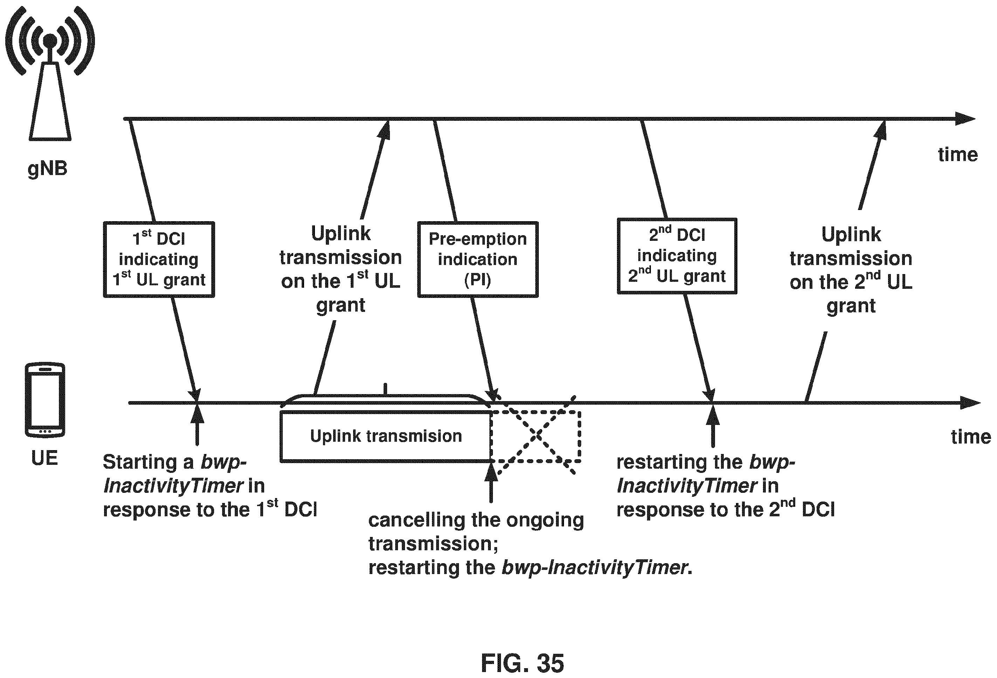

FIG. 35 shows an example of improved BWP state management. In an example, a base station (e.g., gNB in FIG. 35) may transmit to a wireless device (e.g., UE in FIG. 35) a first DCI comprising a first uplink grant. In response to receiving the first DCI, the wireless device may start a BWP inactivity timer (e.g., *bwp-InactivityTimer)* with an initial timer value. The initial timer value may be indicated in an RRC message. The wireless device may keep a first BWP in active state when the *bwp-InactivityTimer* is running. The wireless device may perform one or more actions on the first BWP in response to the first BWP being in active state, by employing one or more examples of FIG. 23.

In an example, a timer (e.g., *bwp-InactivityTimer, SCellDeactivationTimer, or drx-InactivityTimer*) may be running once it is started, until it is stopped or until it expires; otherwise the timer may not be running. A timer may be started if it is not running. A timer may be restarted if it is running. A timer may be started or restarted from its initial value. In an example, a timer may be implemented as a count-down timer from a first timer value down to a value (e.g., zero). In an example, the timer may be implemented as a count-up timer from a value (e.g., zero) up to a first timer value. In an example, the timer may be implemented as a down-counter from a first counter value down to a value (e.g., zero). In an example, the timer may be implemented as a count-up counter from a value (e.g., zero) up to a first counter value.

As shown in FIG. 35, based on an uplink grant comprised in the first DCI, the wireless device may start an initial (or a new) transmission on PUSCH resources on the first BWP. In an example, as shown in FIG. 35, the wireless device may receive an uplink pre-emption indication from the base station, during a transmission of a first TB on PUSCH resources of the uplink grant. The uplink pre-emption indication may indicate that the wireless device may stop (suspend, or cancel) the transmission of the first TB on at least one of the PUSCH resources. In response to the uplink pre-emption indication, the physical layer may stop the ongoing transmission of the first TB on the at least one of the PUSCH resources of the uplink grant. In an example, the physical layer may finish a transmission of a first part of the first TB and may not start a transmission of a second part of the first TB, when the wireless device receives the uplink pre-emption indication. The uplink pre-emption indication may indicate that the wireless device may stop (suspend, or cancel) the transmission of the second part of the first TB on at least one of the PUSCH resources. In response to receiving the uplink pre-emption indication, the wireless device may restart the *bwp-InactivityTimer.* In an example, during a time period when the *bwp-InactivityTimer* is running, the wireless device may monitor a PDCCH on the first BWP. The wireless device may receive a second DCI comprising a second uplink grant. In response to receiving the second DCI, the wireless device may restart the *bwp-InactivityTimer,* and start uplink transmission (a retransmission of the first TB, or an initial transmission of a second TB) based on the second uplink grant. Example embodiments, by restarting the *bwp-InactivityTimer* when receivng an uplink pre-emption indication, may avoid unnecessary BWP switch to a defualt BWP. Example embodiments may improve data transmission delay, and/or system throughput.

Similarly, the example embodiments may apply to management of a *SCellDeactivationTimer.* In an example, when receiving a DCI comprising an uplink grant on an activated SCell, a wireless device may start the *SCellDeactivationTimer* with an initial value. The wireless device may start an uplink transmission on the uplink grant before receiving an uplink pre-emption indication. In response to receiving the uplink pre-emption indication, the wireless device may stop the ongoing uplink transmission on the uplink grant. In response to receiving the uplink pre-emption indication, the wireless device may restart the *SCellDeactivationTimer.* When the SCellDeactivationTimer is running, the wireless device may keep the SCell in active state. The wireless device may monitor a PDCCH on(or for) the SCell for detecting a second DCI for a second uplink grant. Upon receiving the second uplink grant, the wireless device may perform uplink transmission on the second uplink grant. Example embodiments, by restarting the *SCellDeactivationTimer* when receivng an uplink pre-emption indication, may avoid unnecessary SCell deactivation. Example embodiments may improve data transmission delay, and/or system throughput.

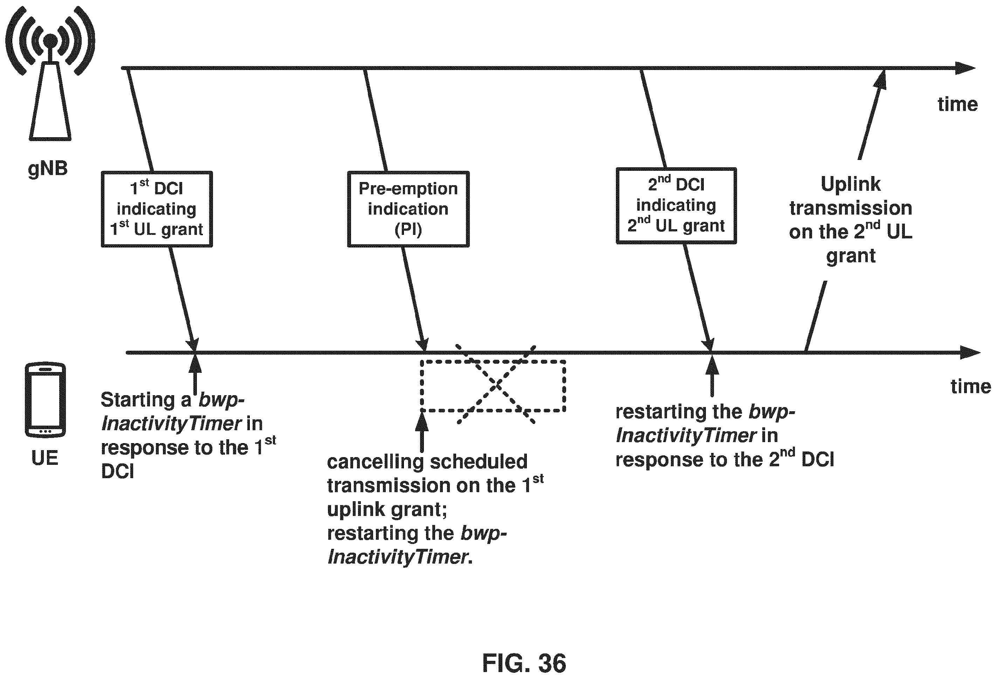

FIG. 36 shows an example of improved BWP state management. In an example, a base station (e.g., gNB in FIG. 36) may transmit to a wireless device (e.g., UE in FIG. 36) a first DCI comprising a first uplink grant. In response to receiving the first DCI, the wireless device may start a BWP inactivity timer (e.g., *bwp-InactivityTimer)* with an initial timer value. The initial timer value may be indicated in an RRC message. The wireless device may keep a first BWP in active state when the *bwp-InactivityTimer* is running.

As shown in FIG. 36, the wireless device may receive an uplink pre-emption indication from the base station, before the wireless device starts a transmission of a first TB on PUSCH resources of the uplink grant. The uplink pre-emption indication may indicate that the wireless device may cancel (suspend, or stop) a scheduled transmission of the first TB on at least one of the PUSCH resources. In response to the uplink pre-emption indication, the physical layer may cancel the schedued transmission of the first TB on the at least one of the PUSCH resources of the uplink grant. In response to receiving the uplink pre-emption indication, the wireless device may restart the *bwp-InactivityTimer.* In an example, during a time period when the *bwp-InactivityTimer* is running, the wireless device may monitor a PDCCH on the first BWP. The wireless device may receive a second DCI comprising a second uplink grant. In response to receiving the second DCI, the wireless device may restart the *bwp-InactivityTimer,* and start uplink transmission (a retransmission of the first TB, or an initial transmission of a second TB) based on the second uplink grant. Example embodiments, by restarting the *bwp-InactivityTimer* when receivng an uplink pre-emption indication, may avoid unnecessary BWP switch to a defualt BWP. Example embodiments may improve data transmission delay, and/or system throughput.

Similarly, the example embodiments may apply to management of a *SCellDeactivationTimer.* In an example, when receiving a DCI comprising an uplink grant on an activated SCell, a wireless device may start the *SCellDeactivationTimer* with an initial value. The wireless device may receive an uplink pre-emption indication before the wireless device starts an uplink transmission on the uplink grant. In response to receiving the uplink pre-emption indication, the wireless device may cancel the scheduled (e.g., not started yet) uplink transmission on the uplink grant. In response to receiving the uplink pre-emption indication, the wireless device may restart the *SCellDeactivationTimer.* When the SCellDeactivationTimer is running, the wireless device may keep the SCell in active state. The wireless device may monitor a PDCCH on (or for) the SCell for detecting a second DCI for a second uplink grant. Upon receiving the second uplink grant, the wireless device may perform uplink transmission on the second uplink grant. Example embodiments, by restarting the *SCellDeactivationTimer* when receivng an uplink pre-emption indication, may avoid unnecessary SCell deactivation. Example embodiments may improve data transmission delay, and/or system throughput.

In existing DRX operation, a wireless device, when configured with a DRX operation, may start a DRX inactivity timer (e.g., *drx-InactivityTimer),* when the wireless device receives a DCI comprising an uplink grant. During a time period when the *drx-InactivityTimer* is running, the wireless device may stay in a DRX Active Time during which the wireless device may monitor PDCCH and/or receive data packet on PDSCH. When the *drx-InactivityTimer* expires, the wireless device may switch to a DRX off/sleep mode (e.g., not in DRX Active Time), during which the wireless device may stop monitoring PDCCH and/or stop receiving data packet on PDSCH, e.g., for the purpose of saving power consumption. In an example, the wireless device may start uplink transmission based on the uplink grant before the wireless device receives an uplink pre-emption indication. The wireless device may stop the ongoing uplink transmission in response to the uplink pre-emption indication. The wireless device may be expecting to receive a second DCI for uplink retransmission. The *drx-InactivityTimer* may expires after the wireless device receives the uplink pre-emption indication, and/or when the wireless device is expecting to receive the second DCI for the retransmission. The wireless device, by implementing existing technologies, may switch to the DRX off/sleep mode, in response to an expiry of the *drx-InactivityTimer.* Existing technologies may increase data transmission delay, and/or reduce system throughput. There is a need to improve DRX operation when a wireless device receives an uplink pre-emption indication. Example embodiments may avoid switching to the DRX off/sleep mode, after the wireless device receives the uplink pre-emption indication. Example embodiments may improve data transmission delay and/or system throughput.

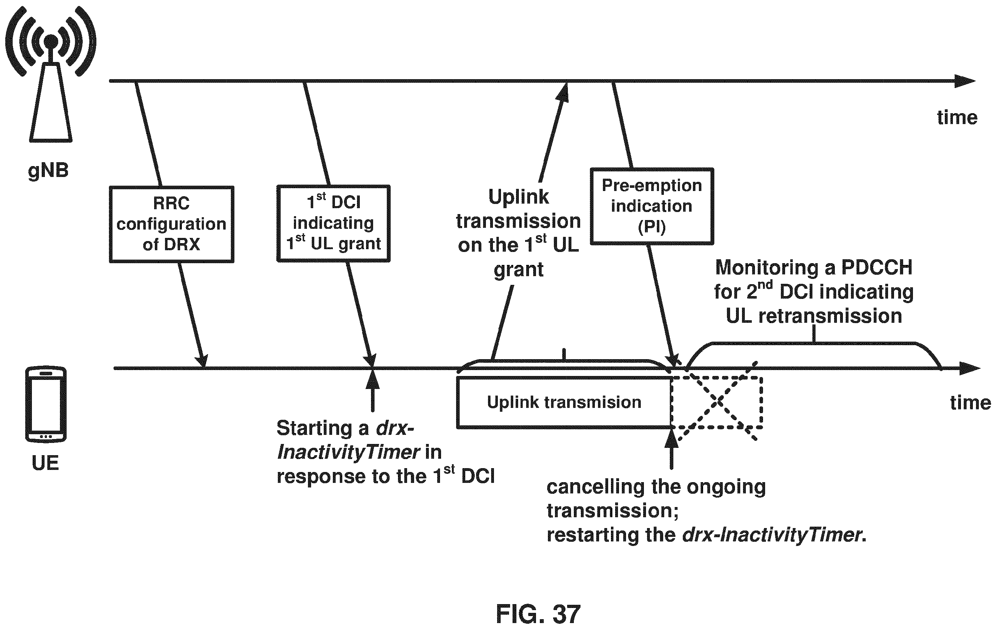

FIG. 37 shows an example of improved DRX operation. In an example, a base station (e.g., gNB in FIG. 37) may transmit to a wireless device (e.g., UE in FIG. 37) one or more RRC messages comprising configuration parameters of a DRX operation. The wireless device may activate the DRX operation based on the configuration parameters, by employing one or more examples of FIG. 24 and/or FIG. 25. The gNB may transmit to the wireless device a first DCI comprising a first uplink grant. In response to receiving the first DCI, the wireless device may start a DRX inactivity timer (e.g., *drx-InactivityTimer)* with an initial timer value. The initial timer value may be indicated in an RRC message. The wireless device may maintain in a DRX Active Time when the *drx-InactivityTimer* is running.

As shown in FIG. 37, based on an uplink grant comprised in the first DCI, the wireless device may start an initial (or a new) transmission on PUSCH resources on an active BWP (or an active cell). In an example, as shown in FIG. 37, the wireless device may receive an uplink pre-emption indication from the base station, during a transmission of a first TB on PUSCH resources of the uplink grant. The uplink pre-emption indication may indicate that the wireless device may stop (suspend, or cancel) the transmission of the first TB on at least one of the PUSCH resources. In response to the uplink pre-emption indication, the physical layer may stop the ongoing transmission of the first TB on the at least one of the PUSCH resources of the uplink grant. In an example, the physical layer may finish a transmission of a first part of the first TB and may not start a transmission of a second part of the first TB, when the wireless device receives the uplink pre-emption indication. The uplink pre-emption indication may indicate that the wireless device may stop (suspend, or cancel) the transmission of the second part of the first TB on at least one of the PUSCH resources. In response to receiving the uplink pre-emption indication, the wireless device may restart the *drx-InactivityTimer.* In an example, during a time period when the *drx-InactivityTimer* is running, the wireless device may monitor a PDCCH on the active BWP (or the active cell). The wireless device may receive a second DCI comprising a second uplink grant. In response to receiving the second DCI, the wireless device may restart the *drx-InactivityTimer,* and/or start uplink transmission (a retransmission of the first TB, or an initial transmission of a second TB) based on the second uplink grant. Example embodiments, by restarting the *drx-InactivityTimer* when receivng an uplink pre-emption indication, may avoid unnecessary switching from DRX Active Time to DRX off/sleep mode. Example embodiments may improve data transmission delay, and/or system throughput.

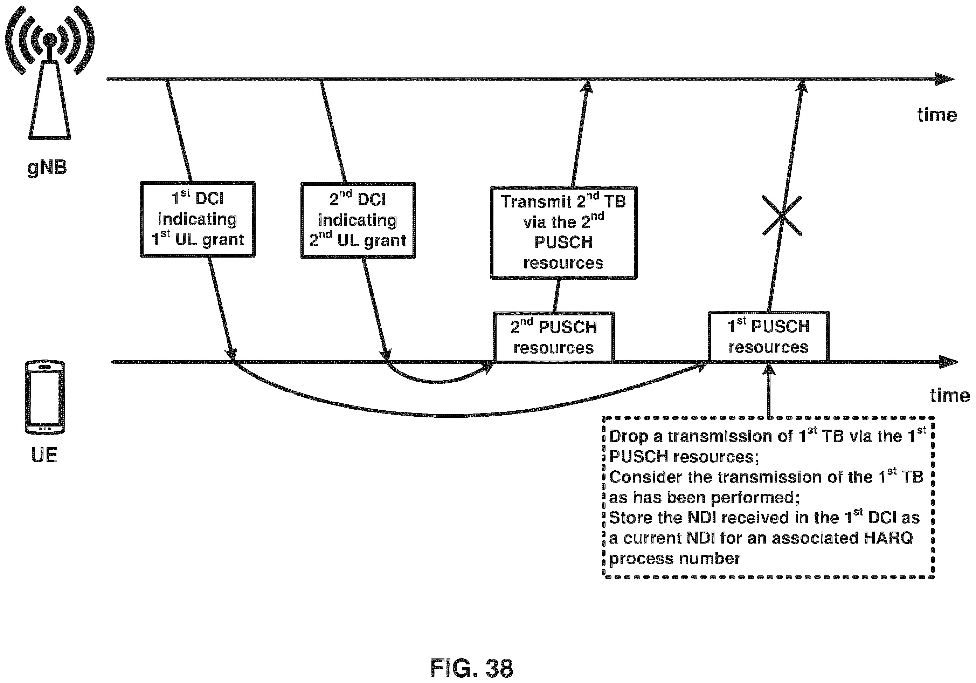

In an example, example embodiments of FIG. 31 may be applied to improve HARQ process when out-of-order HARQ is supported by a wireless device, or when the wireless device receives an out-of-order uplink grant. FIG. 38 shows an example embodiment of improved HARQ process when out-of-order HARQ is supported.

In an example, when out-of-order HARQ is supported by a base station and/or a wireless device, a base station, after transmitting a first DCI indicating a first uplink grant on a BWP or a cell, may transmit a second DCI indicating a second uplink grant on the BWP or the cell, before a wireless device start an uplink transmission via the first uplink grant. In an example, the second DCI may be referred to as an out-of-order uplink grant. In an example, a transmission via the second uplink grant may be more urgent or require less latency than a transmission via the first uplink grant. In an example, a transmission occasion via the second uplink grant may be earlier in time domain than a transmission occasion via the first uplink grant.

In an example, as shown in FIG. 38, a base station (e.g., gNB in FIG. 38) may transmit to a wireless device (e.g., UE in FIG. 38) a first DCI comprising a first uplink grant. The first uplink grant may comprising parameters of first time domain resource allocation. In an example, the wireless device may create (or generate) a first TB and prepare an uplink transmission for the first TB via the first uplink grant. In an example, after transmitting the first DCI, the base station may transmit a second DCI comprising a second uplink grant, before a PUSCH transmission occasion indicated by the first DCI. In an example, the wireless device may create (or generate) a second TB and prepare an uplink transmission for the second TB via the second uplink grant. The second uplink grant may comprise parameters of second time domain resource allocation. In an example, a PUSCH transmission occasion indicated by the second DCI may be earlier than a PUSCH transmission occasion indicated by the first DCI. In an example, a first HARQ process number indicated in the first DCI may be same as or different from a second HARQ process number indicated in the second DCI.

In an example, as shown in FIG. 38, in response to the first DCI and/or the second DCI, the wireless device may transmit the second TB via the second uplink grant. In an example, the wireless device may not transmit the first TB via the first uplink grant, after transmitting the second TB via the second uplink grant, e.g., due to processing capability of the wireless device. In an example, the wireless device may drop a transmission of the first TB via the first uplink grant. In an example, the wireless device, in response to dropping the transmission of the first TB, may flush a HARQ buffer associated with a HARQ process identified by a HARQ process number indicated in the first DCI. The wireless device may consider the transmission of the first TB as has been performed. The wireless device may store an NDI value received in the first DCI as a current NDI value for a HARQ process number indicated in the first DCI. The wireless device may perform a retransmission of the first TB based the stored NDI value and a new NDI value received in a third DCI comprising a same HARQ process number as the one received in the first DCI.

In an example, a wireless device may be capable of processing out-of-order HARQ (or out-of-order uplink grant). The wireless device, if capable of processing out-of-order HARQ, may process a second uplink grant, after receiving a first uplink grant and before a transmission via the first uplink grant. The wireless device may transmit an uplink TB via the second uplink grant, after processing the second uplink grant. The wireless device may or may not transmit another uplink TB via the first uplink grant, after the transmission via the second uplink grant. In an example, a wireless device may not be capable of processing out-of-order HARQ. The wireless device, if not capable of processing out-of-order HARQ, may not process a second uplink grant, after receiving a first uplink grant and before a transmission via the first uplink grant.

In an example, a wireless device may transmit an uplink TB via a PUSCH resource of an uplink grant. An uplink grant may be indicated in a DCI comprising one or more parameters of the PUSCH resource, wherein the PUSCH resource does not occur periodically in a plurality of slots. In this case the uplink grant may be referred to as a dynamic grant. In an example, an uplink grant may be a configured grant Type 1 or a configured grant Type 2. In an example, an uplink grant may be indicated in an RRC message configuring periodical occasions, in a plurality of slots, of a PUSCH resource of the uplink grant. In this case, the uplink grant may be referred to as a configured grant Type 1. A wireless device may transmit uplink TBs periodically via the periodical occasions of the PUSCH resource of the configured grant Type 1. In an example, an uplink grant may be indicated in an RRC message and activated by a configured grant activation DCI, wherein the PUSCH resource of the uplink grant may occur periodically in a plurality of slots. A wireless device may transmit uplink TBs periodically via the periodical occasions of the PUSCH resource of the configured grant Type 2 until receiving another DCI indicating a deactivation of the configured grant Type 2. In this case the uplink grant may be referred to as a configured grant Type 2.

In an example, in response to receiving a DCI indicating a PUSCH resource of an uplink grant, a wireless device, depending on installed/implemented algorithms and/or digital processing units, may spend some time to prepare a transmission via the PUSCH resource. The preparing the transmission via the PUSCH resource may comprise processing contents of the DCI, preparing uplink transmission parameters (e.g., Tx beam, precoding, MCS), and/or preparing HARQ related process (e.g., buffering data in HARQ buffer). After amount of time spent on preparing the transmission, the wireless device may transmit a TB via the PUSCH resource. In an example, the wireless device may indicate to a base station a PUSCH preparation time parameter to facilitate the base station to properly schedule a transmission via a PUSCH resource. The indication of the PUSCH preparation time parameter may enable the base station to properly transmit a DCI indicating a transmission via an uplink grant and allow the wireless device to have enough time to prepare the transmission.

In an example, a wireless device may be capable of processing out-of-order uplink grant. Processing out-of-order uplink grant may require the wireless device to quickly detect PDCCH and/or promptly process HARQ information for a HARQ process. Processing out-of-order uplink grant may require transmitting a second TB via a second PUSCH resource and cancelling a scheduled transmission of a first TB via the first PUSCH resource. In an example, the second TB may be a TB of low-latency (urgent) service (e.g., URLLC service, V2X service, Industrial IoT service, and the like). In an example, the first TB may be a TB of not low-latency service (e.g., eMBB service, MTC service, or IoT service, and the like). The first PUSCH resource of a cell may overlap in time with the second PUSCH resource of the cell. The first TB may be associated with a first HARQ process. The second TB may be associated with a second HARQ process. In an example, processing of out-of-order uplink grant may be referred to as uplink grant processing prioritization, or intra-UE prioritization in this specification, in which one uplink grant is prioritized over another uplink grant of the same wireless device. In an example, a wireless device may not be capable of processing out-of-order uplink grant. Based on not being capable of processing out-of-order uplink grant, the wireless device may drop a scheduled transmission of the second TB when the first PUSCH resource overlaps in time with the second PUSCH resource. The wireless device may receive indication of the scheduled transmission of the second TB after receiving indication of the scheduled transmission of the first TB.

In existing technologies, a wireless device may transmit to a base station an indication indicating a normal PUSCH preparation time parameter (e.g., a PUSCH preparation time parameter for a not out-of-order grant or an in-order grant). To facilitate an out-of-order grant processing, a wireless device may transmit to a base station another indication indicating whether the wireless device is capable of processing out-of-order grant, in addition to the indication of the normal (or in-order) PUSCH preparation time parameter. Based on the indication, the base station may determine whether to transmit an out-of-order grant to the wireless device. However, an indication indicating whether the wireless device is capable of processing out-of-order grant may not ensure that a more urgent TB (e.g., the second TB in the above example) is timely transmitted and/or a less urgent TB (e.g., the first TB in the above example) is timely cancelled. In an example, different wireless devices may spend different amount of time (e.g. different number of symbols) for processing cancellation of a scheduled transmission of a less urgent TB after processing uplink grant for a scheduled transmission of a more urgent TB, although the different wireless devices indicated that they are capable of processing out-of-order grant. In an example, a first wireless device, being capable of processing out-of-order grant, may be equipped with more advanced algorithms and/or digital processing units. The first wireless device may immediately or quickly process a cancellation of a scheduled transmission of the less urgent TB after processing an uplink grant for a more urgent TB. In an example, a second wireless device, being capable of processing out-of-order grant, may be equipped with less advanced algorithms and/or digital processing units. The second wireless device may spend several symbols to process a cancellation of a scheduled transmission of a less urgent TB after processing an uplink grant for a more urgent TB. The second wireless device may not able to timely cancel the transmission of the less urgent TB, although the second wireless device indicated that it is capable of processing out of order grant.

In an example, by implementing existing technologies, a wireless device may transmit an indication indicating whether a wireless device is capable of processing out-of-order grant, in addition to an indication of a normal (or an in-order grant based) PUSCH processing parameter. By implementing existing technologies, the wireless device, upon receiving an out-of-order grant, may fail in timely transmission of a more urgent TB due to a delayed processing of a cancellation of a less urgent TB. In an example, by implementing existing technologies, based on receiving an indication indicating whether a wireless device is capable of processing out-of-order grant, a base station may improperly assume that transmission of a less urgent TB is cancelled and transmission of a more urgent TB is performed, while the wireless device was not able to cancel transmission in time. This may cause misalignment between the base station and the wireless device. The existing technologies may increase uplink transmission latency for delivery of data packet of an urgent service. The existing technologies may reduce uplink transmission throughput, e.g., due to early cancellation of a scheduled transmission of a less urgent TB.

There is a need to improve out-of-order grant processing when a base station and wireless device support the processing of out-of-order grant. Example embodiments enhances processes related to out-of-order grant. Example embodiments may comprise transmitting by a wireless device one or more capability parameters of an out-of-order grant processing (uplink grant processing prioritization, or intra-UE prioritization), the one or more capability parameters comprising: an indication whether the wireless device is capable of processing an out-of-order grant, and a time offset value for the wireless device to determine when to cancel a scheduled transmission of a first uplink grant. The time offset value, for the wireless device to determine when to cancel a scheduled transmission of a first uplink grant, may be indicated separately or independently from an indication of a normal PUSCH processing time parameter (e.g., a PUSCH preparation time). The normal PUSCH processing time parameter may be used for the wireless device to prepare a normal (or an in-order grant based) PUSCH transmission. The additional time offset value may enable to implement enhanced out-of-order grant processing. The wireless device, based on the indication indicating the wireless device is capable of processing out-of-order grant, may receive a second uplink grant comprising an out-of-order grant. A second PUSCH resource of the second uplink grant may overlap in time with a first PUSCH resource of the first uplink grant. The wireless device may transmit a scheduled transmission via the second PUSCH resource. The wireless device may determine, based on the time offset value, one or more symbols for cancelling a scheduled transmission of a first uplink grant. The wireless device may cancel the scheduled transmission via the one or more symbols of the first uplink grant.

One of example embodiments may comprise receiving by a base station from a wireless device one or more capability parameters of an out-of-order grant processing (uplink grant processing prioritization, or intra-UE prioritization), the one or more capability parameters comprising: an indication whether the wireless device is capable of processing an out-of-order grant, and a time offset value for the wireless device to determine when to cancel a scheduled transmission of a first uplink grant. The time offset value, for the wireless device to determine when to cancel a scheduled transmission of a first uplink grant, may be indicated separately or independently from an indication of a normal PUSCH processing time parameter (e.g., a PUSCH preparation time). The normal PUSCH processing time parameter may be used for the wireless device to prepare a normal (or an in-order grant based) PUSCH transmission. The additional time offset value may enable to implement enhanced out-of-order grant processing. The base station, based on the indication indicating the wireless device is capable of processing out-of-order grant, may transmit a second uplink grant comprising an out-of-order grant. A second PUSCH resource of the second uplink grant may overlap in time with a first PUSCH resource of the first uplink grant. The base station may receive a TB via the second PUSCH resource. The base station may determine, based on the time offset value, one or more symbols for cancelling a reception of a first uplink grant. The base station may cancel the reception via the one or more symbols of the first uplink grant. Example embodiments may reduce uplink transmission latency for delivery of data packet of an urgent service. Example embodiments may increase uplink transmission throughput.

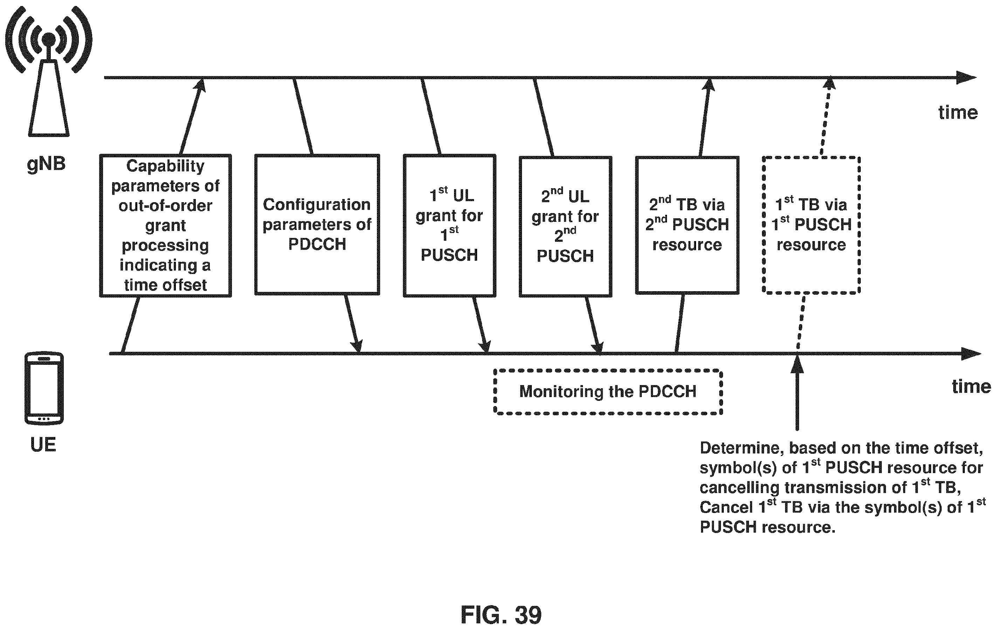

FIG. 39 shows an example embodiment of improved HARQ processing when a wireless device supports out-of-order HARQ/grant. In an example, a wireless device may transmit one or more capability parameters of out-of-order HARQ (out-of-order grant, grant processing prioritization, or intra-UE prioritization) processing to a base station. The one or more capability parameters may be transmitted in an RRC message (e.g., *UE-NR-Capability* IE, or *UECapabilityInformation* message), e.g., as a response to a capability request message transmitted by a base station. The one or more capability parameter of processing an out-of-order grant may be indicated separately or independently from an indication of a capability of PUSCH preparation time of a normal grant (e.g., based on a not-out-of-order grant or an in-order grant). The one or more capability parameters may comprise: an indicator indicating whether out-of-order HARQ (out-of-order grant, grant processing prioritization, or intra-UE prioritization) is supported or not; and/or a value of a time period (or a time offset) for determine a cancellation a scheduled transmission of an uplink grant. In an example, a wireless device may transmit a scheduled transmission via a second PUSCH resource of a second uplink grant. The second PUSCH resource may overlap in time with a first PUSCH resource of a first uplink grant. The wireless device may determine, based on a value of the time offset, one or more symbols of the first PUSCH resource for cancelling a scheduled transmission via the first PUSCH resource.

In an example, based on the one or more capability parameters, the base station may transmit to the wireless device one or more RRC messages comprising parameters of PDCCH monitoring based on the one or more capability parameters. In an example, when the one or more capability parameters indicates that the wireless device is capable of processing out-of-order HARQ, the parameters of PDCCH monitoring may comprise a first RNTI value (e.g., C-RNTI) for a reception of normal dynamic uplink grant (e.g., dedicated for eMBB transmission); a second RNTI value (e.g., C2-RNTI) for a reception of out-of-order uplink grant (e.g., dedicated for URLLC transmission). In an example, in response to receiving the one or more RRC messages, the wireless device, after receiving a first uplink grant (e.g., comprised in a first DCI), may monitor PDCCH for a second uplink grant (e.g., comprised in a second DCI), based on the parameters of PDCCH monitoring. The wireless device may monitor the PDCCH for the second DCI by attempting to decode the second DCI with the second RNTI value. The wireless device may monitor the PDCCH for the second DCI with a monitoring periodicity indicated by the parameters of PDCCH monitoring.

In an example, before starting uplink transmission via the first uplink grant indicated by the first DCI, the wireless device may receive the second DCI indicating the second uplink grant during monitoring the PDCCH for the second DCI. The second uplink grant may occur earlier than the first uplink grant. The wireless device may transmit a second uplink TB via the second uplink grant, in response to the second DCI. In an example, the wireless device, after transmitting the second uplink TB, may resume a transmission of the first TB via the first uplink grant indicated by the first DCI. In an example, the wireless device, after transmitting the second uplink TB, may drop a transmission of the first TB via the first uplink grant indicated by the first DCI.

In an example, a wireless device may transmit a second uplink TB via a second PUSCH resource of a second uplink grant. The second PUSCH resource may overlap in time with a first PUSCH resource of a first uplink grant. The wireless device may determine, based on a value of a time offset comprised in one or more capability parameters, whether the wireless device may cancel a scheduled transmission of the first TB via one or more symbols of the first PUSCH resource of the first uplink grant. The wireless device may determine, based on a value of a time offset comprised in one or more capability parameters, when the wireless device may cancel a scheduled transmission of the first TB via one or more symbols of the first PUSCH resource of the first uplink grant. The one or more capability parameters may be transmitted from the wireless device to a base station. The wireless device may transmit the one or more capability parameters indicating the time offset with the value in response to receiving a capability request message from the base station.

In an example, the wireless device may determine, based on the time offset indicated by the one or more capability parameters, whether (or when) to cancel a scheduled transmission via one or more symbols of a first PUSCH resource of a first uplink grant. In an example, when a time gap determined based on a second PUSCH resource and a first PUSCH resource, is greater than the time offset indicated by the one or more capability parameters, the wireless device may not cancel a transmission of a first TB via one or more symbols of the first PUSCH resource. In an example, when a time gap determined based on the second PUSCH resource and the first PUSCH resource, is smaller than the time offset indicated by the one or more capability parameters, the wireless device may cancel a scheduled transmission of a first TB via one or more symbols of the first PUSCH resource of the first uplink grant. In an example, the time gap may be a time gap between a first symbol (e.g., a starting symbol, or an ending symbol) of the second PUSCH resource and a second symbol (e.g., a starting symbol, or an ending symbol) of the first PUSCH resource.

In an example, a wireless device may determine, based on the time offset indicated by the one or more capability parameters, whether (or when) to cancel a scheduled transmission via one or more symbols of a first PUSCH resource of a first uplink grant. In an example, when a time gap determined based on a first PDCCH carrying a first DCI indicating the first uplink grant and a second PDCCH carrying a second DCI indicating the second uplink grant, is less than the time offset indicated by the one or more capability parameters, the wireless device may not cancel a transmission of a first TB via one or more symbols of a first PUSCH resource of the first uplink grant. In an example, when a time gap determined based on a first PDCCH carrying a first DCI indicating the first uplink grant and a second PDCCH carrying a second DCI indicating the second uplink grant, is greater than the time offset indicated by the one or more capability parameters, the wireless device may cancel a scheduled transmission of a first TB via one or more symbols of a first PUSCH resource of the first uplink grant. In an example, the time gap may be a time gap between a first symbol (e.g., a starting symbol, or an ending symbol) of the second PDCCH and a second symbol (e.g., a starting symbol, or an ending symbol) of the first PDCCH.

By implementing example embodiments, a wireless device and/or a base station may align on whether and/or when the wireless device may cancel a scheduled transmission of a less urgent TB. The example embodiment may reduce uplink transmission latency for delivery of data packet of an urgent service. Example embodiments may increase uplink transmission throughput.

In an example, a wireless device may receive a first DCI comprising a first uplink radio resource and a first NDI value. The wireless device may create (or generate) a first TB in response to the first DCI. In an example, the wireless device may receive a second DCI comprising a second uplink radio resource. The wireless device, in response to the second DCI, may transmit a second TB via the second uplink radio resource and drop a transmission of the first TB on the first uplink radio resource. In an example, the first uplink radio resource may or may not overlap with the second uplink radio resource. In an example, the second uplink radio resource may be earlier in time than the first uplink radio resource. The wireless device may receive a third DCI comprising a third uplink radio resource and a third NDI value. the wireless device may retransmit the first TB on the third uplink radio resource based on the first NDI value and the second NDI value.

In an example, a wireless device may transmit one or more capability parameters of processing out-of-order uplink grant. The wireless device may receive one or more configuration parameters of PDCCH monitoring. The one or more configuration parameters may comprise a first RNTI value for a reception of a first type of dynamic uplink grant. The one or more configuration parameters may comprise a second RNTI value for a reception of a second type of dynamic uplink grant, based on the one or more capability parameters. The second type of dynamic uplink grant may comprise an out-of-order uplink grant. The wireless device may receive a first DCI comprising a first uplink radio resource and a first NDI value. The wireless device may create a first TB in response to the first DCI. The wireless device may monitor PDCCH for the reception of the second type of dynamic uplink grant based on the second RNTI value. The wireless device may receive a second DCI comprising the second type of dynamic uplink grant. The wireless device may transmit a second TB via the second type of dynamic uplink grant, in response to the second DCI.

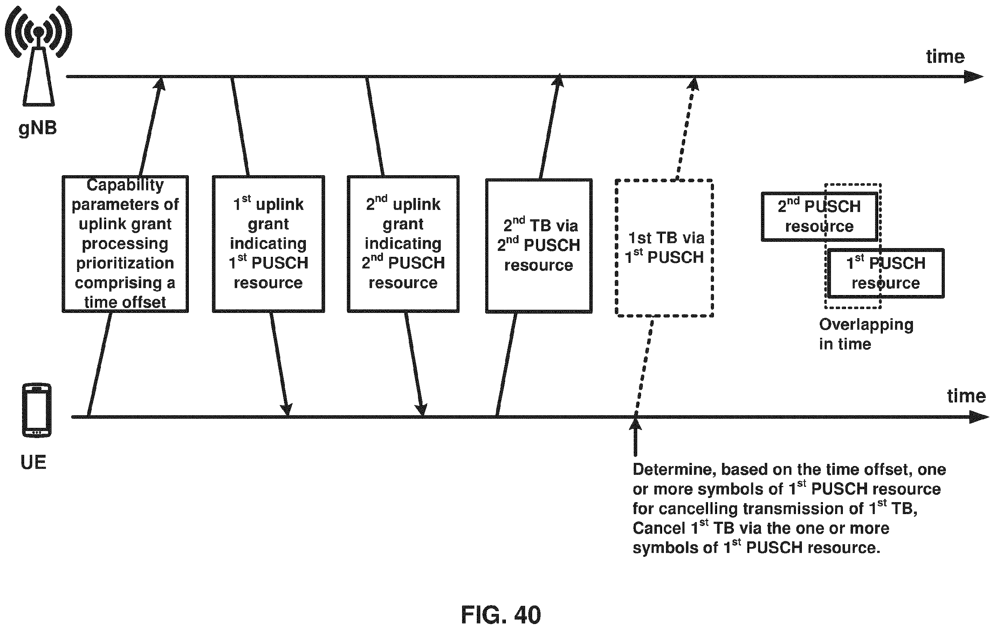

FIG. 40 shows an example of improved out-of-order uplink grant processing. In an example, a wireless device may transmit one or more capability parameters of out-of-order HARQ (out-of-order grant, grant processing prioritization, or intra-UE prioritization) processing to a base station. The wireless device may transmit the one or more capability parameters in an RRC message (e.g., *UE-NR-Capability* IE, or *UECapabilityInformation* message). The wireless device may transmit the one or more capability parameters in response to receiving from a base station a capability request message. In an example, the one or more capability parameters may comprise a value of a time offset (or a time period) for determine a cancellation a scheduled transmission of an uplink grant. In an example, a wireless device may transmit a scheduled transmission via a second PUSCH resource of a second uplink grant. The second PUSCH resource may overlap in time with a first PUSCH resource of a first uplink grant. The wireless device may determine, based on a value of the time offset, one or more symbols of the first PUSCH resource for cancelling a scheduled transmission via the first PUSCH resource. In an example, the one or more capability parameters may further comprise an indicator indicating whether out-of-order grant (out-of-order HARQ, grant processing prioritization, or intra-UE prioritization) is supported or not. In response to transmitting the one or more capability parameters indicating the wireless device supports the out-of-order grant, the wireless device may receive an out-of-order grant and process the out-of-order grant.

In the example of FIG. 40, the wireless device receives a first uplink grant (e.g., configured grant Type 1 or 2, dynamical grant) indicating a first PUSCH resource. The wireless device receives a second uplink grant (e.g., a configured grant Type 1or 2, dynamic grant) indicating a second PUSCH resource. The second uplink grant may be an out-of-order grant. A scheduled transmission via the first PUSCH resource may be associated with a first HARQ process. A scheduled transmission via the second PUSCH resource may be associated with a second HARQ process. The first HARQ process may be identified by a same HARQ process ID of the second HARQ process. The first HARQ process may be identified by a HARQ process ID different from a HARQ process ID of the second HARQ process. In an example, the first PUSCH resource may comprise a first number of symbols with a first starting symbol in a slot. In an example, the second PUSCH resource may comprise a second number of symbols with a second starting symbol in a slot. The first PUSCH resource overlaps in time with the second PUSCH resource.

In the example of FIG. 40, the wireless device transmits a scheduled second TB via the second PUSCH resource of the second uplink grant, based on the second PUSCH resource overlapping in time with the first PUSCH resource.

In the example of FIG. 40, the wireless device, based on the value of the time offset indicated in the one or more capability parameters, determine one or more symbols of the first PUSCH resources for cancelling a scheduled transmission of a first TB via the first PUSCH resource. The wireless device, based on the determining the one or more symbols of the first PUSCH resource, cancels the scheduled transmission of the first TB via the one or more symbols of the first PUSCH resource.

By implementing example embodiments, a wireless device and/or a base station may align on whether and/or when the wireless device may cancel a scheduled transmission of a less urgent TB. The example embodiment may reduce uplink transmission latency for delivery of data packet of an urgent service. Example embodiments may increase uplink transmission throughput.

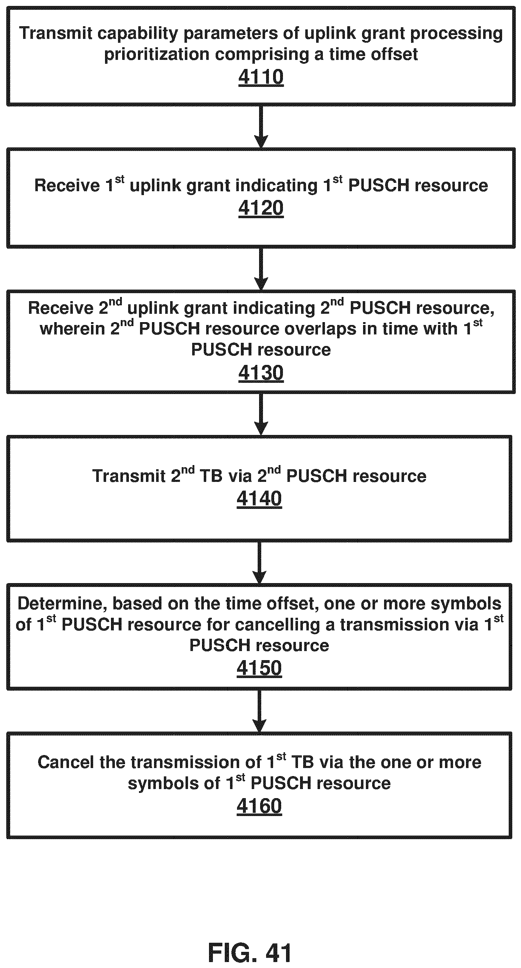

FIG. 41 shows an example flow chart of out-of-order uplink grant processing as per an aspect of an example embodiment of the present disclosure. At 4110, a wireless device transmits one or more capability parameters of uplink grant processing prioritization, the one or more capability parameters indicating a value of a time offset for determining a cancellation of a scheduled transmission via an uplink grant. At 4120, the wireless device receives a first uplink grant indicating a first PUSCH resource. At 4130, the wireless device receives a second uplink grant indicating a second PUSCH resource. The second PUSCH resource overlaps in time with the first PUSCH resource. At 4140, the wireless device transmits a second transport block via the second PUSCH resource of the second uplink grant, based on the second PUSCH resource overlapping in time with the first PUSCH resource. At 4150, the wireless device determines, based on the value of the time offset, one or more symbols of the first PUSCH resource for cancelling a scheduled transmission via the first PUSCH resource of the first uplink grant. At 4160, the wireless device cancels the scheduled transmission of a first transport block via the one or more symbols of the first PUSCH resource, based on the determining the one or more symbols of the first PUSCH resource.

According to an example embodiment, the one or more capability parameters of uplink grant processing prioritization (e.g., processing an out-of-order grant) is indicated separately or independently from an indication of a PUSCH preparation time for a normal grant (e.g., an in-order grant).

According to an example embodiment, the wireless device transmits the one or more capability parameters via a radio resource control message.

According to an example embodiment, the wireless device transmits the one or more capability parameters in response to receiving from a base station a capability request message for the uplink grant processing prioritization.

According to an example embodiment, the wireless device receives, from a base station, one or more capability request messages for the uplink grant processing prioritization.

According to an example embodiment, a first scheduled uplink transmission via the first PUSCH resource is associated with a first HARQ process identified by a first HARQ process identifier. A second scheduled uplink transmission via the second PUSCH resource is associated with a second HARQ process identified by a second HARQ process identifier.

According to an example embodiment, the uplink grant processing prioritization comprises an out-of-order uplink grant processing comprising receiving the second uplink grant after receiving the first uplink grant. The second PUSCH resource, indicated by the second uplink grant, may occur in time earlier than the first PUSCH resource indicated by the first uplink grant. The second PUSCH resource may overlap in time with the first PUSCH resource.

According to an example embodiment, the first PUSCH resource comprises one or more time domain radio resources comprising a number of symbols in a slot and a starting symbol in the slot.

According to an example embodiment, the second PUSCH resource comprises one or more time domain radio resources comprising a number of symbols in a slot and a starting symbol in the slot.

According to an example embodiment, the one or more capability parameters of the uplink grant processing prioritization further indicate whether the wireless device supports the uplink grant processing prioritization.

According to an example embodiment, the wireless device determines, based on the one or more capability parameters, whether the wireless device resumes the scheduled transmission via the first PUSCH resource or the wireless device does not resume the scheduled transmission.

According to an example embodiment, the second uplink grant comprises at least one of a configured grant configured by one or more radio resource messages or a dynamic grant activated by a downlink control information.

According to an example embodiment, the first uplink grant comprises at least one of a configured grant configured by one or more radio resource messages or a dynamic grant activated by a downlink control information.

According to an example embodiment, the configured grant is activated by a second downlink control information indicating an activation of the configured grant.

According to an example embodiment, a second starting symbol of the second PUSCH resource occurs earlier than a first starting symbol of the first PUSCH resource.

According to an example embodiment, the second starting symbol is indicated in parameters of the second uplink grant. The first starting symbol is indicated in parameters of the first uplink grant.

According to an example embodiment, the cell comprises a plurality of bandwidth parts comprising an uplink bandwidth part as an active uplink bandwidth part. The wireless device receives the first uplink grant of the active uplink bandwidth part of the cell and the second uplink grant of the active uplink bandwidth part of the cell.

According to an example embodiment, the wireless device receives a radio resource control message, based on the one or more capability parameters, indicating parameters of a physical downlink control channel, PDCCH, for receiving the second uplink grant for the uplink grant processing prioritization.

According to an example embodiment, the wireless device monitors the PDCCH for receiving a downlink control information indicating the second uplink grant based on the parameters of the PDCCH for the uplink grant processing prioritization.

According to an example embodiment, the radio resource control message comprises a radio network temporary identifier value for receiving the second uplink grant based on the one or more capability parameters.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). A base station may comprise multiple sectors. When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, because those wireless devices or base stations perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed to one or more of the various embodiments.

If A and B are sets and every element of A is also an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may also refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, various embodiments are disclosed. Limitations, features, and/or elements from the disclosed example embodiments may be combined to create further embodiments.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Furthermore, many features presented above are described as being optional through the use of "may" or the use of parentheses. For the sake of brevity and legibility, the present disclosure does not explicitly recite each and every permutation that may be obtained by choosing from the set of optional features. However, the present disclosure is to be interpreted as explicitly disclosing all such permutations. For example, a system described as having three optional features may be embodied in seven different ways, namely with just one of the three possible features, with any two of the three possible features or with all three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (i.e. hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally, it may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The above mentioned technologies are often used in combination to achieve the result of a functional module.

While various embodiments have been described above, it should be understood that they have been presented by way of example, and not limitation. It will be apparent to persons skilled in the relevant art(s) that various changes in form and detail can be made therein to obtain further embodiments. In fact, after reading the above description, it will be apparent to one skilled in the relevant art(s) how to implement alternative embodiments. Thus, the present embodiments should not be limited by any of the above described exemplary embodiments.

In addition, it should be understood that any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

## Claims

1. A method implemented by a wireless device, the method comprising:
receiving, by the wireless device (110), a first uplink grant, for a first transport block, TB, of a hybrid acknowledgment repeat request, HARQ, process associated with a new data indication, NDI;
receiving a group common signal comprising a cancellation indication indicating cancellation of transmission via one or more uplink resources indicated by the first uplink grant;
cancelling an uplink transmission of the first TB of the HARQ process based on the receiving the cancellation indication;
after cancelling the uplink transmission of the first TB of the HARQ process, determining that:
the NDI associated with the HARQ process is toggled; and
a received second uplink grant is used for a new transmission of a second TB associated with the HARQ process; and
transmitting, by the wireless device, the second TB of the HARQ process based on the determining.

2. The method of claim 1, wherein:
a first NDI associated with the first uplink grant comprises a first value; and
a second NDI associated with the second uplink grant comprises a second value different from the first value.

3. The method of claim 2, further comprising determining, by the wireless device, that the NDI is toggled based on the second value being different from the first value.

4. The method of any one of claims 1 to 3, wherein the transmitting the second TB of the HARQ process is based on the NDI being toggled.

5. The method of any one of claims 1 to 4, wherein the NDI is for the HARQ process.

6. The method of any one of claims 1 to 5, wherein the first uplink grant is included in a first downlink control information comprising a process identifier of the HARQ process.

7. The method of claim 6, wherein the NDI is determined based on the first downlink control information.

8. A method implemented by a base station, the method comprising:
transmitting, by the base station (120), a first uplink grant, for a first transport block, TB, of a hybrid acknowledgment repeat request, HARQ, process associated with a new data indication, NDI;
transmitting a group common signal comprising a cancellation indication indicating cancellation of transmission via one or more uplink resources indicated by the first uplink grant;
cancelling an uplink reception of the first TB of the HARQ process based on the transmitting the cancellation indication;
after cancelling the uplink reception of the first TB of the HARQ process, determining that:
the NDI associated with the HARQ process is toggled; and
a transmitted second uplink grant is used for a new reception of a second TB associated with the HARQ process; and
receiving, by the base station, the second TB of the HARQ process based on the determining.

9. The method of claim 8, wherein:
a first NDI associated with the first uplink grant comprises a first value; and
a second NDI associated with the second uplink grant comprises a second value different from the first value.

10. The method of any one of claims 8 to 9, wherein the receiving the second TB of the HARQ process is based on the NDI being toggled.

11. The method of any of claims 8 to 10, wherein the NDI is for the HARQ process.

12. The method of any one of claims 8 to 11, wherein the first uplink grant is included in a first downlink control information comprising a process identifier of the HARQ process.

13. The method of claim 12, wherein the NDI is associated with the first downlink control information.

14. An apparatus comprising:
one or more processors; and
memory storing instructions that, when executed by the one or more processors, cause the apparatus to perform the method of any one of claims 1 to 13.

15. A non-transitory computer-readable medium comprising instructions that, when executed by one or more processors, cause the one or more processors to perform the method of any one of claims 1 to 13.

## Patentansprüche

1. Durch eine drahtlose Vorrichtung implementiertes Verfahren, wobei das Verfahren umfasst:
Empfangen einer ersten Uplink-Berechtigung durch die drahtlose Vorrichtung (110) für einen ersten Transportblock, TB, eines Hybrid-Acknowledgment-Repeat-Request-, HARQ-, Prozesses, der einem Neudatenindikator, NDI, zugeordnet ist;
Empfangen eines gruppengemeinsamen Signals, das eine Abbruchanzeige umfasst, die einen Abbruch einer Übertragung über eine oder mehrere Uplink-Ressourcen anzeigt, die durch die erste Uplink-Berechtigung angezeigt sind;
Abbrechen einer Uplink-Übertragung des ersten TB des HARQ-Prozesses basierend auf dem Empfang der Abbruchanzeige;
nach dem Abbrechen der Uplink-Übertragung des ersten TB des HARQ-Prozesses Bestimmen, dass:
der dem HARQ-Prozess zugeordnete NDI umgeschaltet ist; und
eine empfangene zweite Uplink-Berechtigung für eine neue Übertragung eines zweiten TB im Zusammenhang mit dem HARQ-Prozess verwendet wird; und
Übertragen des zweiten TB des HARQ-Prozesses durch die drahtlose Vorrichtung basierend auf dem Bestimmen.

2. Verfahren nach Anspruch 1, wobei:
ein erster NDI im Zusammenhang mit der ersten Uplink-Berechtigung einen ersten Wert umfasst; und
ein zweiter NDI im Zusammenhang mit der zweiten Uplink-Berechtigung einen zweiten Wert umfasst, der sich vom ersten Wert unterscheidet.

3. Verfahren nach Anspruch 2, weiter umfassend Bestimmen durch die drahtlose Vorrichtung, dass der NDI umgeschaltet ist, basierend darauf, dass der zweite Wert sich von dem ersten Wert unterscheidet.

4. Verfahren nach einem der Ansprüche 1 bis 3, wobei das Übertragen des zweiten TB des HARQ-Prozesses auf dem Umschalten des Neudatenindikators basiert.

5. Verfahren nach einem der Ansprüche 1 bis 4, wobei der NDI für den HARQ-Prozess dient.

6. Verfahren nach einem der Ansprüche 1 bis 5, wobei die erste Uplink-Berechtigung in einer ersten Downlink-Steuerinformation enthalten ist, die einen Prozessidentifikator des HARQ-Prozesses umfasst.

7. Verfahren nach Anspruch 6, wobei der NDI basierend auf der ersten Downlink-Steuerinformation bestimmt wird.

8. Durch eine Basisstation implementiertes Verfahren, wobei das Verfahren umfasst:
Übertragen durch die Basisstation (120) einer ersten Uplink-Berechtigung für einen ersten Transportblock, TB, eines Hybrid-Acknowledgment-Repeat-Request-, HARQ-, Prozesses, der einem Neudatenindikator, NDI, zugeordnet ist;
Übertragen eines gruppengemeinsamen Signals, das eine Abbruchanzeige umfasst, die einen Abbruch einer Übertragung über eine oder mehrere Uplink-Ressourcen anzeigt, die durch die erste Uplink-Berechtigung angezeigt sind;
Abbrechen eines Uplink-Empfangs des ersten TB des HARQ-Prozesses basierend auf dem Übertragen der Abbruchanzeige;
nach dem Abbrechen des Uplink-Empfangs des ersten TB des HARQ-Prozesses Bestimmen, dass:
der dem HARQ-Prozess zugeordnete NDI umgeschaltet ist; und
eine übertragene zweite Uplink-Berechtigung für einen neuen Empfang eines zweiten TB verwendet wird, der dem HARQ-Prozess zugeordnet ist; und
Empfangen durch die Basisstation des zweiten TB des HARQ-Prozesses basierend auf dem Bestimmen.

9. Verfahren nach Anspruch 8, wobei:
ein erster NDI im Zusammenhang mit der ersten Uplink-Berechtigung einen ersten Wert umfasst; und
ein zweiter NDI im Zusammenhang mit der zweiten Uplink-Berechtigung einen zweiten Wert umfasst, der sich vom ersten Wert unterscheidet.

10. Verfahren nach einem der Ansprüche 8 bis 9, wobei das Empfangen des zweiten TB des HARQ-Prozesses basierend darauf erfolgt, dass der NDI umgeschaltet ist.

11. Verfahren nach einem der Ansprüche 8 bis 10, wobei der NDI für den HARQ-Prozess dient.

12. Verfahren nach einem der Ansprüche 8 bis 11, wobei die erste Uplink-Berechtigung in einer ersten Downlink-Steuerinformation enthalten ist, die einen Prozessidentifikator des HARQ-Prozesses umfasst.

13. Verfahren nach Anspruch 12, wobei der NDI der ersten Downlink-Steuerinformation zugeordnet ist.

14. Einrichtung, umfassend:
einen oder mehrere Prozessoren; und
einen Speicher, der Anweisungen speichert, die, wenn sie durch den einen oder die mehreren Prozessoren ausgeführt werden, die Einrichtung veranlassen, das Verfahren nach einem der Ansprüche 1 bis 13 auszuführen.

15. Nicht-flüchtiges, computerlesbares Medium, das Anweisungen umfasst, die, wenn sie durch einen oder mehrere Prozessoren ausgeführt werden, den einen oder die mehreren Prozessoren veranlassen, das Verfahren nach einem der Ansprüche 1 bis 13 auszuführen.

## Revendications

1. Procédé mis en œuvre par un dispositif sans fil, le procédé comprenant :
la réception, par le dispositif sans fil (110), d'un premier accord de liaison montante, pour un premier bloc de transport, TB, d'un processus de demande de répétition d'accusé de réception hybride, HARQ, associé à une indication de nouvelles références, NDI ;
la réception d'un signal commun de groupe comprenant une indication d'annulation indiquant une annulation de transmission via une ou plusieurs ressources de liaison montante indiquées par le premier accord de liaison montante ;
l'annulation d'une transmission en liaison montante du premier TB du processus HARQ sur la base de la réception de l'indication d'annulation ;
après annulation de la transmission en liaison montante du premier TB du processus HARQ, la détermination que :
la NDI associée au processus HARQ est commutée ; et
un second accord de liaison montante reçu est utilisé pour une nouvelle transmission d'un second TB associé au processus HARQ ; et
la transmission, par le dispositif sans fil, du second TB du processus HARQ sur la base de la détermination.

2. Procédé selon la revendication 1, dans lequel :
une première NDI associée au premier accord de liaison montante comprend une première valeur ; et
une seconde NDI associée au second accord de liaison montante comprend une seconde valeur différente de la première valeur.

3. Procédé selon la revendication 2, comprenant en outre la détermination, par le dispositif sans fil, que la NDI est commutée sur la base que la seconde valeur est différente de la première valeur.

4. Procédé selon l'une quelconque des revendications 1 à 3, dans lequel la transmission du second TB du processus HARQ est basée sur le fait que la NDI est commutée.

5. Procédé selon l'une quelconque des revendications 1 à 4, dans lequel la NDI est destinée au processus HARQ.

6. Procédé selon l'une quelconque des revendications 1 à 5, dans lequel le premier accord de liaison montante est inclus dans une première information de commande de liaison descendante comprenant un identifiant de processus du processus HARQ.

7. Procédé selon la revendication 6, dans lequel la NDI est déterminée sur la base de la première information de commande de liaison descendante.

8. Procédé mis en œuvre par une station de base, le procédé comprenant :
la transmission, par la station de base (120), d'un premier accord de liaison montante, pour un premier bloc de transport, TB, d'un processus de demande de répétition d'accusé de réception hybride, HARQ, associé à une indication de nouvelles références, NDI ;
la transmission d'un signal commun de groupe comprenant une indication d'annulation indiquant une annulation de transmission via une ou plusieurs ressources de liaison montante indiquées par le premier accord de liaison montante ;
l'annulation d'une réception en liaison montante du premier TB du processus HARQ sur la base de la transmission de l'indication d'annulation ;
après annulation de la réception en liaison montante du premier TB du processus HARQ, la détermination que :
la NDI associée au processus HARQ est commutée ; et
un second accord de liaison montante transmis est utilisé pour une nouvelle réception d'un second TB associé au processus HARQ ; et
la réception, par la station de base, du second TB du processus HARQ sur la base de la détermination.

9. Procédé selon la revendication 8, dans lequel :
une première NDI associée au premier accord de liaison montante comprend une première valeur ; et
une seconde NDI associée au second accord de liaison montante comprend une seconde valeur différente de la première valeur.

10. Procédé selon l'une quelconque des revendications 8 à 9, dans lequel la réception du second TB du processus HARQ est basée sur le fait que la NDI est commutée.

11. Procédé selon l'une quelconque des revendications 8 à 10, dans lequel la NDI est destinée au processus HARQ.

12. Procédé selon l'une quelconque des revendications 8 à 11, dans lequel le premier accord de liaison montante est inclus dans une première information de commande de liaison descendante comprenant un identifiant de processus du processus HARQ.

13. Procédé selon la revendication 12, dans lequel la NDI est associée à la première information de commande de liaison descendante.

14. Appareil comprenant :
un ou plusieurs processeurs ; et
une mémoire stockant des instructions qui, lorsqu'elles sont exécutées par les un ou plusieurs processeurs, amènent l'appareil à effectuer le procédé selon l'une quelconque des revendications 1 à 13.

15. Support non transitoire lisible par ordinateur comprenant des instructions qui, lorsqu'elles sont exécutées par un ou plusieurs processeurs, amènent les un ou plusieurs processeurs à effectuer le procédé selon l'une quelconque des revendications 1 à 13.
